# EUROPEAN PATENT APPLICATION

(11) **EP 4 344 545 A1**
(43) Date of publication of application: **03.04.2024**
(21) Application number: 22795717.2
(22) Date of filing: 25.04.2022
(51) Int. Cl.: A01N 43/54, A01M 1/20, A01N 25/00, A01N 31/02, A01N 31/08, A01N 37/28, A01N 43/36, A01N 43/40, A01N 43/42, A01N 43/50, A01N 43/56, A01N 43/653, A01N 43/713, A01N 43/90, A01N 47/02, A01N 47/04, A01N 47/14, A01N 47/18, A01N 47/34, A01N 47/40, A01N 47/44

(54) **AGRICULTURAL AND HORTICULTURAL FUNGICIDAL COMPOSITION**

(30) Priority: 28.04.2021 JP 2021076292
(71) Applicant: Nippon Soda Co., Ltd., Tokyo 100-7010 (JP)
(72) Inventor: NISHINO, Chihiro, Odawara-shi, Kanagawa 250-0280 (JP); KUWAHARA, Raito, Odawara-shi, Kanagawa 250-0280 (JP); SAIGA, Tomoyuki, Odawara-shi, Kanagawa 250-0280 (JP); NISHIKI, Haruka, Odawara-shi, Kanagawa 250-0280 (JP)
(74) Representative: Sonnenhauser, Thomas Martin
(86) International application number: PCT/JP2022/018716
(87) International publication number: WO 2022/230804

(57) **Abstract**

An object of the present invention is to provide an agricultural and horticultural fungicidal composition that has excellent bactericidal activity and no possibility to cause phytotoxicity to useful plants. The present invention is an agricultural and horticultural fungicidal composition comprising a component (I) and a component (II) as active ingredients, wherein the component (I) is a compound of formula (I) or a salt thereof, and the component (II) is a fungicide, an insecticide/acaricide, or the like other than the component (I).

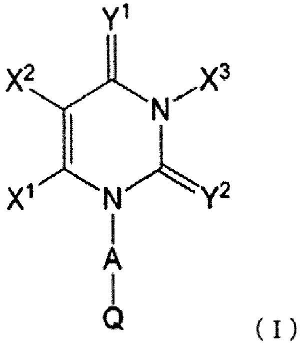

## Description

### Technical Filed

The present invention relates to agricultural and horticultural fungicidal compositions, more specifically, to agricultural and horticultural fungicidal compositions that have excellent bactericidal activity and have excellent safety. The present application claims priority to Japanese unexamined Patent Application No. 2021-076292, filed on April 28, 2021, the contents of which are incorporated herein by reference.

### Background Art

In agricultural and horticultural crop cultivation, various compounds having control activity on crop diseases have been suggested. In order to practically use such a compound as an agricultural and horticultural fungicide, the compound is required not only to have sufficiently high efficacy but also to be unlikely to cause drug resistance, to be unlikely to cause phytotoxicity to plants and soil contamination, and to have low toxicity to livestock and fish.

Patent Document 1 describes a compound of formula (A) and an agricultural and horticultural fungicide containing it.

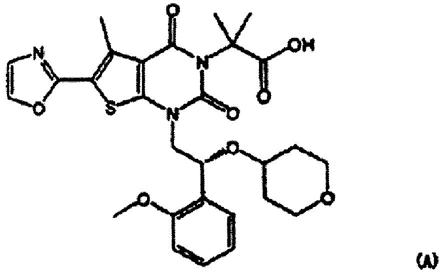

### Prior Art Documents

### Patent Documents

Patent Document 1 WO 2013/071169A

### Summary of the Invention

### Object to be Solved by the Invention

An object of the present invention is to provide an agricultural and horticultural fungicidal composition that has more excellent bactericidal activity and no possibility to cause phytotoxicity to useful plants.

### Means to Solve the Object

The present inventors have made intensive studies to achieve the above-mentioned objects, having completed the present invention including the following modes.

Specifically, the present invention is as follows.
[1] An agricultural and horticultural fungicidal composition comprising a component (I) and a component (II) as active ingredients, wherein the component (I) is at least one compound selected from a compound of formula (I) or a salt thereof: 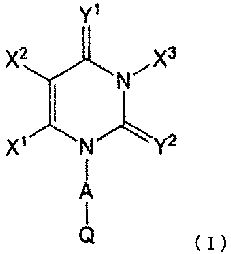 [wherein,
   Y¹ represents an oxygen atom or a sulfur atom;
   Y² represents an oxygen atom or a sulfur atom;
   X¹ represents a hydrogen atom, a halogeno group, or a substituted or unsubstituted C1-6 alkyl group;
   X² represents a group represented by R¹O-N=CR⁶-;
   R¹ represents a hydrogen atom, a substituted or unsubstituted C1-6 alkyl group, a substituted or unsubstituted C2-6 alkenyl group, a substituted or unsubstituted C2-6 alkynyl group, a substituted or unsubstituted C3-6 cycloalkyl group, a substituted or unsubstituted C6-10 aryl group, or a substituted or unsubstituted 5 to 6-membered ring heterocyclyl group,
   R⁶ represents a hydrogen atom or a substituted or unsubstituted C1-6 alkyl group;
   X³ represents a substituted or unsubstituted linear C1-6 alkyl group;
   a substituent on the linear C1-6 alkyl group in X³ is one or more substituents selected from the group consisting of a halogeno group, a substituted or unsubstituted C1-6 alkyl group, a substituted or unsubstituted C2-6 alkenyl group, a substituted or unsubstituted C2-6 alkynyl group, a hydroxy group, a substituted or unsubstituted C1-6 alkoxy group, a substituted or unsubstituted C2-6 alkenyloxy group, a substituted or unsubstituted C2-6 alkynyloxy group, a substituted or unsubstituted C1-6 alkylthio group, a substituted or unsubstituted C1-6 alkylsulfinyl group, a substituted or unsubstituted C1-6 alkylsulfonyl group, a substituted or unsubstituted C3-6 cycloalkyl group, a substituted or unsubstituted C3-6 cycloalkyloxy group, a substituted or unsubstituted C6-10 aryl group, a substituted or unsubstituted C6-10 aryloxy group, a substituted or unsubstituted C6-10 arylthio group, a substituted or unsubstituted C6-10 arylsulfinyl group, a substituted or unsubstituted C6-10 arylsulfonyl group, a substituted or unsubstituted 3 to 10-membered ring heterocyclyl group, a substituted or unsubstituted 3 to 10-membered ring heterocyclyloxy group, a nitro group, a cyano group, a group represented by R^{a}-CO-, a carboxy group, a group represented by R^{b}-O-CO-, a group represented by R^{c}R^{d}N-, a group represented by R^{c}R^{d}N-CO-, a group represented by R^{c}R^{d}N-NR^{d}-CO-, a group represented by R^{a}-CO-O-, a group represented by R^{a}-CO-NR^{e}-, a group represented by R^{a}-CO-CO-NR^{e}-, a group represented by R^{a}-CO-NR^{e}-NR^{e}-, a group represented by R^{a}-CO-NR^{e}-NR^{e}-CO-, a group represented by R^{b}-O-CO-O-, a group represented by R^{b}-O-CO-NR^{e}-, a group represented by R^{c}R^{d}N-CO-O-, a group represented by R^{c}R^{d}N-CO-NR^{e}-, a group represented by R^{c}R^{d}N-CO-CO-NR^{e}-, a group represented by R^{a}-CS-NR^{e}-, a group represented by R^{c}R^{d}N-CS-NR^{e}-, a group represented by R^{b}SO₂-NR^{e}-, a group represented by R^{c}R^{d}N-SO₂-, a group represented by R^{a}O-N=CR^{f}-, a group represented by R^{h}RⁱC=N-O-, a group represented by R^{a}-C(=NR^{g})-NR^{e}-, a group represented by R^{c}R^{d}N-C(=NR^{g})-, a group represented by R^{h}RⁱS(=O)=N-CO-, and a group represented by R^{h}RⁱS=N-CO-;
   each R^{a} independently represents a hydrogen atom, a substituted or unsubstituted C1-6 alkyl group, a substituted or unsubstituted C2-6 alkenyl group, a substituted or unsubstituted C2-6 alkynyl group, a substituted or unsubstituted C3-6 cycloalkyl group, a substituted or unsubstituted C6-10 aryl group, or a substituted or unsubstituted 3 to 10-membered ring heterocyclyl group,
   each R^{b} independently represents a substituted or unsubstituted C1-6 alkyl group, a substituted or unsubstituted C2-6 alkenyl group, a substituted or unsubstituted C2-6 alkynyl group, a substituted or unsubstituted C3-6 cycloalkyl group, a substituted or unsubstituted C6-10 aryl group, or a substituted or unsubstituted 5 to 6-membered ring heterocyclyl group,
   each R^{c} independently represents a hydrogen atom, a substituted or unsubstituted C1-6 alkyl group, a substituted or unsubstituted C2-6 alkenyl group, a substituted or unsubstituted C2-6 alkynyl group, a substituted or unsubstituted C3-6 cycloalkyl group, a substituted or unsubstituted C6-10 aryl group, or a substituted or unsubstituted 5 to 6-membered ring heterocyclyl group,
   each R^{d} independently represents a hydrogen atom, a substituted or unsubstituted C1-6 alkyl group, a substituted or unsubstituted C1-6 alkoxy group, or a substituted or unsubstituted C6-10 aryl group, where R^{c} and R^{d} optionally form together a divalent organic group,
   each R^{e} independently represents a hydrogen atom, a substituted or unsubstituted C1-6 alkyl group, a substituted or unsubstituted C1-6 alkoxy group, or a substituted or unsubstituted C6-10 aryl group,
   R^{f} represents a hydrogen atom, an amino group, or a substituted or unsubstituted C1-6 alkyl group,
   each R^{g} independently represents a hydrogen atom, a substituted or unsubstituted C1-6 alkyl group, or a substituted or unsubstituted C6-10 aryl group,
   each R^{h} independently represents a substituted or unsubstituted C1-6 alkyl group or a substituted or unsubstituted C6-10 aryl group,
   each Rⁱ independently represents a substituted or unsubstituted C1-6 alkyl group or a substituted or unsubstituted C6-10 aryl group, where R^{h} and Rⁱ optionally form together a divalent organic group;
   when two or more substituents are present on the linear C1-6 alkyl group, two of the substituents optionally form together a divalent organic group;
   A represents a substituted or unsubstituted C1-6 alkylene group;
   a substituent on the C1-6 alkylene group in A is one or more substituents selected from the group consisting of a halogeno group, a substituted or unsubstituted C1-6 alkyl group, a substituted or unsubstituted C2-6 alkenyl group, a substituted or unsubstituted C2-6 alkynyl group, a hydroxy group, a substituted or unsubstituted C1-6 alkoxy group, a substituted or unsubstituted C2-6 alkenyloxy group, a substituted or unsubstituted C2-6 alkynyloxy group, a substituted or unsubstituted C3-6 cycloalkyloxy group, a nitro group, a cyano group, a group represented by R^{a1}-COO-, a group represented by R^{b1}-O-CO-, a group represented by R^{b1}-O-CO-O-, a group represented by R^{c1}R^{d1}N-CO-O-, a group represented by R^{g1}R^{h1}C=N-O-, an oxo group (O=), a divalent group represented by R^{a1}O-N=;
   each R^{a1} independently represents a hydrogen atom, a substituted or unsubstituted C1-6 alkyl group, a substituted or unsubstituted C2-6 alkenyl group, a substituted or unsubstituted C2-6 alkynyl group, a substituted or unsubstituted C3-6 cycloalkyl group, a substituted or unsubstituted C6-10 aryl group, or a substituted or unsubstituted 5 to 6-membered ring heterocyclyl group,
   each R^{b1} independently represents a substituted or unsubstituted C1-6 alkyl group, a substituted or unsubstituted C2-6 alkenyl group, a substituted or unsubstituted C2-6 alkynyl group, a substituted or unsubstituted C3-6 cycloalkyl group, a substituted or unsubstituted C6-10 aryl group, or a substituted or unsubstituted 5 to 6-membered ring heterocyclyl group,
   each R^{c1} independently represents a hydrogen atom, a substituted or unsubstituted C1-6 alkyl group, a substituted or unsubstituted C2-6 alkenyl group, a substituted or unsubstituted C2-6 alkynyl group, a substituted or unsubstituted C3-6 cycloalkyl group, a substituted or unsubstituted C6-10 aryl group, or a substituted or unsubstituted 5 to 6-membered ring heterocyclyl group,
   each R^{d1} independently represents a hydrogen atom, a substituted or unsubstituted C1-6 alkyl group, or a substituted or unsubstituted C6-10 aryl group, where R^{c1} and R^{d1} optionally form together a divalent organic group,
   R^{g1} represents a substituted or unsubstituted C1-6 alkyl group, a substituted or unsubstituted C2-6 alkenyl group, a substituted or unsubstituted C2-6 alkynyl group, a substituted or unsubstituted C3-6 cycloalkyl group, a substituted or unsubstituted C6-10 aryl group, or a substituted or unsubstituted 5 to 6-membered ring heterocyclyl group,
   R^{h1} represents a hydrogen atom or a substituted or unsubstituted C1-6 alkyl group, where R^{g1} and R^{h1} optionally form together a divalent organic group;
   when two or more substituents are present on the C1-6 alkylene group, two of the substituents optionally form together a divalent organic group; and
   Q represents a substituted or unsubstituted C6-10 aryl group or a substituted or unsubstituted 5 to 10-membered ring heterocyclyl group.], and the component (II) is at least one component selected from the group consisting of a fungicide, an insecticide/acaricide, and a plant growth regulator other than the component (I).
[2] The agricultural and horticultural fungicidal composition according to [1], wherein the component (II) is at least one component selected from the group consisting of the following fungicides, insecticides/acaricides, and plant growth regulators:
   fungicides:
      (A) agents acting on synthesis or metabolism of nucleic acid:
         A1) RNA polymerase I inhibitors
            benalaxyl, benalaxyl-M, furalaxyl, metalaxyl, metalaxyl-M, oxadixyl, ofurace
         A2) adenosine deaminase inhibitors
            bupirimate, dimethirimol, ethirimol
         A3) DNA/RNA biosynthesis inhibitors
            hymexazol, octhilinone
         A4) DNA topoisomerase type II inhibitors
            oxolinic acid
      (B) agents acting on cytoskeletons and motor proteins
         B1) to B3) β-tubulin polymerization inhibitors
            benomyl, carbendazim, fuberidazole, thiabendazole, thiophanate, thiophanate-methyl, diethofencarb, zoxamide, ethaboxam, chlorfenazole, debacarb, trichlamide, zarilamid
         B4) cell division (unknown points of action) inhibitors pencycuron
         B5) delocalization inhibitors of spectrin-like protein fluopicolide, fluopimomide
         B6) actin/myosin/fimbrin function inhibitors phenamacril, metrafenone, pyriofenone
      (C) agents acting on respiration:
         C1) complex I: NADH oxidoreductase inhibitors
            diflumetorim, tolfenpyrad, fenazaquin
         C2) complex II: succinate dehydrogenase inhibitors benodanil, flutolanil, mepronil, isofetamid, fluopyram, cyclobutrifluram, fenfuram, carboxin, oxycarboxin, thifluzamide, benzovindiflupyr, bixafen, fluindapyr, fluxapyroxad, furametpyr, inpyrfluxam, isopyrazam, penflufen, penthiopyrad, sedaxane, isoflucypram, pydiflumetofen, boscalid, pyraziflumid, flubeneteram, furmecyclox
         C3) complex III: cytochrome bc1 (ubiquinol oxidase) Qo site (cyt b gene) inhibitors
            azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, metyltetraprole
         C4) complex III: cytochrome bc1 (ubiquinone reductase) Qi site inhibitors
            cyazofamid, amisulbrom, fenpicoxamid, florylpicoxamid, metarylpicoxamid
         C5) oxidative phosphorylation-uncoupling inhibitors binapacryl, dinocap, meptyldinocap; fluazinam
         C6) oxidative phosphorylation and ATP synthase inhibitors triphenyltin acetate, triphenyltin chloride, triphenyltin hydroxide
         C7) ATP transport inhibitors
            silthiofam
         C8) complex III: cytochrome bc1 (ubiquinone reductase) Qi site/stigmatellin-bonding subsite inhibitors ametoctradin
      (D) agents acting on amino acid and protein synthesis:
         D1) methionine biosynthesis (cgs gene)
            cyprodinil, mepanipyrim, pyrimethanil
         D2) protein synthesis (at the completion of ribosomal translation) inhibitors
            blasticidin-S
         D3), D4) protein synthesis (at the beginning of ribosomal translation) inhibitors
            kasugamycin, kasugamycin hydrochloride, streptomycin
         D5) protein synthesis (at ribosomal polypeptide elongation) inhibitors
            oxytetracycline
      (E) agents acting on signal transduction:
         E1) signal transduction (unknown mechanism of action) inhibitors
            quinoxyfen, proquinazid
         E2) MAP/histidine kinase (os-2, HOG1) inhibitors in osmotic signal transduction
            fenpiclonil, fludioxonil
         E3) MAP/histidine kinase (os-1, Daf1) inhibitors in osmotic signal transduction
            chlozolinate, dimethachlon, iprodione, procymidone, vinclozolin
      (F) agents acting on lipid biosynthesis or transport/cell membrane structure or function:
         F1) dicarboximide-based fungicides
         F2) phospholipid biosynthesis and methyltransferase inhibitors
            edifenphos, iprobenfos, pyrazophos, isoprothiolane
         F3) cell-peroxidizing inhibitors
            biphenyl, chloroneb, dicloran, quintozene, tecnazene, tolclofos-methyl, etridiazole
         F4) cell membrane permeability and fatty acid inhibitors iodocarb, propamocarb, propamocarb hydrochloride, prothiocarb
         F5) carboxylic acid amide (CAA)-based fungicides
         F8) ergosterol bond inhibitors
            natamycin
         F9) lipid homeostasis and transport/storage inhibitors oxathiapiprolin, fluoxapiprolin
      (G) sterol biosynthesis inhibitors of cell membranes:
         G1) C14 position demethylaze (erg11/cyp51) inhibitors in sterol biosynthesis
            triforine, pyrifenox, pyrisoxazole, fenarimol, nuarimol, imazalil, oxpoconazole, pefurazoate, prochloraz, triflumizole, azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, mefentrifluconazole, metconazole, myclobutanil, penconazole, propiconazole, simeconazole, tebuconazole, tetraconazole, triadimefon, triadimenol, triticonazole, prothioconazole, fluoxytioconazole, fluconazole, fluconazole-cis, diniconazole-M
         G2) inhibitors of Δ14 reductase and Δ8 → Δ7-isomerase (erg24, erg2) in sterol biosynthesis
            aldimorph, dodemorph, dodemorph acetate, fenpropimorph, tridemorph, fenpropidin, piperalin, spiroxamine, buthiobate
         G3) 3-keto reductase (erg27) inhibitors in C4 position demethylation in sterol biosynthesis system fenhexamid, fenpyrazamine
         G4) squalene epoxidase (erg1) inhibitors in sterol biosynthesis system
            pyributicarb, naftifine, terbinafine
      (H) cell wall biosynthesis inhibitors:
         H4) chitin synthetase inhibitors
            polyoxin, polyoxorim
         H5) cellulose synthetase inhibitors
            dimethomorph, flumorph, pyrimorph, benthiavalicarb, iprovalicarb, valifenalate, mandipropamid
      (I) cell wall melanin biosynthesis inhibitors:
         I1) reductase inhibitors in melanin biosynthesis fthalide, pyroquilon, tricyclazole
         I2) anhydrase inhibitors in melanin biosynthesis carpropamid, diclocymet, fenoxanil
         I3) polyketide synthetase inhibitors in melanin biosynthesis
            tolprocarb
      (P) agents acting on resistance induction of host plants:
         P01 to P03) agents relating to salicylic acid signal transduction
            acibenzolar-S-methyl, probenazole, tiadinil, isotianil
         P04) polysaccharide elicitors
            laminarin
         P05) anthraquinone elicitors
            Extraction liquid from *Reynoutria sachalinensis*
         P06) microbial elicitors
            *Bacillus mycoides* isolate J, cell walls of *Saccharomyces cerevisiae* strain LAS117
         P07) phosphonates fosetyl, phosphorous acid and salts thereof (including potassium phosphite, calcium phosphite, aluminum phosphite, and sodium phosphite)
         P08) agents relating to salicylic acid signal transduction dichlobentiazox
      (U) agents with unknown mechanism of action:
         cymoxanil, tecloftalam, triazoxide, flusulfamide, diclomezine, cyflufenamid, dodine, dodine free base, flutianil, ferimzone, tebufloquin, picarbutrazox, validamycin, bethoxazin, cyprofuram, flumetover, nitrothal-isopropyl, propamidine, ipflufenoquin, pyridachlometyl, pyrapropoyne, aminopyrifen, ipfentrifluconazole, quinofumelin, dipymetitrone, chloinconazide, seboctylamine, flumetylsulforim, flufenoxadiazam
      (M) agents having multiple points of contact activity:
         copper (various salts), basic copper sulfate, Bordeaux mixture, copper hydroxide, copper naphthalate, copper oxychloride, copper sulfate, copper oxide, oxine-copper, sulfur, lime sulfur, amobam, ferbam, mancozeb, maneb, metiram, propineb, thiram, zinc thiazole, zineb, ziram, captan, captafol, folpet, chlorothalonil, dichlofluanid, tolylfluanid, guazatine, guazatine acetate, iminoctadine, iminoctadine acetate, iminoctadine albesilate, anilazine, dithianon, chinomethionate, fluoroimide, methasulfocarb, dazomet, cufraneb, mancopper, polycarbamate
      (BM) biological control agents/organism-derived pesticides having multiple mechanisms of action
         a) plant extracts:
            polypeptide (lectin), phenol compounds, sesquiterpene compounds, triterpenoid compounds, coumarin compounds, terpene hydrocarbon compounds, terpene alcohol compounds, terpene phenol compounds, extract from the cotyledons of lupine plantlets, extract from *Swinglea glutinosa*, extract from *Melaleuca alternifolia* (tea tree), plant oils (mixtures), eugenol, geraniol, thymol, α-pinene, α-terpinene, α-terpinol, α-terpinolene, γ-terpinene, d-limonene, orange oil, linalool, menthol, ursolic acid, oleanolic acid, neem oil
         b) microorganisms (microbial strains or extracts or metabolites therefrom):
            fungi of the genus *Trichoderma* including *Trichoderma atroviride, Trichoderma asperellum, Trichoderma harzianum,* and *Trichoderma virens;*
            fungi of the genus *Gliocladium* including *Gliocladium catenulatum;*
            fungi of the genus *Clonostachys* including *Clonostachys rosea;*
            fungi of the genus *Coniothyrium* including *Coniothyrium mini tans;*
            fungi of the genus *Talaromyces* including *Talaromyces flavus;*
            fungi of the genus *Saccharomyces* including *Saccharomyces cerevisae;*
            bacteria of the genus Bacillus including *Bacillus amyloliquefaciens, Bacillus subtilis,* and *Bacillus simplex;* bacteria of the genus *Paenibacillus;*
            bacteria of the genus *Burkholderia;*
            fungi of the genus *Fusarium;*
            bacteria of the genus *Pseudomonas* including *Pseudomonas chlororaphis, Pseudomonas fluorescens,* and *Pseudomonas rhodesiae;*
            bacteria of the genus *Streptomyces* including *Streptomyces griseovirides* and *Streptomyces lydicus;*
            bacteria of the genus *Agrobacterium* including *Agrobacterium radiobacter;*
            bacteria of the genus *Erwinia* including nonpathogenic *Erwinia carotovora* subsp. *carotovora;*
            bacteria of the genus *Variovorax* including *Variovorax paradoxus;*
            bacteria of the genus *Lactobacillus* including *Lactobacillus plantarum*
         c) other agents
            substances that can serve as an elicitor including enzymes or extracts thereof, β-glucan, chitin or chitosan or fragments thereof, β-aminobutyric acid, 2,6-dichloroisonicotinic acid, salicylic acid or derivatives thereof, algal extracts, extracts of algae (hydrolysates), jasmine flower extracts, sodium alginate, oligosaccharides, trehalose, polysaccharides, lipids, lipopolysaccharides, fatty acids, glycolipids, glycoproteins, glycopeptides, proteins or peptides derived from a plant and/or a pathogenic microorganism, and ergosterol
      (N) unclassified agents
         mineral oils, organic oils, inorganic salts, materials of biological origin, potassium bicarbonate, sodium hydrogen carbonate, calcium carbonate, calcium hydroxide, potassium iodide, potassium phosphonate, chitosan hydrochloride, urea insecticides/acaricides:
         (1A) acetylcholinesterase (AChE) inhibitors (carbamate-based):
            alanycarb, aldicarb, bendiocarb, benfuracarb, butocarboxim, butoxycarboxim, carbaryl, carbofuran, carbosulfan, ethiofencarb, fenobucarb, formetanate, furathiocarb, isoprocarb, methiocarb, methomyl, metolcarb, oxamyl, pirimicarb, propoxur, thiodicarb, thiofanox, triazamate, trimethacarb, XMC, xylylcarb, aldoxycarb, allyxycarb, aminocarb, bufencarb, cloethocarb, fenothiocarb, promecarb (1B) acetylcholinesterase (AChE) inhibitors (organophosphorus-based):
            acephate, azamethiphos, azinphos-ethyl, azinphosmethyl, cadusafos, chlorethoxyfos, chlorfenvinphos, chlormephos, chlorpyrifos, chlorpyrifos-methyl, coumaphos, cyanophos, demeton-S-methyl, diazinon, dichlorvos, dicrotophos, dimethoate, dimethylvinphos, disulfoton, EPN, ethion, ethoprophos, famphur, fenamiphos, fenitrothion, fenthion, fosthiazate, heptenophos, imicyafos, isofenphos, isopropyl=O-(methoxyaminothiophosphoryl) salicylate, isoxathion, malathion, mecarbam, methamidophos, methidathion, mevinphos, monocrotophos, naled, omethoate, oxydemeton-methyl, parathion, parathion-methyl, phenthoate, phorate, phosalone, phosmet, phosphamidon, phoxim, pirimiphos-methyl, profenofos, propetamphos, prothiofos, pyraclofos, pyridaphenthion, quinalphos, sulfotep, tebupirimfos, temephos, terbufos, tetrachlorvinphos, thiometon, triazophos, trichlorfon, vamidothion, bromophos-ethyl, cyanofenphos, demeton-S-methylsulfone, dialifos, dichlofenthion, dioxabenzofos, etrimfos, fensulfothion, fonofos, formothion, iodofenphos, isazofos, isocarbofos, methacrifos, phosphocarb, pirimiphos-ethyl, propaphos, prothoate, sulprofos
         (2) GABA-gated chloride ion (chlorine ion) channel blockers:
            chlordane, endosulfan; ethiprole, fipronil, acetoprole, camphechlor, dienochlor, heptachlor, pyrafluprole, pyriprole; flufiprole
         (3A) sodium channel modulators (pyrethroid-based):
            acrinathrin, allethrin, d-cis/trans allethrin, d-trans allethrin, bifenthrin, bioallethrin, bioallethrin-S-cyclopentenyl isomers, bioresmethrin, cycloprothrin, cyfluthrin, β-cyfluthrin, cyhalothrin, λ-cyhalothrin, γ-cyhalothrin, cypermethrin, α-cypermethrin, β-cypermethrin, θ-cypermethrin, ζ-cypermethrin, cyphenothrin [(1R)-trans-isomers], deltamethrin, empenthrin [(EZ)-(1R)-isomers], esfenvalerate, etofenprox, fenpropathrin, fenvalerate, flucythrinate, flumethrin, τ-fluvalinate, halfenprox, imiprothrin, kadethrin, permethrin, phenothrin [(1R)-trans-isomers], prallethrin, pyrethrins, resmethrin, silafluofen, tefluthrin, tetramethrin, tetramethrin [(1R)-isomers], tralomethrin, transfluthrin, κ-bifenthrin, biopermethrin, chloroprallethrin, dimefluthrin, fenfluthrin, fenpirithrin, flufenprox, heptafluthrin, meperfluthrin, ε-metofluthrin, momfluorothrin, ε-momfluorothrin, trans-permethrin, profluthrin, protrifenbute, κ-tefluthrin, terallethrin, tetramethylfluthrin; bioethanomethrin
         (3B) sodium channel modulators (DDT's):
            DDT, methoxychlor
         (4) nicotinic acetylcholine receptor (nAChR) competitive modulators:
            acetamiprid, clothianidin, dinotefuran, imidacloprid, nitenpyram, thiacloprid, thiamethoxam, nicotine, sulfoxaflor, flupyradifurone, triflumezopyrim, nithiazine, dicloromezotiaz, flupyrimin
         (5) nicotinic acetylcholine receptor (nAChR) allosteric modulators:
            spinetoram, spinosad
         (6) glutamatergic chloride ion channel (GluCl) allosteric modulators:
            abamectin, emamectin, emamectin benzoate, lepimectin, milbemectin, doramectin, eprinomectin, ivermectin, moxidectin, selamectin
         (7) juvenile hormone analogous agents:
            hydroprene, kinoprene, methoprene, fenoxycarb; pyriproxifen, diofenolan, epofenonane, triprene
         (8) other nonspecific (multi-site) inhibitors:
            halogenated alkyls including methyl bromide, chloropicrin, aluminum sodium fluoride, sulfuryl fluoride, borax, boric acid, disodium octaborate, sodium borate, sodium metaborate, tartar emetic, dazomet, metam, metam potassium, metam sodium
         (9) chordotonal organ TRPV channel modulators:
            pymetrozine, pyrifluquinazon, afidopyropen
         (10) mite growth inhibitors:
            clofentezine, diflovidazin, hexythiazox; etoxazole
         (11) insect midgut inner membrane disrupting agents derived from microorganisms: B. t. subsp. *israelensis,* B. t. subsp. *aizawai,* B. t. subsp. *kurstaki,* B. t. subsp. *tenebrionis;* proteins contained in B. t. crops: Cry1Ab, Cry1Ac, Cry1Fa, Cry1A.105, Cry2Ab, Vip3A, mCry3A, Cry3Ab, Cry3Bb, Cry34Ab1/Cry35Ab1; *Bacillus sphaericus*
         (12) mitochondrial ATP biosynthetic enzyme inhibitors:
            diafenthiuron, azocyclotin, cyhexatin, fenbutatin oxide, propargite, tetradifon
         (13) oxidative phosphorylation uncoupling agents that disrupt proton gradient:
            chlorfenapyr, DNOC (4,6-dinitro-o-cresol), sulfluramid, binapacryl, dinobuton, dinocap
         (14) nicotinic acetylcholine receptor (nAChR) channel blockers:
            bensultap, cartap hydrochloride, thiocyclam, thiosultap monosodium salt
         (15) chitin biosynthesis inhibitors, type 0:
            bistrifluron, chlorfluazuron, diflubenzuron, flucycloxuron, flufenoxuron, hexaflumuron, lufenuron, novaluron, noviflumuron, teflubenzuron, triflumuro, fluazuron
         (16) chitin biosynthesis inhibitors, type 1:
            buprofezin
         (17) molting inhibitors:
            cyromazine
         (18) molting hormone (ecdysone) receptor agonists:
            chromafenozide, halofenozid, methoxyfenozide, tebufenozide
         (19) octopamine receptor agonists:
            amitraz, chlordimeform
         (20) mitochondrial electron transport system complex III inhibitors:
            hydramethylnon, acequinocyl, fluacrypyrim, bifenazate
         (21) mitochondrial electron transport system complex I inhibitors:
            fenazaquin, fenpyroximate, pyridaben, pyrimidifen, tebufenpyrad, tolfenpyrad, rotenone
         (22) voltage-dependent sodium channel blockers:
            indoxacarb, metaflumizone
         (23) acetyl CoA carboxylase inhibitors:
            spirodiclofen, spiromesifen, spirotetramat, spiropidion
         (24) mitochondrial electron transport system complex IV inhibitors:
            aluminum phosphide, calcium phosphide, zinc phosphide, phosphine, calcium cyanide, sodium cyanide, potassium cyanide
         (25) mitochondrial electron transport system complex II inhibitors:
            cyenopyrafen, cyflumetofen, pyflubumide
         (26) ryanodine receptor modulators:
            chlorantraniliprole, cyantraniliprole, cyclaniliprole, flubendiamidecyhalodiamide, tetrachlorantraniliprole, tetraniliprole
         (27) chordotonal organ modulator, target site unidentified: flonicamid
         (28) GABA-gated chloride ion (chlorine ion) channel allosteric modulators:
            broflanilide, fluxametamide, isocycloseram, afoxolaner, fluralaner, lotilaner, sarolaner
         (29) agents having unknown mechanism of action (UN):
            azadirachtin, benzoximate, bromopropylate, chinomethionate, dicofol, lime sulfur, mancozeb, pyridalyl, sulfur
         (30) other insecticides/acaricides:
            acynonapyr, amidoflumet, benzomate, benzpyrimoxan, chlorobenzilate, dicyclanil, fenoxacrim, fentrifanil, flometoquin, flubenzimine, flufenzine, fluhexafon, fluopyram, metaflumizone, metoxadiazone, oxazosulfyl, tetrasul, triarathene, tyclopyrazoflor
   plant growth regulators:
      abscisic acid, kinetin, benzylaminopurine, 1,3-diphenylurea, forchlorfenuron, thidiazuron, chlorfenuron, dihydrozeatin, gibberellin A, gibberellin A4, gibberellin A7, gibberellin A3, 1-methylcyclopropane, N-acetyl aminoethoxyvinyl glycine (aka: aviglycine), aminooxyacetate, silver nitrate, cobalt chloride, IAA, 4-CPA, cloprop, 2,4-D, MCPB, indole-3-butyric acid, dichlorprop, phenothiol, 1-naphthylacetoamide, ethychlozate, cloxyfonac, maleic hydrazide, 2,3,5-triiodobenzoic acid, salicylic acid, methyl salicylate, (-)-jasmonic acid, methyl jasmonate, (+)-strigol, (+)-deoxystrigol, (+)-orobanchol, (+)-sorgolactone, 4-oxo-4-(2-phenylethyl)aminobutyric acid, ethephon, chlormequat, mepiquat chloride, benzyladenine, 5-amino levulinic acid, daminozide.
[3] The agricultural and horticultural fungicidal composition according to [1] or [2], wherein the component (II) is at least one component selected from the group consisting of thiophanate-methyl, triflumizole, cyflufenamid, iminoctadine acetate, iminoctadine albesilate, picarbutrazox, ipflufenoquin, fluxapyroxad, cymoxanil, tebufenozide, prothioconazole, mefentrifluconazole, potassium phosphite, florylpicoxamid, metyltetraprole, captan, fipronil, fludioxonil, chlorantraniliprole, fluopyram, abamectin, sulfoxaflor, *Bacillus subtilis, Pseudomonas rhodesiae,* sodium hydrogen carbonate, potassium bicarbonate, orange oil, linalool, thymol, neem oil, mancozeb, and mineral oils.
[4] The agricultural and horticultural fungicidal composition according to any one of [1] to [3], wherein a weight ratio between a compound (I) and a compound (II) is 1:1000 to 1000:1.
[5] A seed coated with a layer comprising the agricultural and horticultural fungicidal composition according to any one of [1] to [4].

### Effect of the Invention

The agricultural and horticultural fungicidal composition of the present invention has an excellent control effect, causes no phytotoxicity to plants, and gives little toxicity to humans, livestock, and fish and little influence on the environment.

### Mode of Carrying Out the Invention

The agricultural and horticultural fungicidal composition of the present invention is a composition comprising a component (I) and a component (II).

The agricultural and horticultural fungicidal composition of the present invention is for applying the component (I) and the component (II) as a mixture agent; not only that, the present invention includes aspects for separately applying the component (I) and the component (II) without mixing these components.

The component (I) of the present invention is at least one selected from the group consisting of a compound of formula (I) and a salt thereof. This compound may be used as an agricultural and horticultural fungicide.

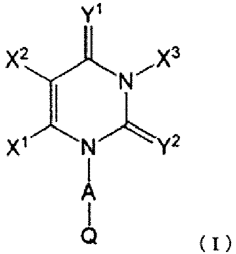

In formula (I), Y¹, Y², X¹, X², X³, A, and Q represent those described above, and the term "unsubstituted" in the descriptions means that the group has only a group forming a mother nucleus. Descriptions using only the name of the group forming a mother nucleus, unless otherwise stated, mean "unsubstituted". In the present invention, on the other hand, the term "substituted" means that any of the hydrogen atoms of the group forming a mother nucleus is replaced with a group which has the same structure as or a different structure from that of the mother nucleus. Thus, the term "substituent" refers to another group bonded to a group forming a mother nucleus. There may be one substituent or two more substituents. The two or more substituents may be the same as or different from each other.

A "substituent" is not particularly limited as long as it is chemically acceptable and has the effects of the present invention.

Specific examples of groups that may become the "substituent" include the following groups:
a halogeno group such as a fluoro group, a chloro group, a bromo group, and an iodo group;
a C1-6 alkyl group such as a methyl group, an ethyl group, a n-propyl group, an i-propyl group, a n-butyl group, a s-butyl group, an i-butyl group, a t-butyl group, a n-pentyl group, and a n-hexyl group;
a C2-6 alkenyl group such as a vinyl group, a 1-propenyl group, a 2-propenyl group, a 1-butenyl group, a 2-butenyl group, a 3-butenyl group, a 1-methyl-2-propenyl group, a 2-methyl-2-propenyl group, a 1-pentenyl group, a 2-pentenyl group, a 3-pentenyl group, a 4-pentenyl group, a 1-methyl-2-butenyl group, a 2-methyl-2-butenyl group, a 1-hexenyl group, a 2-hexenyl group, a 3-hexenyl group, a 4-hexenyl group, and a 5-hexenyl group;
a C2-6 alkynyl group such as an ethynyl group, a 1-propynyl group, a 2-propynyl group, a 1-butynyl group, a 2-butynyl group, a 3-butynyl group, a 1-methyl-2-propynyl group, a 2-methyl-3-butynyl group, a 1-pentynyl group, a 2-pentynyl group, a 3-pentynyl group, a 4-pentynyl group, a 1-methyl-2-butynyl group, a 2-methyl-3-pentynyl group, a 1-hexynyl group, and a 1,1-dimethyl-2-butynyl group;
a C3-6 cycloalkyl group such as a cyclopropyl group, a cyclobutyl group, a cyclopentyl group, and a cyclohexyl group;
a C3-6 cycloalkenyl group such as a 2-cyclopropenyl group, a 2-cyclopentenyl group, and a 3-cyclohexenyl group;
a C6-10 aryl group such as a phenyl group and a naphthyl group;
a C6-10 aryl C1-6 alkyl group such as a benzyl group and a phenethyl group;
a 3 to 6-membered ring heterocyclyl group;
a 3 to 6-membered ring heterocyclyl C1-6 alkyl group;
a hydroxy group;
a C1-6 alkoxy group such as a methoxy group, an ethoxy group, a n-propoxy group, an i-propoxy group, a n-butoxy group, a s-butoxy group, an i-butoxy group, and a t-butoxy group;
a C2-6 alkenyloxy group such as a vinyloxy group, an allyloxy group, a propenyloxy group, and a butenyloxy group;
a C2-6 alkynyloxy group such as an ethynyloxy group and a propargyloxy group;
a C6-10 aryloxy group such as a phenoxy group and a naphthoxy group;
a C6-10 aryl C1-6 alkoxy group such as a benzyloxy group and a phenethyloxy group;
a carboxy group;
a formyl group;
a C1-6 alkylcarbonyl group such as an acetyl group and a propionyl group;
a formyloxy group;
a C1-6 alkylcarbonyloxy group such as an acetyloxy group and a propionyloxy group
a C1-6 alkoxycarbonyl group such as a methoxycarbonyl group, an ethoxycarbonyl group, a n-propoxycarbonyl group, an i-propoxycarbonyl group, a n-butoxycarbonyl group, and a t-butoxycarbonyl group;
a C1-6 haloalkyl group such as a chloromethyl group, a chloroethyl group, a trifluoromethyl group, a 1,2-dichloro-n-propyl group, a 1-fluoro-n-butyl group, and a perfluoro-n-pentyl group;
a C2-6 haloalkenyl group such as a 2-chloro-1-propenyl group and a 2-fluoro-1-butenyl group;
a C2-6 haloalkynyl group such as a 4,4-dichloro-1-butynyl group, a 4-fluoro-1-pentynyl group, and a 5-bromo-2-pentynyl group;
a C3-6 halocycloalkyl group such as a 3,3-difluorocyclobutyl group;
a C1-6 haloalkoxy group such as a 2-chloro-n-propoxy group, a 2,3-dichlorobutoxy group, a trifluoromethoxy group, and a 2,2,2-trifluoroethoxy group;
a C2-6 haloalkenyloxy group such as a 2-chloropropenyloxy group and a 3-bromobutenyloxy group;
a C1-6 haloalkylcarbonyl group such as a chloroacetyl group, a trifluoroacetyl group, and a trichloroacetyl group;
an amino group;
a C1-6 alkyl-substituted amino group such as a methylamino group, a dimethylamino group, and a diethylamino group;
a C6-10 arylamino group such as an anilino group and a naphthylamino group;
a C6-10 aryl C1-6 alkylamino group such as a benzylamino group and phenethylamino group;
a formylamino group;
a C1-6 alkylcarbonylamino group such as an acetylamino group, a propionylamino group, a butyrylamino group, and an i-propylcarbonylamino group;
a C1-6 alkoxycarbonylamino group such as a methoxycarbonylamino group, an ethoxycarbonylamino group, a n-propoxycarbonylamino group, and an i-propoxycarbonylamino group;
an unsubstituted or substituted aminocarbonyl group such as a carbamoyl group, a dimethylaminocarbonyl group, a phenylaminocarbonyl group, and a N-phenyl-N-methylaminocarbonyl group;
an imino C1-6 alkyl group such as an iminomethyl group, a (1-imino) ethyl group, and a (1-imino)-n-propyl group;
a substituted or unsubstituted N-hydroxyimino C1-6 alkyl group such as a N-hydroxy-iminomethyl group, a (1-(N-hydroxy)-imino)ethyl group, a (1-(N-hydroxy)-imino)propyl group, a N-methoxy-iminomethyl group, and a (1-(N-methoxy)-imino)ethyl group;
an aminocarbonyloxy group;
a C1-6 alkyl-substituted aminocarbonyloxy group such as an ethylaminocarbonyloxy group and a dimethylaminocarbonyloxy group;
a mercapto group;
a C1-6 alkylthio group such as a methylthio group, an ethylthio group, a n-propylthio group, an i-propylthio group, a n-butylthio group, an i-butylthio group, a s-butylthio group, and a t-butylthio group;
a C1-6 haloalkylthio group such as a trifluoromethylthio group and a 2,2,2-trifluoroethylthio group;
a C2-6 alkenylthio group such as a vinylthio group and an arylthio group;
a C2-6 alkynylthio group such as an ethynylthio group and a propargylthio group;
a C1-6 alkylsulfinyl group such as a methylsulfinyl group, an ethylsulfinyl group, and a t-butylsulfinyl group;
a C1-6 haloalkylsulfinyl group such as a trifluoromethylsulfinyl group and a 2,2,2-trifluoroethylsulfinyl group;
a C2-6 alkenylsulfinyl group such as an arylsulfinyl group;
a C2-6 alkynylsulfinyl group such as a propargylsulfinyl group;
a C1-6 alkylsulfonyl group such as a methylsulfonyl group, an ethylsulfonyl group, and a t-butylsulfonyl group;
a C1-6 haloalkylsulfonyl group such as a trifluoromethylsulfonyl group and a 2,2,2-trifluoroethylsulfonyl group;
a C2-6 alkenylsulfonyl group such as an allylsulfonyl group;
a C2-6 alkynylsulfonyl group such as a propargylsulfonyl group;
an aminothiocarbonyl group;
a C1-6 alkylsulfoxyimino group such as a S,S-dimethylsulfoxyimino group;
a tri C1-6 alkyl-substituted silyl group such as a trimethylsilyl group, a triethylsilyl group, and a t-butyldimethylsilyl group;
a tri C6-10 aryl-substituted silyl group such as a triphenylsilyl group;
a cyano group; and
a nitro group.

The term "C1 to 6" or the like means that the number of carbon atoms in a group forming a mother nucleus is 1 to 6 or the like. The number of carbon atoms does not include the number of carbon atoms present in substituents. For example, an ethoxybutyl group, which has a butyl group as the group forming a mother nucleus and has an ethoxy group as a substituent, is classified into C2 alkoxy C4 alkyl groups.

The "3 to 6-membered ring heterocyclyl group" described above includes 1 to 4 hetero atoms selected from the group consisting of a nitrogen atom, an oxygen atom, and a sulfur atom as a constituent atom(s) of the ring. Examples of the "3 to 6-membered ring heterocyclyl group" include a 3 to 6-membered ring saturated heterocyclyl group, a 5 to 6-membered ring heteroaryl group, and a 5 to 6-membered ring partially unsaturated heterocyclyl group.

Examples of the 3 to 6-membered ring saturated heterocyclyl group can include an aziridinyl group, an epoxy group, an azetidinyl group, an oxetanyl group, a pyrrolidinyl group, a tetrahydrofuranyl group, a thiazolidinyl group, a tetrahydro-2H-pyranyl group, a piperidyl group, a piperazinyl group, a morpholinyl group, a dioxolanyl group, and a dioxanyl group.

Examples of the 5-membered ring heteroaryl group can include a pyrrolyl group, a furyl group, a thienyl group, an imidazolyl group, a pyrazolyl group, an oxazolyl group, an isoxazolyl group, a thiazolyl group, an isothiazolyl group, a triazolyl group, an oxadiazolyl group, a thiadiazolyl group, and a tetrazolyl group.

Examples of the 6-membered ring heteroaryl group can include a pyridyl group, a pyrazinyl group, a pyrimidinyl group, a pyridazinyl group, and a triazinyl group.

Examples of the 5-membered ring partially unsaturated heterocyclyl group include a pyrrolinyl group, a dihydrofuranyl group, an imidazolinyl group, a pyrazolinyl group, an oxazolinyl group, and an isoxazolinyl group.

Examples of the 6-membered ring partially unsaturated heterocyclyl group can include a dihydropyranyl group.

Any hydrogen atoms in these "substituents" may be substituted with a group having a different structure.

### [Y¹ and Y²]

Y¹ represents an oxygen atom or a sulfur atom, and Y² represents an oxygen atom or a sulfur atom.

In the present invention, Y¹ is preferably an oxygen atom, and Y² is a preferably oxygen atom.

### [X¹]

X¹ represents a hydrogen atom, a halogeno group, or a substituted or unsubstituted C1-6 alkyl group.

Examples of the "halogeno group" in X¹ can include a fluoro group, a chloro group, a bromo group, and an iodo group.

The "C1-6 alkyl group" in X¹ may be a linear chain or may be a branched chain. Examples of the "C1-6 alkyl group" in X¹ can include a methyl group, an ethyl group, a n-propyl group, a n-butyl group, a n-pentyl group, a n-hexyl group, an i-propyl group, an i-butyl group, a s-butyl group, a t-butyl group, an i-pentyl group, a neopentyl group, a 2-methylbutyl group, and an i-hexyl group.

The substituent on the "C1-6 alkyl group" in X¹ is preferably a halogeno group such as a fluoro group, a chloro group, a bromo group, or an iodo group; a hydroxy group; a C1-6 alkoxy group such as a methoxy group, an ethoxy group, a n-propoxy group, an i-propoxy group, a n-butoxy group, a s-butoxy group, an i-butoxy group, or a t-butoxy group; a C1-6 haloalkoxy group such as a 2-chloro-n-propoxy group, a 2,3-dichlorobutoxy group, or a trifluoromethoxy group; a C3-6 cycloalkyl group such as a cyclopropyl group, a cyclobutyl group, a cyclopentyl group, or a cyclohexyl group; a C6-10 aryl group such as a phenyl group or a naphthyl group; a C6-10 aryl group substituted with any one or more substituents of a C1-6 alkyl group, a C1-6 alkoxy group, a halogeno group, a C1-6 haloalkyl group, or a C1-6 haloalkoxy group, such as a 4-methylphenyl group, a 4-methoxyphenyl group, a 4-chlorophenyl group, a 4-trifluoromethylphenyl group, or a 4-trifluoromethoxyphenyl group; a 5-membered ring heteroaryl group such as a pyrrolyl group, a furyl group, a thienyl group, an imidazolyl group, a pyrazolyl group, an oxazolyl group, an isoxazolyl group, a thiazolyl group, an isothiazolyl group, a triazolyl group, an oxadiazolyl group, a thiadiazolyl group, or a tetrazolyl group; a 5-membered ring heteroaryl group substituted with any one or more substituents of a C1-6 alkyl group, a C1-6 alkoxy group, a halogeno group, a C1-6 haloalkyl group, or a C1-6 haloalkoxy group; a 6-membered ring heteroaryl group such as a pyridyl group, a pyrazinyl group, a pyrimidinyl group, a pyridazinyl group, or a triazinyl group; a 6-membered ring heteroaryl group substituted with any one or more substituents of a C1-6 alkyl group, a C1-6 alkoxy group, a halogeno group, a C1-6 haloalkyl group, or a C1-6 haloalkoxy group; or a cyano group.

In the present invention, as preferred X¹, a hydrogen atom, a substituted or unsubstituted C1-6 alkyl group, or the like may be exemplified. As X¹, a hydrogen atom is further preferred.

### [X²]

X² represents a group represented by R¹O-N=CR⁶-.

R¹ represents a hydrogen atom, a substituted or unsubstituted C1-6 alkyl group, a substituted or unsubstituted C2-6 alkenyl group, a substituted or unsubstituted C2-6 alkynyl group, a substituted or unsubstituted C3-6 cycloalkyl group, a substituted or unsubstituted C6-10 aryl group, or a substituted or unsubstituted 5 to 6-membered ring heterocyclyl group.

R⁶ represents a hydrogen atom or a substituted or unsubstituted C1-6 alkyl group.

As the "C1-6 alkyl group" in R¹ and R⁶, the same as those exemplified for X¹ or the like may be exemplified.

As the "C2-6 alkenyl group" in R¹, a vinyl group, a 1-propenyl group, a 2-propenyl group, a 1-butenyl group, a 2-butenyl group, a 3-butenyl group, a 1-methyl-2-propenyl group, a 2-methyl-2-propenyl group, a 1-pentenyl group, a 2-pentenyl group, a 3-pentenyl group, a 4-pentenyl group, a 1-methyl-2-butenyl group, a 2-methyl-2-butenyl group, a 1-hexenyl group, a 2-hexenyl group, a 3-hexenyl group, a 4-hexenyl group, a 5-hexenyl group, or the like may be exemplified.

As the "C2-6 alkynyl group" in R¹, an ethynyl group, a 1-propynyl group, a 2-propynyl group, a 1-butynyl group, a 2-butynyl group, a 3-butynyl group, a 1-methyl-2-propynyl group, a 2-methyl-3-butynyl group, a 1-pentynyl group, a 2-pentynyl group, a 3-pentynyl group, a 4-pentynyl group, a 1-methyl-2-butynyl group, a 2-methyl-3-pentynyl group, a 1-hexynyl group, a 1,1-dimethyl-2-butynyl group, or the like may be exemplified.

As the substituent on the "C1-6 alkyl group", the "C2-6 alkenyl group", and the "C2-6 alkynyl group" in R¹, or the "C1-6 alkyl group" in R⁶, the same as the substituents on the "C1-6 alkyl group" in X¹ or the like may be exemplified.

Examples of the "C3-6 cycloalkyl group" in R¹ can include a cyclopropyl group, a cyclobutyl group, a cyclopentyl group, and a cyclohexyl group.

Examples of the "C6-10 aryl group" in R¹ can include a phenyl group, a naphthyl group, an indanyl group, an indenyl group, and a tetralinyl group.

The "5 to 6-membered ring heterocyclyl group" in R¹ is a group including 1, 2, 3, or 4 hetero atoms selected from the group consisting of a nitrogen atom, an oxygen atom, and a sulfur atom as a constituent atom(s) of the ring. When two or more hetero atoms are included, the hetero atoms may be the same or different. Examples of the "5 to 6-membered ring heterocyclyl group" can include a 5 to 6-membered ring saturated heterocyclyl group, a 5 to 6-membered ring heteroaryl group, and a 5 to 6-membered ring partially unsaturated heterocyclyl group.

Examples of the 5 to 6-membered ring saturated heterocyclyl group can include a pyrrolidinyl group, a tetrahydrofuranyl group, a thiazolidinyl group, a tetrahydro-2H-pyranyl group, a piperidyl group, a piperazinyl group, a morpholinyl group, a dioxolanyl group, and a dioxanyl group.

Examples of the 5 to 6-membered ring heteroaryl group can include a 5-membered ring heteroaryl group such as a pyrrolyl group, a furyl group, a thienyl group, an imidazolyl group, a pyrazolyl group, an oxazolyl group, an isoxazolyl group, a thiazolyl group, an isothiazolyl group, a triazolyl group, an oxadiazolyl group, a thiadiazolyl group, and a tetrazolyl group; and a 6-membered ring heteroaryl group such as a pyridyl group, a pyrazinyl group, a pyrimidinyl group, a pyridazinyl group, and a triazinyl group.

Examples of the 5 to 6-membered ring partially unsaturated heterocyclyl group can include a 5-membered ring partially unsaturated heterocyclyl group such as a pyrrolinyl group, a dihydrofuranyl group, an imidazolinyl group, a pyrazolinyl group, an oxazolinyl group, and an isoxazolinyl group; and a 6-membered ring partially unsaturated heterocyclyl group such as a dihydropyranyl group.

The substituent on the "C3-6 cycloalkyl group", the "C6-10 aryl group", or the "5 to 6-membered ring heterocyclyl group" in R¹ is preferably a halogeno group such as a fluoro group, a chloro group, a bromo group, or an iodo group; a C1-6 alkyl group such as a methyl group, an ethyl group, an n-propyl group, an i-propyl group, an n-butyl group, an s-butyl group, an i-butyl group, a t-butyl group, an n-pentyl group, or a n-hexyl group; a C1-6 haloalkyl group such as a chloromethyl group, a chloroethyl group, a trifluoromethyl group, a 1,2-dichloro-n-propyl group, or a 1-fluoro-n-butyl group; a hydroxy group; a C1-6 alkoxy group such a methoxy group, an ethoxy group, a n-propoxy group, an i-propoxy group, a n-butoxy group, a s-butoxy group, an i-butoxy group, and a t-butoxy group; a C1-6 haloalkoxy group such as a 2-chloro-n-propoxy group, a 2,3-dichlorobutoxy group, and a trifluoromethoxy group; a C6-10 aryl group such as a phenyl group or a naphthyl group; a C6-10 aryl group substituted with any one or more substituents of a C1-6 alkyl group, a C1-6 alkoxy group, a halogeno group, a C1-6 haloalkyl group, or a C1-6 haloalkoxy group, such as a 4-methylphenyl group, a 4-methoxyphenyl group, a 4-chlorophenyl group, a 4-trifluoromethylphenyl group, or a 4-trifluoromethoxyphenyl group; a 5-membered ring heteroaryl group such as a pyrrolyl group, a furyl group, a thienyl group, an imidazolyl group, a pyrazolyl group, an oxazolyl group, an isoxazolyl group, a thiazolyl group, an isothiazolyl group, a triazolyl group, an oxadiazolyl group, a thiadiazolyl group, or a tetrazolyl group; a 5-membered ring heteroaryl group substituted with any one or more substituents of a C1-6 alkyl group, a C1-6 alkoxy group, a halogeno group, a C1-6 haloalkyl group, or a C1-6 haloalkoxy group; a 6-membered ring heteroaryl group such as a pyridyl group, a pyrazinyl group, a pyrimidinyl group, a pyridazinyl group, or a triazinyl group; a 6-membered ring heteroaryl group substituted with any one or more substituents of a C1-6 alkyl group, a C1-6 alkoxy group, a halogeno group, a C1-6 haloalkyl group, or a C1-6 haloalkoxy group; or a cyano group.

Further, as the substituent on the "C3-6 cycloalkyl group", or the "5 to 6-membered ring heterocyclyl group", an oxo group is also preferred.

Specific examples of the "group represented by R¹ON=CR⁶-" can include a (hydroxyimino)methyl group, an (ethoxyimino)methyl group, 1-(ethoxyimino)ethyl group, and 1-(i-propoxyimino)ethyl group.

### [X³]

X³ represents a substituted or unsubstituted linear C1-6 alkyl group.

Examples of the "linear C1-6 alkyl group" in X³ can include a methyl group, an ethyl group, a n-propyl group, a n-butyl group, a n-pentyl group, and a n-hexyl group.

As a substituent on the substituent on the linear C1-6 alkyl group, one or more substituents selected from a group of substituents below (hereinbelow, this substituent sometimes referred to by a symbol "G".) or the like may be exemplified.

When two or more substituents (G) are present, two of the substituents optionally form together a divalent organic group. The group of substituents is shown below:
a halogeno group, a substituted or unsubstituted C1-6 alkyl group, a substituted or unsubstituted C2-6 alkenyl group, a substituted or unsubstituted C2-6 alkynyl group, a hydroxy group, a substituted or unsubstituted C1-6 alkoxy group, a substituted or unsubstituted C2-6 alkenyloxy group, a substituted or unsubstituted C2-6 alkynyloxy group, a substituted or unsubstituted C1-6 alkylthio group, a substituted or unsubstituted C1-6 alkylsulfinyl group, a substituted or unsubstituted C1-6 alkylsulfonyl group, a substituted or unsubstituted C3-6 cycloalkyl group, a substituted or unsubstituted C3-6 cycloalkyloxy group, a substituted or unsubstituted C6-10 aryl group, a substituted or unsubstituted C6-10 aryloxy group, a substituted or unsubstituted C6-10 arylthio group, a substituted or unsubstituted C6-10 arylsulfinyl group, a substituted or unsubstituted C6-10 arylsulfonyl group, a substituted or unsubstituted 3 to 10-membered ring heterocyclyl group, a substituted or unsubstituted 3 to 10-membered ring heterocyclyloxy group, a nitro group, a cyano group, a group represented by R^{a}-CO-, a carboxy group, a group represented by R^{b}-O-CO-, a group represented by R^{x}R^{d}N-, a group represented by R^{c}R^{d}N-CO-, a group represented by R^{c}R^{d}N-NR^{d}-CO-, a group represented by R^{a}-CO-O-, a group represented by R^{a}-CO-NR^{e}-, a group represented by R^{a}-CO-CO-NR^{e}-, a group represented by R^{a}-CO-NR^{e}-NR^{e}-, a group represented by R^{a}-CO-NR^{e}-NR^{e}-CO-, a group represented by R^{b}-O-CO-O-, a group represented by R^{b}-O-CO-NR^{e}-, a group represented by R^{c}R^{d}N-CO-O-, a group represented by R^{c}R^{d}N-CO-NR^{e}-, a group represented by R^{c}R^{d}N-CO-CO-NR^{e}-, a group represented by R^{a}-CS-NR^{e}-, a group represented by R^{c}R^{d}N-CS-NR^{e}-, a group represented by R^{b}SO₂-NR^{e}-, a group represented by R^{c}R^{d}N-SO₂-, a group represented by R^{a}O-N=CR^{f}-, a group represented by R^{h}RⁱC=N-O-, a group represented by R^{a}-C(=NR^{g})-NR^{e}-, a group represented by R^{c}R^{d}N-C(=NR^{g})-, a group represented by R^{h}RⁱS(=O)=N-CO-, and a group represented by R^{h}RⁱS=N-CO-.

In the group of substituents described above, each Ra independently represents a hydrogen atom, a substituted or unsubstituted C1-6 alkyl group, a substituted or unsubstituted C2-6 alkenyl group, a substituted or unsubstituted C2-6 alkynyl group, a substituted or unsubstituted C3-6 cycloalkyl group, a substituted or unsubstituted C6-10 aryl group, or a substituted or unsubstituted 3 to 10-membered ring heterocyclyl group.

Each R^{b} independently represents a substituted or unsubstituted C1-6 alkyl group, a substituted or unsubstituted C2-6 alkenyl group, a substituted or unsubstituted C2-6 alkynyl group, a substituted or unsubstituted C3-6 cycloalkyl group, a substituted or unsubstituted C6-10 aryl group, or a substituted or unsubstituted 5 to 6-membered ring heterocyclyl group.

Each R^{c} independently represents a hydrogen atom, a substituted or unsubstituted C1-6 alkyl group, a substituted or unsubstituted C2-6 alkenyl group, a substituted or unsubstituted C2-6 alkynyl group, a substituted or unsubstituted C3-6 cycloalkyl group, a substituted or unsubstituted C6-10 aryl group, or a substituted or unsubstituted 5 to 6-membered ring heterocyclyl group.

Each R^{d} independently represents a hydrogen atom, a substituted or unsubstituted C1-6 alkyl group, a substituted or unsubstituted C1-6 alkoxy group, or a substituted or unsubstituted C6-10 aryl group, where R^{c} and R^{d} optionally form together a divalent organic group.

Each R^{e} independently represents a hydrogen atom, a substituted or unsubstituted C1-6 alkyl group, a substituted or unsubstituted C1-6 alkoxy group, or a substituted or unsubstituted C6-10 aryl group.

R^{f} represents a hydrogen atom, an amino group, or a substituted or unsubstituted C1-6 alkyl group.

Each R^{g} independently represents a hydrogen atom, a substituted or unsubstituted C1-6 alkyl group, or a substituted or unsubstituted C6-10 aryl group.

Each R^{h} independently represents a substituted or unsubstituted C1-6 alkyl group or a substituted or unsubstituted C6-10 aryl group.

Each Rⁱ independently represents a substituted or unsubstituted C1-6 alkyl group or a substituted or unsubstituted C6-10 aryl group, where R^{h} and Rⁱ optionally form together a divalent organic group.

Examples of the "halogeno group" in G can include a fluoro group, a chloro group, a bromo group, and an iodo group.

The "C1-6 alkyl group" in G may be a linear chain or may be a branched chain.

Examples of the "C1-6 alkyl group" in G can include a methyl group, an ethyl group, a n-propyl group, a n-butyl group, a n-pentyl group, a n-hexyl group, an i-propyl group, an i-butyl group, a s-butyl group, a t-butyl group, an i-pentyl group, a neopentyl group, a 2-methylbutyl group, and an i-hexyl group.

Examples of the "C2-6 alkenyl group" in G can include a vinyl group, a 1-propenyl group, a 2-propenyl group, a 1-butenyl group, a 2-butenyl group, a 3-butenyl group, a 1-methyl-2-propenyl group, a 2-methyl-2-propenyl group, a 1-pentenyl group, a 2-pentenyl group, a 3-pentenyl group, a 4-pentenyl group, a 1-methyl-2-butenyl group, a 2-methyl-2-butenyl group, a 1-hexenyl group, a 2-hexenyl group, a 3-hexenyl group, a 4-hexenyl group, and a 5-hexenyl group.

Examples of the "C2-6 alkynyl group" in G can include an ethynyl group, a 1-propynyl group, a 2-propynyl group, a 1-butynyl group, a 2-butynyl group, a 3-butynyl group, a 1-methyl-2-propynyl group, a 2-methyl-3-butynyl group, a 1-pentynyl group, a 2-pentynyl group, a 3-pentynyl group, a 4-pentynyl group, a 1-methyl-2-butynyl group, a 2-methyl-3-pentynyl group, a 1-hexynyl group, and a 1,1-dimethyl-2-butynyl group.

Examples of the "C1-6 alkoxy group" in G can include a methoxy group, an ethoxy group, a n-propoxy group, a n-butoxy group, a n-pentyloxy group, a n-hexyloxy group, an i-propoxy group, an i-butoxy group, a s-butoxy group, a t-butoxy group, and an i-hexyloxy group.

Examples of the "C2-6 alkenyloxy group" in G can include a vinyloxy group, an allyloxy group, a propenyloxy group, and a butenyloxy group.

Examples of the "C2-6 alkynyloxy group" in G can include an ethynyloxy group and a propargyloxy group.

Examples of the "C1-6 alkylthio group" in G can include a methylthio group, an ethylthio group, a n-propylthio group, a n-butylthio group, a n-pentylthio group, a n-hexylthio group, and an i-propylthio group.

Examples of the "C1-6 alkylsulfinyl group" in G can include a methylsulfinyl group, an ethylsulfinyl group, and a t-butylsulfinyl group.

Examples of the "C1-6 alkylsulfonyl group" in G can include a methylsulfonyl group, an ethylsulfonyl group, and a t-butylsulfonyl group.

The substituent on the "C1-6 alkyl group", the "C2-6 alkenyl group", the "C2-6 alkynyl group", the "C1-6 alkoxy group", the "C2-6 alkenyloxy group", the "C2-6 alkynyloxy group", the "C1-6 alkylthio group", the "C1-6 alkylsulfinyl group", or the "C1-6 alkylsulfonyl group" in G is preferably a halogeno group such as a fluoro group, a chloro group, a bromo group, or an iodo group; a hydroxy group; a C1-6 alkoxy group such as a methoxy group, an ethoxy group, a n-propoxy group, an i-propoxy group, a n-butoxy group, a s-butoxy group, an i-butoxy group, or a t-butoxy group; a C1-6 haloalkoxy group such as a 2-chloro-n-propoxy group, a 2,3-dichlorobutoxy group, or a trifluoromethoxy group; a C1-6 alkylthio group such as a methylthio group or an ethylthio group; a C1-6 alkylsulfinyl group such as a methylsulfinyl group or an ethylsulfinyl group; a C1-6 alkylsulfonyl group such as a methylsulfonyl group or an ethylsulfonyl group; a C3-6 cycloalkyl group such as a cyclopropyl group, a cyclobutyl group, a cyclopentyl group, or a cyclohexyl group; a C6-10 aryl group such as a phenyl group or a naphthyl group; a C6-10 aryl group substituted with any one or more substituents of a C1-6 alkyl group, a C1-6 alkoxy group, a halogeno group, a C1-6 haloalkyl group, or a C1-6 haloalkoxy group, such as a 4-methylphenyl group, a 4-methoxyphenyl group, a 4-chlorophenyl group, a 4-trifluoromethylphenyl group, or a 4-trifluoromethoxyphenyl group; a 5-membered ring heteroaryl group such as a pyrrolyl group, a furyl group, a thienyl group, an imidazolyl group, a pyrazolyl group, an oxazolyl group, an isoxazolyl group, a thiazolyl group, an isothiazolyl group, a triazolyl group, an oxadiazolyl group, a thiadiazolyl group, or a tetrazolyl group; a 5-membered ring heteroaryl group substituted with any one or more substituents of a C1-6 alkyl group, a C1-6 alkoxy group, a halogeno group, a C1-6 haloalkyl group, or a C1-6 haloalkoxy group; a 6-membered ring heteroaryl group such as a pyridyl group, a pyrazinyl group, a pyrimidinyl group, a pyridazinyl group, or a triazinyl group; a 6-membered ring heteroaryl group substituted with any one or more substituents of a C1-6 alkyl group, a C1-6 alkoxy group, a halogeno group, a C1-6 haloalkyl group, or a C1-6 haloalkoxy group; or a cyano group.

Examples of the "C3-6 cycloalkyl group" in G can include a cyclopropyl group, a cyclobutyl group, a cyclopentyl group, and a cyclohexyl group.

Examples of the "C3-6 cycloalkyloxy group" in G can include a cyclopropyloxy group, a cyclobutyloxy group, a cyclopentyloxy group, and a cyclohexyloxy group.

Examples of the "C6-10 aryl group" in G can include a phenyl group and a naphthyl group.

Examples of the "C6-10 aryloxy group" in G can include a phenoxy group and a naphthoxy group.

Examples of the "C6-10 arylthio group" in G can include a phenylthio group and a naphthylthio group.

Examples of the "C6-10 arylsulfinyl group" in G can include a phenylsulfinyl group and a naphthylsulfinyl group.

Examples of the "C6-10 arylsulfonyl group" in G can include a phenylsulfonyl group and a naphthylsulfonyl group.

The "3 to 10-membered ring heterocyclyl group" in G is a group including 1, 2, 3, or 4 hetero atoms selected from the group consisting of a nitrogen atom, an oxygen atom, and a sulfur atom as a constituent atom(s) of the ring. When two or more hetero atoms are included, the hetero atoms may be the same or different. The group may be either monocyclic or polycyclic.

Examples of the "3 to 10-membered ring heterocyclyl group" can include a 3 to 6-membered ring saturated heterocyclyl group, a 5 to 10-membered ring heteroaryl group, and a 5 to 10-membered ring partially unsaturated heterocyclyl group.

Examples of the 3 to 6-membered ring saturated heterocyclyl group can include an aziridinyl group, an epoxy group, an azetidinyl group, an oxetanyl group, a pyrrolidinyl group, a tetrahydrofuranyl group, a thiazolidinyl group, a tetrahydro-2H-pyranyl group, a piperidyl group, a piperazinyl group, a morpholinyl group, a dioxolanyl group, and a dioxanyl group.

Examples of the 5 to 10-membered ring heteroaryl group can include a 5-membered ring heteroaryl group such as a pyrrolyl group, a furyl group, a thienyl group, an imidazolyl group, a pyrazolyl group, an oxazolyl group, an isoxazolyl group, a thiazolyl group, an isothiazolyl group, a triazolyl group, an oxadiazolyl group, a thiadiazolyl group, and a tetrazolyl group; a 6-membered ring heteroaryl group such as a pyridyl group, a pyrazinyl group, a pyrimidinyl group, a pyridazinyl group, and a triazinyl group; a 9-membered heteroaryl group such as an indolyl group, an isoindolyl group, a benzofuranyl group, a benzothienyl group, an indazolyl group, a benzimidazolyl group, a benzoxazolyl group, a benzisoxazolyl group, a benzothiazolyl group, and a benzisothiazolyl group; and a 10-membered heteroaryl group such as a quinolinyl group, an isoquinolinyl group, a cinnolinyl group, a phthalazinyl group, a quinazolinyl group, and a quinoxalinyl group.

Examples of the 5 to 10-membered ring partially unsaturated heterocyclyl group can include a 5-membered ring partially unsaturated heterocyclyl group such as a pyrrolinyl group, a dihydrofuranyl group, an imidazolinyl group, a pyrazolinyl group, an oxazolinyl group, and an isoxazolinyl group; a 6-membered ring partially unsaturated heterocyclyl group such as a dihydropyranyl group; a 9-membered ring partially unsaturated heterocyclyl group such as an indolinyl group, an isoindolinyl group, a 2,3-dihydrobenzofuranyl group, and a 1,3-dihydrobenzofuranyl group; and a 10-membered ring partially unsaturated heterocyclyl group such as a 1,2,3,4-tetrahydroquinolinyl group.

The "3 to 10-membered ring heterocyclyloxy group" in G has a structure in which a 3 to 10-membered ring heterocyclyl group is bonded to an oxy group. Specifically, a thiazolyloxy group, a pyridyloxy group, or the like may be exemplified.

The substituent on the "C3-6 cycloalkyl group", the "C3-6 cycloalkyloxy group", the "C6-10 aryl group", the "C6-10 aryloxy group", the "C6-10 arylthio group", the "C6-10 arylsulfinyl group", the "C6-10 arylsulfonyl group", the "3 to 10-membered ring heterocyclyl group", or the "3 to 10-membered ring heterocyclyloxy group" in G is preferably a halogeno group such as a fluoro group, a chloro group, a bromo group, or an iodo group; a C1-6 alkyl group such as a methyl group, an ethyl group, a n-propyl group, an i-propyl group, a n-butyl group, a s-butyl group, an i-butyl group, a t-butyl group, a n-pentyl group, or a n-hexyl group; a C1-6 haloalkyl group such as a chloromethyl group, a chloroethyl group, a trifluoromethyl group, a 1,2-dichloro-n-propyl group, or a 1-fluoro-n-butyl group; a hydroxy group; a C1-6 alkoxy group such as a methoxy group, an ethoxy group, a n-propoxy group, an i-propoxy group, a n-butoxy group, a s-butoxy group, an i-butoxy group, or a t-butoxy group; a C1-6 haloalkoxy group such as 2-chloro-n-propoxy group, a 2,3-dichlorobutoxy group, or a trifluoromethoxy group; a C3-6 cycloalkyl C1-6 alkoxy group; a C6-10 aryl C1-6 alkoxy group; a (C6-10 aryl substituted with any one or more substituents of a C1-6 alkyl group, a C1-6 alkoxy group, a halogeno group, a C1-6 haloalkyl group, or a C1-6 haloalkoxy group) C1-6 alkoxy group; a 5-membered ring heteroaryl C1-6 alkoxy group; a (5-membered ring heteroaryl substituted with any one or more substituents of a C1-6 alkyl group, a C1-6 alkoxy group, a halogeno group, a C1-6 haloalkyl group, or a C1-6 haloalkoxy group) C1-6 alkoxy group; a 6-membered ring heteroaryl C1-6 alkoxy group; a (6-membered ring heteroaryl substituted with any one or more substituents of a C1-6 alkyl group, a C1-6 alkoxy group, a halogeno group, a C1-6 haloalkyl group, or a C1-6 haloalkoxy group) C1-6 alkoxy group; a C1-6 alkylthio group such as a methylthio group or an ethylthio group; a C1-6 alkylsulfinyl group such as a methylsulfinyl group or an ethylsulfinyl group; a C1-6 alkylsulfonyl group such as a methylsulfonyl group or an ethylsulfonyl group; a C1-6 haloalkylthio group such as a trifluoromethylthio group or a 2,2,2-trifluoroethylthio group; a C1-6 haloalkylsulfinyl group such as a trifluoromethylsulfinyl group or a 2,2,2-trifluoroethylsulfinyl group; a C1-6 haloalkylsulfonyl group such as a trifluoromethylsulfonyl group or a 2,2,2-trifluoroethylsulfonyl group; a C3-6 cycloalkyl group such as a cyclopropyl group or a cyclobutyl group; a C3-6 cycloalkyl group substituted with any one or more substituents of a C1-6 alkyl group, a C1-6 alkoxy group, a halogeno group, a C1-6 haloalkyl group, a C1-6 haloalkoxy group, or a cyano group; a C3-6 cycloalkenyl group; a C6-10 aryl group such as a phenyl group or a naphthyl group; a C6-10 aryl group substituted with any one or more substituents of a C1-6 alkyl group, a C1-6 alkoxy group, a halogeno group, a C1-6 haloalkyl group, or a C1-6 haloalkoxy group, such as a 4-methylphenyl group, a 4-methoxyphenyl group, a 4-chlorophenyl group, a 4-trifluoromethylphenyl group, or a 4-trifluoromethoxyphenyl group; 3 to 4-membered ring saturated heterocyclyl group such as an aziridinyl group, an epoxy group, an azetidinyl group, or an oxetanyl group; a 3 to 4-membered ring saturated heterocyclyl group substituted with any one or more substituents of a C1-6 alkyl group, a C1-6 alkoxy group, a halogeno group, a C1-6 haloalkyl group, or a C1-6 haloalkoxy group; a 5 to 6-membered ring saturated heterocyclyl group such as a pyrrolidinyl group, a tetrahydrofuranyl group, a thiazolidinyl group, a tetrahydro-2H-pyranyl group, a piperidyl group, a piperazinyl group, a morpholinyl group, a dioxolanyl group, or a dioxanyl group; a 5 to 6-membered ring saturated heterocyclyl group substituted with any one or more substituents of a C1-6 alkyl group, a C1-6 alkoxy group, a halogeno group, a C1-6 haloalkyl group, or a C1-6 haloalkoxy group; a 5-membered ring heteroaryl group such as a pyrrolyl group, a furyl group, a thienyl group, an imidazolyl group, a pyrazolyl group, an oxazolyl group, an isoxazolyl group, a thiazolyl group, an isothiazolyl group, a triazolyl group, a oxadiazolyl group, a thiadiazolyl group, or a tetrazolyl group; a 5-membered ring heteroaryl group substituted with any one or more substituents of a C1-6 alkyl group, a C1-6 alkoxy group, a halogeno group, a C1-6 haloalkyl group, or a C1-6 haloalkoxy group; a 6-membered ring heteroaryl group such as a pyridyl group, a pyrazinyl group, a pyrimidinyl group, a pyridazinyl group, or a triazinyl group; a 6-membered ring heteroaryl group substituted with any one or more substituents of a C1-6 alkyl group, a C1-6 alkoxy group, a halogeno group, a C1-6 haloalkyl group, or a C1-6 haloalkoxy group; a 5-membered ring partially unsaturated heterocyclyl group such as a pyrrolinyl group, a dihydrofuranyl group, an imidazolinyl group, a pyrazolinyl group, or an oxazolinyl group, or an isoxazolinyl group; a 5-membered ring partially saturated heterocyclyl group substituted with any one or more substituents of a C1-6 alkyl group, a C1-6 alkoxy group, a halogeno group, a C1-6 haloalkyl group, or a C1-6 haloalkoxy group; a 6-membered ring partially unsaturated heterocyclyl group such as a dihydropyranyl group; a 6-membered ring partially saturated heterocyclyl group substituted with any one or more substituents of a C1-6 alkyl group, a C1-6 alkoxy group, a halogeno group, a C1-6 haloalkyl group, or a C1-6 haloalkoxy group;
a group represented by R^{G1}-CO- (wherein R^{G1} represents a hydrogen atom; a C1-6 alkyl group; a C1-6 alkyl group substituted with any one or more substituents of a halogeno group, a C1-6 alkoxy group, a C1-6 haloalkoxy group, a C3-6 cycloalkyl group, a phenyl group, or a 5 to 6-membered ring heteroaryl group; a (C6-10 aryl substituted with any one or more substituents of a C1-6 alkyl group, a C1-6 alkoxy group, a halogeno group, a C1-6 haloalkyl group, or a C1-6 haloalkoxy group) C1-6 alkyl group; a (5 to 6-membered ring heteroaryl substituted with any one or more substituents of a C1-6 alkyl group, a C1-6 alkoxy group, a halogeno group, a C1-6 haloalkyl group, or a C1-6 haloalkoxy group) C1-6 alkyl group; a C2-6 alkenyl group; a C2-6 haloalkenyl group; a C2-6 alkynyl group; a C2-6 haloalkynyl group; a C3-6 cycloalkyl group; a C3-6 cycloalkyl group substituted with any one or more substituents of a C1-6 alkyl group, a C1-6 alkoxy group, a halogeno group, a C1-6 haloalkyl group, a C1-6 haloalkoxy group, or a cyano group; a C6-10 aryl group; a C6-10 aryl group substituted with any one or more substituents of a C1-6 alkyl group, a C1-6 alkoxy group, a halogeno group, a C1-6 haloalkyl group, or a C1-6 haloalkoxy group; 5 to 6-membered ring heteroaryl group; or a 5 to 6-membered ring heteroaryl group substituted with any one or more substituents of a C1-6 alkyl group, a C1-6 alkoxy group, a halogeno group, a C1-6 haloalkyl group, or a C1-6 haloalkoxy group; the same applies to R^{G1} below.);
a carboxy group;
a group represented by R^{G2}-O-CO- (wherein R^{G2} represents a C1-6 alkyl group; a C1-6 alkyl group substituted with any one or more substituents of a halogeno group, a C1-6 alkoxy group, a C1-6 haloalkoxy group, a C3-6 cycloalkyl group, a phenyl group, or a 5 to 6-membered ring heteroaryl group; a (C6-10 aryl substituted with any one or more substituents of a C1-6 alkyl group, a C1-6 alkoxy group, a halogeno group, a C1-6 haloalkyl group, or a C1-6 haloalkoxy group) C1-6 alkyl group; a (5 to 6-membered ring heteroaryl substituted with any one or more substituents of a C1-6 alkyl group, a C1-6 alkoxy group, a halogeno group, a C1-6 haloalkyl group, or a C1-6 haloalkoxy group) C1-6 alkyl group; a C2-6 alkenyl group; a C2-6 haloalkenyl group; a C2-6 alkynyl group; a C2-6 haloalkynyl group; a C3-6 cycloalkyl group; a C3-6 cycloalkyl group substituted with a C1-6 alkyl group, a C1-6 alkoxy group, a halogeno group, a C1-6 haloalkyl group, a C1-6 haloalkoxy group, or a cyano group; a C6-10 aryl group; a C6-10 aryl group substituted with any one or more substituents of a C1-6 alkyl group, a C1-6 alkoxy group, a halogeno group, a C1-6 haloalkyl group, or a C1-6 haloalkoxy group; 5 to 6-membered ring heteroaryl group; or a 5 to 6-membered ring heteroaryl group substituted with any one or more substituents of a C1-6 alkyl group, a C1-6 alkoxy group, a halogeno group, a C1-6 haloalkyl group, or a C1-6 haloalkoxy group; the same applies to R^{G2} below.);
a group represented by R^{G1}R^{G1}N- (wherein R^{G1}'s in the formula may be the same or different; R^{G1}'s optionally form together a trimethylene group, a tetramethylene group, a pentamethylene group, or a dimethyleneoxydimethylene group.) ;
a group represented by R^{G1}R^{G1}N-CO- (wherein R^{G1}'s in the formula may be the same or different; R^{G1}'s optionally form together a trimethylene group, a tetramethylene group, a pentamethylene group, or a dimethyleneoxydimethylene group.) ;
a group represented by R^{G1}-CO-O-; a group represented by R^{G1}-CO-NR^{G3}- (wherein R^{G3} represents a hydrogen atom; a C1-6 alkyl group; a C1-6 alkyl group substituted with any one or more substituents of a halogeno group, a C1-6 alkoxy group, a C1-6 haloalkoxy group, a C3-6 cycloalkyl group, a phenyl group, or a 5 to 6-membered ring heteroaryl group; a (C6-10 aryl substituted with any one or more substituents of a C1-6 alkyl group, a C1-6 alkoxy group, a halogeno group, a C1-6 haloalkyl group, or a C1-6 haloalkoxy group) C1-6 alkyl group; or a (5 to 6-membered ring heteroaryl substituted with any one or more substituents of a C1-6 alkyl group, a C1-6 alkoxy group, a halogeno group, a C1-6 haloalkyl group, or a C1-6 haloalkoxy group) C1-6 alkyl group; the same applies to R^{G3} below.);
a group represented by R^{G2}-O-CO-O-; a group represented by R^{G2}-O-CO-NR^{G3}-; a group represented by R^{G1}R^{G1}N-CO-O- (wherein R^{G1}'s in the formula may be the same or different; R^{G1}'s optionally form together a trimethylene group, a tetramethylene group, a pentamethylene group, or a dimethyleneoxydimethylene group.);
a group represented by R^{G1}R^{G1}N-CO-NR^{G3}- (wherein R^{G1}'s in the formula may be the same or different; R^{G1}'s optionally form together a trimethylene group, a tetramethylene group, a pentamethylene group, or a dimethyleneoxydimethylene group.); a group represented by R^{G2}SO₂-NR^{G3}-; a group represented by R^{G1}R^{G1}N-SO₂- (wherein R^{G1}'s in the formula may be the same or different; R^{G1}'s optionally form together a trimethylene group, a tetramethylene group, a pentamethylene group, or a dimethyleneoxydimethylene group.) ;
a group represented by R^{G1}-O-N=C(R^{G4})- (wherein R^{G4} represents a hydrogen atom or a C1-6 alkyl group.); a group represented by (R^{G1})₂C=N-O- (wherein R^{G1}'s in the formula may be the same or different; R^{G1}'s optionally form together a trimethylene group, a tetramethylene group, a pentamethylene group, or a dimethyleneoxydimethylene group.);
a pentafluorosulfanyl group, a nitro group, or a cyano group. Further, as the substituent on the "C3-6 cycloalkyl group", the "C3-6 cycloalkyloxy group", the "3 to 10-membered ring heterocyclyl group", or the "3 to 10-membered ring heterocyclyloxy group", an oxo group is also preferred.

In the "group represented by R^{a}-CO-" in G, Ra represents a hydrogen atom, a substituted or unsubstituted C1-6 alkyl group, a substituted or unsubstituted C2-6 alkenyl group, a substituted or unsubstituted C2-6 alkynyl group, a substituted or unsubstituted C3-6 cycloalkyl group, a substituted or unsubstituted C6-10 aryl group, or a substituted or unsubstituted 3 to 10-membered ring heterocyclyl group.

Examples of the "C1-6 alkyl group" in R^{a} can include a methyl group, an ethyl group, a n-propyl group, a n-butyl group, a n-pentyl group, a n-hexyl group, an i-propyl group, an i-butyl group, a s-butyl group, a t-butyl group, an i-pentyl group, a neopentyl group, a 2-methylbutyl group, and an i-hexyl group.

Examples of the "C2-6 alkenyl group" in R^{a} can include a vinyl group and a 1-propenyl group.

Examples of the "C2-6 alkynyl group" in R^{a} can include an ethynyl group and a 1-propynyl group.

The substituent on the "C1-6 alkyl group", the "C2-6 alkenyl group", or the "C2-6 alkynyl group" in R^{a} is preferably a halogeno group such as a fluoro group, a chloro group, a bromo group, or an iodo group; a hydroxy group; a C1-6 alkoxy group such as a methoxy group, an ethoxy group, a n-propoxy group, an i-propoxy group, a n-butoxy group, a s-butoxy group, an i-butoxy group, or a t-butoxy group; a C1-6 haloalkoxy group such as 2-chloro-n-propoxy group, a 2,3-dichlorobutoxy group, or a trifluoromethoxy group; a C1-6 alkylthio group such as a methylthio group or an ethylthio group; a C1-6 alkylsulfinyl group such as a methylsulfinyl group or an ethylsulfinyl group; a C1-6 alkylsulfonyl group such as a methylsulfonyl group or an ethylsulfonyl group; a carboxy group; a C1-6 alkoxycarbonyl group such as a methoxycarbonyl group, an ethoxycarbonyl group, a n-propoxycarbonyl group, an i-propoxycarbonyl group, a n-butoxycarbonyl group, or a t-butoxycarbonyl group; a C3-6 cycloalkyl group such as a cyclopropyl group, a cyclobutyl group, a cyclopentyl group, or a cyclohexyl group; a C6-10 aryl group such as a phenyl group or a naphthyl group; a C6-10 aryl group substituted with any one or more substituents of a C1-6 alkyl group, a C1-6 alkoxy group, a halogeno group, a C1-6 haloalkyl group, or a C1-6 haloalkoxy group, such as a 4-methylphenyl group, a 4-methoxyphenyl group, a 4-chlorophenyl group, a 4-trifluoromethylphenyl group, or a 4-trifluoromethoxyphenyl group; a 5-membered ring heteroaryl group such as a pyrrolyl group, a furyl group, a thienyl group, an imidazolyl group, a pyrazolyl group, an oxazolyl group, an isoxazolyl group, a thiazolyl group, a isothiazolyl group, a triazolyl group, an oxadiazolyl group, a thiadiazolyl group, or a tetrazolyl group; a 5-membered ring heteroaryl group substituted with any one or more substituents of a C1-6 alkyl group, a C1-6 alkoxy group, a halogeno group, a C1-6 haloalkyl group, or a C1-6 haloalkoxy group; a 6-membered ring heteroaryl group such as a pyridyl group, a pyrazinyl group, a pyrimidinyl group, a pyridazinyl group, or a triazinyl group; a 6-membered ring heteroaryl group substituted with any one or more substituents of a C1-6 alkyl group, a C1-6 alkoxy group, a halogeno group, a C1-6 haloalkyl group, or a C1-6 haloalkoxy group; or a cyano group.

Examples of the "C3-6 cycloalkyl group" in R^{a} can include a cyclopropyl group, a cyclobutyl group, a cyclopentyl group, and a cyclohexyl group.

Examples of the "C6-10 aryl group" in R^{a} can include a phenyl group, a naphthyl group, an indenyl group, an indanyl group, and a tetralinyl group.

The "3 to 10-membered ring heterocyclyl group" in R^{a} is a group including 1, 2, 3, or 4 hetero atoms selected from the group consisting of a nitrogen atom, an oxygen atom, and a sulfur atom as a constituent atom(s) of the ring. When two or more hetero atoms are included, the hetero atoms may be the same or different. The group may be either monocyclic or polycyclic.

Examples of the "3 to 10-membered ring heterocyclyl group" can include a 3 to 6-membered ring saturated heterocyclyl group, a 5 to 10-membered ring heteroaryl group, and a 5 to 10-membered ring partially unsaturated heterocyclyl group.

Examples of the "3 to 6-membered ring saturated heterocyclyl group" can include an aziridinyl group, an epoxy group, an azetidinyl group, an oxetanyl group, a pyrrolidinyl group, a tetrahydrofuranyl group, a thiazolidinyl group, a tetrahydro-2H-pyranyl group, a piperidyl group, a piperazinyl group, a morpholinyl group, a dioxolanyl group, and a dioxanyl group.

Examples of the "5 to 10-membered ring heteroaryl group" can include a 5-membered ring heteroaryl group such as a pyrrolyl group, a furyl group, a thienyl group, an imidazolyl group, a pyrazolyl group, an oxazolyl group, an isoxazolyl group, a thiazolyl group, an isothiazolyl group, a triazolyl group, an oxadiazolyl group, a thiadiazolyl group, and a tetrazolyl group; a 6-membered ring heteroaryl group such as a pyridyl group, a pyrazinyl group, a pyrimidinyl group, a pyridazinyl group, and a triazinyl group; a 9-membered heteroaryl group such as an indolyl group, an isoindolyl group, a benzofuranyl group, a benzothienyl group, an indazolyl group, a benzimidazolyl group, a benzoxazolyl group, a benzisoxazolyl group, a benzothiazolyl group, and a benzisothiazolyl group; and a 10-membered heteroaryl group such as a quinolinyl group, an isoquinolinyl group, a cinnolinyl group, a phthalazinyl group, a quinazolinyl group, and a quinoxalinyl group.

Examples of the "5 to 10-membered ring partially unsaturated heterocyclyl group" can include a 5-membered ring partially unsaturated heterocyclyl group such as a pyrrolinyl group, a dihydrofuranyl group, an imidazolinyl group, a pyrazolinyl group, an oxazolinyl group, and an isoxazolinyl group; a 6-membered ring partially unsaturated heterocyclyl group such as a dihydropyranyl group; a 9-membered ring partially unsaturated heterocyclyl group such as an indolinyl group, an isoindolinyl group, a 2,3-dihydrobenzofuranyl group, and a 1,3-dihydrobenzofuranyl group; and a 10-membered ring partially unsaturated heterocyclyl group such as a 1,2,3,4-tetrahydroquinolinyl group.

The substituent on the "C3-6 cycloalkyl group", the "C6-10 aryl group", or the "3 to 10-membered ring heterocyclyl group" in R^{a} is preferably a halogeno group such as a fluoro group, a chloro group, a bromo group, or an iodo group; a C1-6 alkyl group such as a methyl group, an ethyl group, a n-propyl group, an i-propyl group, a n-butyl group, a s-butyl group, an i-butyl group, a t-butyl group, a n-pentyl group, or a n-hexyl group; a C1-6 haloalkyl group such as a chloromethyl group, a chloroethyl group, a trifluoromethyl group, a 1,2-dichloro-n-propyl group, or a 1-fluoro-n-butyl group; a hydroxy group; a C1-6 alkoxy group such as a methoxy group, an ethoxy group, a n-propoxy group, an i-propoxy group, a n-butoxy group, a s-butoxy group, a i-butoxy group, or a t-butoxy group; a C1-6 haloalkoxy group such as a 2-chloro-n-propoxy group, a 2,3-dichlorobutoxy group, or a trifluoromethoxy group; a C3-6 cycloalkyl C1-6 alkoxy group; a C6-10 aryl C1-6 alkoxy group; a (C6-10 aryl substituted with any one or more substituents of a C1-6 alkyl group, a C1-6 alkoxy group, a halogeno group, a C1-6 haloalkyl group, or a C1-6 haloalkoxy group) C1-6 alkoxy group; a 5-membered ring heteroaryl C1-6 alkoxy group; a (5-membered ring heteroaryl substituted with any one or more substituents of a C1-6 alkyl group, a C1-6 alkoxy group, a halogeno group, a C1-6 haloalkyl group, or a C1-6 haloalkoxy group) C1-6 alkoxy group; a 6-membered ring heteroaryl C1-6 alkoxy group; a (6-membered ring heteroaryl substituted with any one or more substituents of a C1-6 alkyl group, a C1-6 alkoxy group, a halogeno group, a C1-6 haloalkyl group, or a C1-6 haloalkoxy group) C1-6 alkoxy group; a C1-6 alkylthio group such as a methylthio group or an ethylthio group; a C1-6 alkylsulfinyl group such as a methylsulfinyl group or an ethylsulfinyl group; a C1-6 alkylsulfonyl group such as a methylsulfonyl group or an ethylsulfonyl group; a C1-6 haloalkylthio group such as a trifluoromethylthio group or a 2,2,2-trifluoroethylthio group; a C1-6 haloalkylsulfinyl group such as a trifluoromethylsulfinyl group or a 2,2,2-trifluoroethylsulfinyl group; a C1-6 haloalkylsulfonyl group such as a trifluoromethylsulfonyl group or a 2,2,2-trifluoroethylsulfonyl group; a C3-6 cycloalkyl group such as a cyclopropyl group, a cyclobutyl group, or a cyclopentyl group; a C3-6 cycloalkyl group substituted with any one or more substituents of a C1-6 alkyl group, a C1-6 alkoxy group, a halogeno group, a C1-6 haloalkyl group, a C1-6 haloalkoxy group, or a cyano group; a C3-6 cycloalkenyl group; a C6-10 aryl group such as a phenyl group or a naphthyl group; a C6-10 aryl group substituted with any one or more substituents of a C1-6 alkyl group, a C1-6 alkoxy group, a halogeno group, a C1-6 haloalkyl group, or a C1-6 haloalkoxy group, such as a 4-methylphenyl group, a 4-methoxyphenyl group, a 4-chlorophenyl group, a 4-trifluoromethylphenyl group, or a 4-trifluoromethoxyphenyl group; a 3 to 4-membered ring saturated heterocyclyl group such as an aziridinyl group, an epoxy group, an azetidinyl group, or an oxetanyl group; a 3 to 4-membered ring saturated heterocyclyl group substituted with any one or more substituents of a C1-6 alkyl group, a C1-6 alkoxy group, a halogeno group, a C1-6 haloalkyl group, or a C1-6 haloalkoxy group; a 5 to 6-membered ring saturated heterocyclyl group such as a pyrrolidinyl group, a tetrahydrofuranyl group, a thiazolidinyl group, a tetrahydro-2H-pyranyl group, a piperidyl group, a piperazinyl group, morpholinyl group, a dioxolanyl group, or a dioxanyl group; a 5 to 6-membered ring saturated heterocyclyl group substituted with any one or more substituents of a C1-6 alkyl group, a C1-6 alkoxy group, a halogeno group, a C1-6 haloalkyl group, or a C1-6 haloalkoxy group; a 5-membered ring heteroaryl group such as a pyrrolyl group, a furyl group, a thienyl group, an imidazolyl group, a pyrazolyl group, an oxazolyl group, an isoxazolyl group, a thiazolyl group, a isothiazolyl group, a triazolyl group, an oxadiazolyl group, a thiadiazolyl group, or a tetrazolyl group; a 5-membered ring heteroaryl group substituted with any one or more substituents of a C1-6 alkyl group, a C1-6 alkoxy group, a halogeno group, a C1-6 haloalkyl group, or a C1-6 haloalkoxy group; a 6-membered ring heteroaryl group such as a pyridyl group, a pyrazinyl group, a pyrimidinyl group, a pyridazinyl group, or a triazinyl group; a 6-membered ring heteroaryl group substituted with any one or more substituents of a C1-6 alkyl group, a C1-6 alkoxy group, a halogeno group, a C1-6 haloalkyl group, or a C1-6 haloalkoxy group; a 5-membered ring partially unsaturated heterocyclyl group such as a pyrrolinyl group, a dihydrofuranyl group, an imidazolinyl group, a pyrazolinyl group, an oxazolinyl group, or an isoxazolinyl group; a 5-membered ring partially saturated heterocyclyl group substituted with any one or more substituents of a C1-6 alkyl group, a C1-6 alkoxy group, a halogeno group, a C1-6 haloalkyl group, or a C1-6 haloalkoxy group; a 6-membered ring partially unsaturated heterocyclyl group such as a dihydropyranyl group; a 6-membered ring partially saturated heterocyclyl group substituted with any one or more substituents of a C1-6 alkyl group, a C1-6 alkoxy group, a halogeno group, a C1-6 haloalkyl group, or a C1-6 haloalkoxy group;
a group represented by R^{q1}-CO- (wherein R^{q1} represents a hydrogen atom; a C1-6 alkyl group; a C1-6 alkyl group substituted with any one or more substituents of a halogeno group, a C1-6 alkoxy group, a C1-6 haloalkoxy group, a C3-6 cycloalkyl group, a phenyl group, or a 5 to 6-membered ring heteroaryl group; a (C6-10 aryl substituted with any one or more substituents of a C1-6 alkyl group, a C1-6 alkoxy group, a halogeno group, a C1-6 haloalkyl group, or a C1-6 haloalkoxy group) C1-6 alkyl group; a (5 to 6-membered ring heteroaryl substituted with any one or more substituents of a C1-6 alkyl group, a C1-6 alkoxy group, a halogeno group, a C1-6 haloalkyl group, or a C1-6 haloalkoxy group) C1-6 alkyl group; a C2-6 alkenyl group; a C2-6 haloalkenyl group; a C2-6 alkynyl group; a C2-6 haloalkynyl group; a C3-6 cycloalkyl group; C3-6 cycloalkyl group substituted with any one or more substituents of a C1-6 alkyl group, a C1-6 alkoxy group, a halogeno group, a C1-6 haloalkyl group, a C1-6 haloalkoxy group, or a cyano group; a C6-10 aryl group; a C6-10 aryl group substituted with any one or more substituents of a C1-6 alkyl group, a C1-6 alkoxy group, a halogeno group, a C1-6 haloalkyl group, or a C1-6 haloalkoxy group; a 5 to 6-membered ring heteroaryl group; or a 5 to 6-membered ring heteroaryl group substituted with any one or more substituents of a C1-6 alkyl group, a C1-6 alkoxy group, a halogeno group, a C1-6 haloalkyl group, or a C1-6 haloalkoxy group; the same applies to R^{q1} below.);
a carboxy group;
a group represented by R^{q2}-O-CO- (wherein R^{q2} represents a C1-6 alkyl group; a C1-6 alkyl group substituted with any one or more substituents of a halogeno group, a C1-6 alkoxy group, a C1-6 haloalkoxy group, a C3-6 cycloalkyl group, a phenyl group, or a 5 to 6-membered ring heteroaryl group; a (C6-10 aryl substituted with any one or more substituents of a C1-6 alkyl group, a C1-6 alkoxy group, a halogeno group, a C1-6 haloalkyl group, or a C1-6 haloalkoxy group) C1-6 alkyl group; a (5 to 6-membered ring heteroaryl substituted with any one or more substituents of a C1-6 alkyl group, a C1-6 alkoxy group, a halogeno group, a C1-6 haloalkyl group, or a C1-6 haloalkoxy group) C1-6 alkyl group; a C2-6 alkenyl group; a C2-6 haloalkenyl group; a C2-6 alkynyl group; a C2-6 haloalkynyl group; a C3-6 cycloalkyl group; a C3-6 cycloalkyl group substituted with any one or more substituents of a C1-6 alkyl group, a C1-6 alkoxy group, a halogeno group, a C1-6 haloalkyl group, a C1-6 haloalkoxy group, or a cyano group; a C6-10 aryl group; a C6-10 aryl group substituted with any one or more substituents of a C1-6 alkyl group, a C1-6 alkoxy group, a halogeno group, a C1-6 haloalkyl group, or a C1-6 haloalkoxy group; a 5 to 6-membered ring heteroaryl group; or a 5 to 6-membered ring heteroaryl group substituted with any one or more substituents of a C1-6 alkyl group, a C1-6 alkoxy group, a halogeno group, a C1-6 haloalkyl group, or a C1-6 haloalkoxy group; the same applies to R^{q2} below.);
a group represented by R^{q1}R^{q1}N- (wherein R^{q1}'s in the formula may be the same or different; R^{q1}'s optionally form together a trimethylene group, a tetramethylene group, a pentamethylene group, or a dimethyleneoxydimethylene group.) ;
a group represented by R^{q1}R^{q1}N-CO- (wherein R^{q1}'s in the formula may be the same or different; R^{q1}'s optionally form together a trimethylene group, a tetramethylene group, a pentamethylene group, or a dimethyleneoxydimethylene group.) ;
a group represented by R^{q1}CO-O-; a group represented by R^{q1}-CO-NR^{q3}- (wherein R^{q3} represents a hydrogen atom; a C1-6 alkyl group; a C1-6 alkyl group substituted with any one or more substituents of a halogeno group, a C1-6 alkoxy group, a C1-6 haloalkoxy group, a C3-6 cycloalkyl group, a phenyl group, or a 5 to 6-membered ring heteroaryl group; a (C6-10 aryl substituted with any one or more substituents of a C1-6 alkyl group, a C1-6 alkoxy group, a halogeno group, a C1-6 haloalkyl group, or a C1-6 haloalkoxy group) C1-6 alkyl group; or a (5 to 6-membered ring heteroaryl substituted with any one or more substituents of a C1-6 alkyl group, a C1-6 alkoxy group, a halogeno group, a C1-6 haloalkyl group, or a C1-6 haloalkoxy group) C1-6 alkyl group; the same applies to R^{q3} below.);
a group represented by R^{q2}-O-CO-O-; a group represented by R^{q2}-O-CO-NR^{q3}-; a group represented by R^{q1}R^{q1}N-CO-O- (wherein R^{q1}'s in the formula may be the same or different; R^{q1}'s optionally form together a trimethylene group, a tetramethylene group, a pentamethylene group, or a dimethyleneoxydimethylene group.);
a group represented by R^{q1}R^{q1}N-CO-NR^{q3}- (wherein R^{q1}'s in the formula may be the same or different; R^{q1}'s optionally form together a trimethylene group, a tetramethylene group, a pentamethylene group, or a dimethyleneoxydimethylene group.); a group represented by R^{q2}SO₂-NR^{q3}-; a group represented by R^{q1}R^{q1}N-SO₂- (wherein R^{q1}'s in the formula may be the same or different; R^{q1}'s optionally form together a trimethylene group, a tetramethylene group, a pentamethylene group, or a dimethyleneoxydimethylene group.) ;
a group represented by R^{q1}-O-N=C(R^{q4})- (wherein R^{q4} represents a hydrogen atom or a C1-6 alkyl group.); a group represented by (R^{q1})₂C=N-O- (wherein R^{q1}'s in the formula may be the same or different; R^{q1}'s optionally form together a trimethylene group, a tetramethylene group, a pentamethylene group, or a dimethyleneoxydimethylene group.) ;
a pentafluorosulfanyl group, a nitro group, or a cyano group.

Further, as the substituent on the "C3-6 cycloalkyl group" or the "3 to 10-membered ring heterocyclyl group", an oxo group is also preferred.

Specific examples of the "group represented by R^{a}-CO-" can include a formyl group, an acetyl group, and an i-propylcarbonyl group.

In "the group represented by R^{b}-O-CO-" in G, R^{b} represents a substituted or unsubstituted C1-6 alkyl group, a substituted or unsubstituted C2-6 alkenyl group, a substituted or unsubstituted C2-6 alkynyl group, a substituted or unsubstituted C3-6 cycloalkyl group, a substituted or unsubstituted C6-10 aryl group, or a substituted or unsubstituted 5 to 6-membered ring heterocyclyl group.

Specific examples of the substituent in R^{b} can include the same as those exemplified for R^{a}.

Specific examples of the "group represented by R^{b}-O-CO-" can include a methoxycarbonyl group, an ethoxycarbonyl group, a n-propoxycarbonyl group, an i-propoxycarbonyl group, a n-butoxycarbonyl group, and a t-butoxycarbonyl group.

In the "group represented by R^{c}R^{d}N-" in G, R^{c} represents a hydrogen atom, a substituted or unsubstituted C1-6 alkyl group, a substituted or unsubstituted C2-6 alkenyl group, a substituted or unsubstituted C2-6 alkynyl group, a substituted or unsubstituted C3-6 cycloalkyl group, a substituted or unsubstituted C6-10 aryl group, or a substituted or unsubstituted 5 to 6-membered ring heterocyclyl group, and R^{d} represents a hydrogen atom, a substituted or unsubstituted C1-6 alkyl group, a substituted or unsubstituted C1-6 alkoxy group, or a substituted or unsubstituted C6-10 aryl group.

Specific examples of the substituent in R^{c} or R^{d} can include the same as those exemplified for R^{a}.

Examples of the "C1-6 alkoxy group" in R^{d} can include a methoxy group, an ethoxy group, a n-propoxy group, a n-butoxy group, a n-pentyloxy group, a n-hexyloxy group, an i-propoxy group, an i-butoxy group, a s-butoxy group, a t-butoxy group, and an i-hexyloxy group.

The substituent on the "C1-6 alkoxy group" in R^{d} is preferably a halogeno group such as a fluoro group, a chloro group, a bromo group, or an iodo group; a hydroxy group; a C1-6 alkoxy group such as a methoxy group, an ethoxy group, a n-propoxy group, an i-propoxy group, a n-butoxy group, a s-butoxy group, an i-butoxy group, or a t-butoxy group; a C1-6 haloalkoxy group such as a 2-chloro-n-propoxy group, a 2,3-dichlorobutoxy group, or a trifluoromethoxy group; a C3-6 cycloalkyl group such as a cyclopropyl group, a cyclobutyl group, or a cyclopentyl group, cyclohexyl group; a C6-10 aryl group such as a phenyl group or a naphthyl group; a C6-10 aryl group substituted with any one or more substituents of a C1-6 alkyl group, a C1-6 alkoxy group, a halogeno group, a C1-6 haloalkyl group, or a C1-6 haloalkoxy group, such as a 4-methylphenyl group, a 4-methoxyphenyl group, a 4-chlorophenyl group, a 4-trifluoromethylphenyl group, or a 4-trifluoromethoxyphenyl group; or a cyano group.

Here, R^{c} and R^{d} optionally form together a divalent organic group.

Examples of the divalent organic group that can be formed can include a substituted or unsubstituted C2-5 alkylene group, a substituted or unsubstituted C1-3 alkyleneoxy C1-3 alkylene group, a substituted or unsubstituted C1-3 alkylenethio C1-3 alkylene group, or a substituted or unsubstituted C1-3 alkyleneimino C1-3 alkylene group.

Further examples can include a silicon-containing divalent hydrocarbon group such as -CH₂CH₂-Si(CH₃)₂-CH₂CH₂-.

Examples of the "C2-5 alkylene group" can include a dimethylene group, a trimethylene group, and a tetramethylene group.

Examples of the "C1-3 alkyleneoxy C1-3 alkylene group" can include a dimethyleneoxydimethylene group.

Examples of the "C1-3 alkylenethio C1-3 alkylene group" can include a dimethylenethiodimethylene group.

Examples of the "C1-3 alkyleneimino C1-3 alkylene group" can include a dimethyleneiminodimethylene group.

Here, the imino group of the "C1-3 alkylenealkyleneimino C1-3 alkylene group" means -NH-.

The substituent on the "C2-5 alkylene group", the "C1-3 alkyleneoxy C1-3 alkylene group", the "C1-3 alkylenethio C1-3 alkylene group", and the "C1-3 alkyleneimino C1-3 alkylene group" is preferably a halogeno group such as a fluoro group, a chloro group, a bromo group, or an iodo group; a C1-6 alkyl group such as a methyl group, an ethyl group, a n-propyl group, an i-propyl group, a n-butyl group, a s-butyl group, an i-butyl group, or a t-butyl group; a methylidene group; or a C1-6 haloalkyl group such as a chloromethyl group, a chloroethyl group, a trifluoromethyl group, a 1,2-dichloro-n-propyl group, or a 1-fluoro-n-butyl group.

Specific examples of the "group represented by R^{c}R^{d}N-" can include an amino group, a methylamino group, a dimethylamino group, and an i-propylamino group.

In the "group represented by R^{c}R^{d}N-CO-" in G, R^{c} and R^{d} represent the same meaning as those in the above "group represented by R^{c}R^{d}N-".

Specific examples of the "group represented by R^{c}R^{d}N-CO-" can include a carbamoyl group, a N,N-dimethylaminocarbonyl group, a N-(i-propyl) aminocarbonyl group, and a N-(i-propyl)-N-methylaminocarbonyl group.

In the "group represented by R^{c}R^{d}N-NR^{d}-CO-" in G, R^{c} and R^{d} represent the same meaning as those in the above "group represented by R^{c}R^{d}N-".

Specific examples of the "group represented by R^{c}R^{d}N-NR^{d}-CO-" can include a 2,2-dimethylhydrazine-1-carbonyl group.

In the "group represented by R^{a}-CO-O-" in G, R^{a} represents the same meaning as that in the above "group represented by R^{a}-CO-".

Specific examples of the "group represented by R^{a}-COO-" can include an acetyloxy group.

In the "group represented by R^{a}-CO-NR^{e}-" in G, R^{a} represents the same meaning as that in the above "group represented by R^{a}-CO-".

R^{e} represents a hydrogen atom, a substituted or unsubstituted C1-6 alkyl group, a substituted or unsubstituted C1-6 alkoxy group, or a substituted or unsubstituted C6-10 aryl group.

Specific examples of the substituent in R^{e} can include the same as those exemplified for R^{a} and R^{d}.

Specific examples of the "group represented by R^{a}-CO-NR^{e}-" can include an acetylamino group, a propionylamino group, a butyrylamino group, and an i-propylcarbonylamino group.

In the "group represented by R^{a}-CO-CO-NR^{e}-" in G, R^{a} represents the same meaning as that in the above "group represented by R^{a}-CO-". R^{e} represents the same meaning as that in the above "group represented by R^{a}-CO-NR^{e}-".

Specific examples of the "group represented by R^{a}-COCO-NR^{e}-" can include an oxopropanamide group.

In the "group represented by R^{a}-CO-NR^{e}-NR^{e}-" in G, R^{a} represents the same meaning as that in the above "group represented by R^{a}-CO-". R^{e} represents the same meaning as that in the above "group represented by R^{a}-CO-NR^{e}-".

Specific examples of the "group represented by R^{a}-CO-NR^{e}-NR^{e}-" can include an acetylhydrazinyl group and an i-propylcarbonylhydrazinyl group.

In the "group represented by R^{a}-CO-NR^{e}-NR^{e}-CO-" in G, R^{a} represents the same meaning as that in the above "group represented by R^{a}-CO-". R^{e} represents the same meaning as that in the above "group represented by R^{a}-CO-NR^{e}-".

Specific examples of the "group represented by R^{a}-CO-NR^{e}-NR^{e}-CO-" can include a 2-acetylhydrazine-1-carbonyl group.

In the "group represented by R^{b}-O-CO-O-" in G, R^{b} represents the same meaning as that in the above "group represented by R^{b}-O-CO-".

Specific examples of the "group represented by R^{b}-O-CO-O-" can include a methoxycarbonyloxy group and an ethoxycarbonyloxy group.

In the "group represented by R^{b}-O-CO-NR^{e}-" in G, R^{b} represents the same meaning as that in the above "group represented by "group represented by R^{b}-O-CO-". R^{e} represents the same meaning as that in the above "group represented by R^{b}-CO-NR^{e}-".

Specific examples of the "group represented by R^{b}-O-CO-NR^{e}-" can include a methoxycarbonylamino group.

In the "group represented by R^{c}R^{d}N-CO-O-" in G, R^{c} and R^{d} represent the same meaning as those in the above "group represented by R^{c}R^{d}N-".

Specific examples of the "group represented by R^{c}R^{d}N-CO-O-" can include a carbamoyloxy group and a N,N-dimethylaminocarbonyloxy group.

In the "group represented by R^{c}R^{d}N-CO-NR^{e}-" in G, R^{c} and R^{d} represent the same meaning as those in the above "group represented by R^{c}R^{d}N-". R^{e} represents the same meaning as that in the above "group represented by R^{a}-CO-NR^{e}-".

Specific examples of the "group represented by R^{c}R^{d}N-CO-NR^{e}-" can include a carbamoylamino group and a N,N-dimethylaminocarbonylamino group.

In the "group represented by R^{c}R^{d}N-CO-CO-NR^{e}-" in G, R^{c} and R^{d} represent the same meaning as those in the above "group represented by R^{c}R^{d}N-". R^{e} represents the same meaning as that in the above "group represented by R^{a}-CO-NR^{e}-".

Specific examples of the "group represented by R^{c}R^{d}N-CO-CO-NR^{e}-" can include a 2-(methylamino)-2-oxoacetamide group and a 2-(t-butylamino)-2-oxoacetamide group.

In the "group represented by R^{a}-CS-NR^{e}-" in G, R^{a} represents the same meaning as that in the above "group represented by R^{a}-CO-". R^{e} represents the same meaning as that in the above "group represented by R^{a}-CO-NR^{e}-".

Specific examples of the "group represented by R^{a}-CS-NR^{e}-" can include an ethanethioamide group, a propanethioamide group, and a 2-methylpropanethioamide group.

In the "group represented by R^{c}R^{d}N-CS-NR^{e}-" in G, R^{c} and R^{d} represent the same meaning as those in the above "group represented by R^{c}R^{d}N-". R^{e} represents the same meaning as that in the above "group represented by R^{a}-CO-NR^{e}-".

Specific examples of the "group represented by R^{c}R^{d}N-CS-NR^{e}-" can include a 3,3-dimethylthioureido group.

In the "group represented by R^{b}SO₂-NR^{e}-" in G, R^{b} represents the same meaning as that in the above "group represented by "group represented by R^{b}-O-CO-". R^{e} represents the same meaning as that in the above "group represented by R^{a}-CO-NR^{e}-".

Specific examples of the "group represented by R^{b}SO₂-NR^{e}-" can include a methanesulfonylamino group.

In the "group represented by R^{c}R^{d}N-SO₂-" in G, R^{c} and R^{d} represent the same meaning as those in the above "group represented by R^{c}R^{d}N-".

Specific examples of the "group represented by R^{c}R^{d}N-SO₂-" can include a N,N-dimethylaminosulfonyl group.

In the "group represented by R^{a}O-N=CR^{f}-" in G, R^{a} represents the same meaning as that in the above "group represented by R^{a}-CO-".

R^{f} represents a hydrogen atom, an amino group, or a substituted or unsubstituted C1-6 alkyl group.

Specific examples of the substituent in R^{f} can include the same as those exemplified for R^{a}.

Specific examples of the "group represented by R^{a}ON=CR^{f}-" can include a (hydroxyimino)methyl group and an (ethoxyimino)methyl group.

In the "group represented by R^{a}-C(=NR^{g})-NR^{e}-" in G, R^{a} represents the same meaning as that in the above "group represented by R^{a}-CO-". R^{e} represents the same meaning as that in the above "group represented by R^{a}-CO-NR^{e}-".

Each R^{g} independently represents a hydrogen atom, a substituted or unsubstituted C1-6 alkyl group, or a substituted or unsubstituted C6-10 aryl group.

Specific examples of the substituent in R^{g} can include the same as those exemplified for R^{a}.

In the "group represented by R^{c}R^{d}N-C(=NR^{g})-" in G, R^{c} and R^{d} represent the same meaning as those in the above "group represented by R^{c}R^{d}N-". R^{g} represents the same meaning as that in the above "group represented by R^{a}-C(=NR^{g})-NR^{e}-".

In the "group represented by R^{h}RⁱS(=O)=N-CO-" in G, each R^{h} independently represents a substituted or unsubstituted C1-6 alkyl group or a substituted or unsubstituted C6-10 aryl group, and each Rⁱ independently represents a substituted or unsubstituted C1-6 alkyl group or a substituted or unsubstituted C6-10 aryl group.

Specific examples of the substituent in R^{h} or Rⁱ can include the same as those exemplified for R^{a}.

Here, R^{h} and Rⁱ optionally form together a divalent organic group.

Examples of the divalent organic group that can be formed can include a substituted or unsubstituted C2-5 alkylene group or a substituted or unsubstituted C1-3 alkyleneoxy C1-3 alkylene group.

Examples of the "C2-5 alkylene group" can include a dimethylene group, a trimethylene group, and a tetramethylene group.

Examples of the "C1-3 alkyleneoxy C1-3 alkylene group" can include a dimethyleneoxydimethylene group.

The substituent on the "C2-5 alkylene group" or the "C1-3 alkyleneoxy C1-3 alkylene group" is preferably a halogeno group such as a fluoro group, a chloro group, a bromo group, or an iodo group; a C1-6 alkyl group such as a methyl group, an ethyl group, a n-propyl group, an i-propyl group, a n-butyl group, a s-butyl group, an i-butyl group, or a t-butyl group; or a C1-6 haloalkyl group such as a chloromethyl group, a chloroethyl group, a trifluoromethyl group, a 1,2-dichloro-n-propyl group, or a 1-fluoro-n-butyl group.

In the "group represented by R^{h}RⁱS=N-CO-" in G, R^{h} or Rⁱ represents the same meaning as those in the above "group represented by R^{h}RⁱS(=O)=N-CO-".

In the "group represented by R^{h}RⁱC=N-O-" in G, R^{h} and Rⁱ represent the same meaning as those in the above "group represented by R^{h}RⁱS=N-O-".

Specific examples of the "group represented by R^{h}RⁱC=N-O-" can include a (propan-2-ylidenamino)oxy group.

When two or more substituents (G) are present, examples of a divalent organic group that can be formed together by two of the substituents can include a substituted or unsubstituted C1-5 alkylene group, a substituted or unsubstituted oxy C1-4 alkylene group, a substituted or unsubstituted oxy C2-3 alkyleneoxy group, or a substituted or unsubstituted C1-3 alkyleneoxy C1-3 alkylene group.

Examples of the "C1-5 alkylene group" can include a methylene group, a dimethylene group, a trimethylene group, and a tetramethylene group.

Examples of the "oxy C1-4 alkylene group" can include an oxymethylene group and an oxydimethylene group.

Examples of the "oxy C2-3 alkyleneoxy group" can include an oxydimethyleneoxy group.

Examples of the "C1-3 alkyleneoxy C1-3 alkylene group" can include a dimethyleneoxydimethylene group.

The substituent on the "C1-5 alkylene group", the "oxy C1-4 alkylene group", the "oxy C2-3 alkyleneoxy group", and the "C1-3 alkyleneoxy C1-3 alkylene group" is preferably a halogeno group such as a fluoro group, a chloro group, a bromo group, or an iodo group; a C1-6 alkyl group such as a methyl group, an ethyl group, a n-propyl group, an i-propyl group, a n-butyl group, a s-butyl group, an i-butyl group, or a t-butyl group; or a C1-6 haloalkyl group such as a chloromethyl group, a chloroethyl group, a trifluoromethyl group, a 1,2-dichloro-n-propyl group, or a 1-fluoro-n-butyl group.

In the present invention, examples of preferred G can include a halogeno group, a substituted or unsubstituted C1-6 alkyl group, a substituted or unsubstituted C1-6 alkoxy group, a substituted or unsubstituted C1-6 alkylthio group, a substituted or unsubstituted C1-6 alkylsulfinyl group, a substituted or unsubstituted C1-6 alkylsulfonyl group, a substituted or unsubstituted C3-6 cycloalkyl group, a substituted or unsubstituted C6-10 aryl group, a substituted or unsubstituted 3 to 10-membered ring heterocyclyl group, a group represented by R^{b}-O-CO-, a group represented by R^{c}R^{d}N-, a group represented by R^{c}R^{d}N-CO-, a group represented by R^{a}-CO-O-, a group represented by R^{a}-CO-NR^{e}-, a group represented by R^{b}-O-CO-NR^{e}-, a group represented by R^{c}R^{d}N-CO-O-, a group represented by R^{c}R^{d}N-CO-NR^{e}-, a group represented by R^{c}R^{d}N-CS-NR^{e}-, a group represented by R^{b}SO₂-NR^{e}-, a group represented by R^{a}O-N=CR^{f}-, or a group represented by R^{h}RⁱC=N-O-.

### [A]

A represents a substituted or unsubstituted C1-6 alkylene group.

Examples of the "C1-6 alkylene group" in A can include a methylene group, a dimethylene group, a trimethylene group, and a tetramethylene group.

Examples of a substituent on the C1-6 alkylene group can include one or more substituents selected from a group of substituents below (hereinbelow, this substituent may be denoted by a symbol "Ga".).

When two or more substituents (Ga) are present, two of the substituents optionally form together a divalent organic group. The group of substituents is shown below:
a halogeno group, a substituted or unsubstituted C1-6 alkyl group, a substituted or unsubstituted C2-6 alkenyl group, a substituted or unsubstituted C2-6 alkynyl group, a hydroxy group, a substituted or unsubstituted C1-6 alkoxy group, a substituted or unsubstituted C2-6 alkenyloxy group, a substituted or unsubstituted C2-6 alkynyloxy group, a substituted or unsubstituted C3-6 cycloalkyloxy group, a nitro group, a cyano group, a group represented by R^{a1}-COO-, a group represented by R^{b1}-O-CO-, a group represented by R^{b1}-O-CO-O-, a group represented by R^{c1}R^{d1}N-CO-O-, a group represented by R^{g1}R^{h1}C=N-O-, an oxo group (O=), and a divalent group represented by R^{a1}O-N=.

In the group of the substituents described above, each R^{a1} independently represents a hydrogen atom, a substituted or unsubstituted C1-6 alkyl group, a substituted or unsubstituted C2-6 alkenyl group, a substituted or unsubstituted C2-6 alkynyl group, a substituted or unsubstituted C3-6 cycloalkyl group, a substituted or unsubstituted C6-10 aryl group, or a substituted or unsubstituted 5 to 6-membered ring heterocyclyl group,
each R^{b1} independently represents a substituted or unsubstituted C1-6 alkyl group, a substituted or unsubstituted C2-6 alkenyl group, a substituted or unsubstituted C2-6 alkynyl group, a substituted or unsubstituted C3-6 cycloalkyl group, a substituted or unsubstituted C6-10 aryl group, or a substituted or unsubstituted 5 to 6-membered ring heterocyclyl group,
each R^{c1} independently represents a hydrogen atom, a substituted or unsubstituted C1-6 alkyl group, a substituted or unsubstituted C2-6 alkenyl group, a substituted or unsubstituted C2-6 alkynyl group, a substituted or unsubstituted C3-6 cycloalkyl group, a substituted or unsubstituted C6-10 aryl group, or a substituted or unsubstituted 5 to 6-membered ring heterocyclyl group, and
each R^{d1} independently represents a hydrogen atom, a substituted or unsubstituted C1-6 alkyl group, or a substituted or unsubstituted C6-10 aryl group, where R^{c1} and R^{d1} optionally form together a divalent organic group.
R^{g1} represents a substituted or unsubstituted C1-6 alkyl group, a substituted or unsubstituted C2-6 alkenyl group, a substituted or unsubstituted C2-6 alkynyl group, a substituted or unsubstituted C3-6 cycloalkyl group, a substituted or unsubstituted C6-10 aryl group, or a substituted or unsubstituted 5 to 6-membered ring heterocyclyl group, and
R^{h1} represents a hydrogen atom or a substituted or unsubstituted C1-6 alkyl group, where R^{g1} and R^{h1} optionally form together a divalent organic group.

Examples of the "halogeno group" in Ga can include a fluoro group, a chloro group, a bromo group, and an iodo group.

The "C1-6 alkyl group" in Ga may be a linear chain or may be a branched chain. Examples of the "C1-6 alkyl group" in Ga can include a methyl group, an ethyl group, a n-propyl group, a n-butyl group, a n-pentyl group, a n-hexyl group, an i-propyl group, an i-butyl group, a s-butyl group, a t-butyl group, an i-pentyl group, a neopentyl group, a 2-methylbutyl group, and an i-hexyl group.

Examples of the "C2-6 alkenyl group" in Ga can include a vinyl group, a 1-propenyl group, a 2-propenyl group, a 1-butenyl group, a 2-butenyl group, a 3-butenyl group, a 1-methyl-2-propenyl group, a 2-methyl-2-propenyl group, a 1-pentenyl group, a 2-pentenyl group, a 3-pentenyl group, a 4-pentenyl group, a 1-methyl-2-butenyl group, a 2-methyl-2-butenyl group, a 1-hexenyl group, a 2-hexenyl group, a 3-hexenyl group, a 4-hexenyl group, and a 5-hexenyl group.

Examples of the "C2-6 alkynyl group" in Ga can include an ethynyl group, a 1-propynyl group, a 2-propynyl group, a 1-butynyl group, a 2-butynyl group, a 3-butynyl group, a 1-methyl-2-propynyl group, a 2-methyl-3-butynyl group, a 1-pentynyl group, a 2-pentynyl group, a 3-pentynyl group, a 4-pentynyl group, a 1-methyl-2-butynyl group, a 2-methyl-3-pentynyl group, a 1-hexynyl group, and a 1,1-dimethyl-2-butynyl group.

Examples of the "C1-6 alkoxy group" in Ga can include a methoxy group, an ethoxy group, a n-propoxy group, a n-butoxy group, a n-pentyloxy group, a n-hexyloxy group, an i-propoxy group, an i-butoxy group, a s-butoxy group, a t-butoxy group, and an i-hexyloxy group.

Examples of the "C2-6 alkenyloxy group" in Ga can include a vinyloxy group, an allyloxy group, a propenyloxy group, and a butenyloxy group.

Examples of the "C2-6 alkynyloxy group" in Ga can include an ethynyloxy group and a propargyloxy group.

The substituent on the "C1-6 alkyl group", the "C2-6 alkenyl group", the "C2-6 alkynyl group", the "C1-6 alkoxy group", the "C2-6 alkenyloxy group", or the "C2-6 alkynyloxy group" in Ga is preferably a halogeno group such as a fluoro group, a chloro group, a bromo group, or an iodo group; a hydroxy group; a C1-6 alkoxy group such as a methoxy group, an ethoxy group, a n-propoxy group, an i-propoxy group, a n-butoxy group, a s-butoxy group, an i-butoxy group, or a t-butoxy group; a C1-6 haloalkoxy group such as a 2-chloro-n-propoxy group, a 2,3-dichlorobutoxy group, or a trifluoromethoxy group; a C3-6 cycloalkyl group such as a cyclopropyl group, a cyclobutyl group, a cyclopentyl group, or a cyclohexyl group; a C6-10 aryl group such as a phenyl group and a naphthyl group; a C6-10 aryl group substituted with any one or more substituents of a C1-6 alkyl group, a C1-6 alkoxy group, a halogeno group, a C1-6 haloalkyl group, or a C1-6 haloalkoxy group, such as a 4-methylphenyl group, a 4-methoxyphenyl group, a 4-chlorophenyl group, a 4-trifluoromethylphenyl group, or a 4-trifluoromethoxyphenyl group; or a cyano group.

Examples of the "C3-6 cycloalkyloxy group" in Ga can include a cyclopropyloxy group, a cyclobutyloxy group, a cyclopentyloxy group, and a cyclohexyloxy group.

The substituent on the "C3-6 cycloalkyloxy group" in Ga is preferably a halogeno group such as a fluoro group, a chloro group, a bromo group, or an iodo group; a C1-6 alkyl group such as a methyl group, an ethyl group, a n-propyl group, an i-propyl group, a n-butyl group, a s-butyl group, an i-butyl group, a t-butyl group, a n-pentyl group, or a n-hexyl group; a C1-6 haloalkyl group such as a chloromethyl group, a chloroethyl group, a trifluoromethyl group, a 1,2-dichloro-n-propyl group, or a 1-fluoro-n-butyl group; a hydroxy group; a C1-6 alkoxy group such as a methoxy group, an ethoxy group, a n-propoxy group, an i-propoxy group, a n-butoxy group, a s-butoxy group, an i-butoxy group, or a t-butoxy group; a C1-6 haloalkoxy group such as a 2-chloro-n-propoxy group, a 2,3-dichlorobutoxy group, or a trifluoromethoxy group; a C6-10 aryl group such as a phenyl group or a naphthyl group; a C6-10 aryl group substituted with any one or more substituents of a C1-6 alkyl group, a C1-6 alkoxy group, a halogeno group, a C1-6 haloalkyl group, or a C1-6 haloalkoxy group, such as a 4-methylphenyl group, a 4-methoxyphenyl group, a 4-chlorophenyl group, a 4-trifluoromethylphenyl group, or a 4-trifluoromethoxyphenyl group; or a cyano group.

In the "group represented by R^{a1}-CO-O-" in Ga, R^{a1} represents a hydrogen atom, a substituted or unsubstituted C1-6 alkyl group, a substituted or unsubstituted C2-6 alkenyl group, a substituted or unsubstituted C2-6 alkynyl group, a substituted or unsubstituted C3-6 cycloalkyl group, a substituted or unsubstituted C6-10 aryl group, or a substituted or unsubstituted 5 to 6-membered ring heterocyclyl group.

Examples of the "C1-6 alkyl group" in R^{a1} can include a methyl group, an ethyl group, a n-propyl group, a n-butyl group, a n-pentyl group, a n-hexyl group, an i-propyl group, an i-butyl group, a s-butyl group, a t-butyl group, an i-pentyl group, a neopentyl group, a 2-methylbutyl group, and an i-hexyl group.

Examples of the "C2-6 alkenyl group" in R^{a1} can include a vinyl group and 1-propenyl group.

Examples of the "C2-6 alkynyl group" in R^{a1} can include an ethynyl group and a 1-propynyl group.

The substituent on the "C1-6 alkyl group", the "C2-6 alkenyl group", or the "C2-6 alkynyl group" in R^{a1} is preferably a halogeno group such as a fluoro group, a chloro group, a bromo group, or an iodo group; a hydroxy group; a C1-6 alkoxy group such as a methoxy group, an ethoxy group, a n-propoxy group, an i-propoxy group, a n-butoxy group, a s-butoxy group, an i-butoxy group, or a t-butoxy group; a C1-6 haloalkoxy group such as a 2-chloro-n-propoxy group, a 2,3-dichlorobutoxy group, or a trifluoromethoxy group; a C3-6 cycloalkyl group such as a cyclopropyl group, a cyclobutyl group, or a cyclopentyl group, cyclohexyl group; a C6-10 aryl group such as a phenyl group or a naphthyl group; a C6-10 aryl group substituted with any one or more substituents of a halogeno group, a C1-6 haloalkyl group, or a C1-6 haloalkoxy group, such as a 4-chlorophenyl group, a 4-trifluoromethylphenyl group, or a 4-trifluoromethoxyphenyl group; or a cyano group.

Examples of the "C3-6 cycloalkyl group" in R^{a1} can include a cyclopropyl group, a cyclobutyl group, a cyclopentyl group, and a cyclohexyl group.

Examples of the "C6-10 aryl group" in R^{a1} can include a phenyl group and a naphthyl group.

The "5 to 6-membered ring heterocyclyl group" in R^{a1} is a group including 1, 2, 3, or 4 hetero atoms selected from the group consisting of a nitrogen atom, an oxygen atom, and a sulfur atom as a constituent atom(s) of the ring. When two or more hetero atoms are included, the hetero atoms may be the same or different. Examples of the "5 to 6-membered ring heterocyclyl group" can include a 5 to 6-membered ring saturated heterocyclyl group, a 5 to 6-membered ring heteroaryl group, and a 5 to 6-membered ring partially unsaturated heterocyclyl group.

Examples of the 5 to 6-membered ring saturated heterocyclyl group can include a pyrrolidinyl group, a tetrahydrofuranyl group, a thiazolidinyl group, a tetrahydro-2H-pyranyl group, a piperidyl group, a piperazinyl group, a morpholinyl group, a dioxolanyl group, and a dioxanyl group.

Examples of the 5 to 6-membered ring heteroaryl group can include a 5-membered ring heteroaryl group such as a pyrrolyl group, a furyl group, a thienyl group, an imidazolyl group, a pyrazolyl group, an oxazolyl group, an isoxazolyl group, a thiazolyl group, an isothiazolyl group, a triazolyl group, an oxadiazolyl group, a thiadiazolyl group, and a tetrazolyl group; and a 6-membered ring heteroaryl group such as a pyridyl group, a pyrazinyl group, a pyrimidinyl group, a pyridazinyl group, and a triazinyl group.

Examples of the 5 to 6-membered ring partially unsaturated heterocyclyl group can include a 5-membered ring partially unsaturated heterocyclyl group such as a pyrrolinyl group, a dihydrofuranyl group, an imidazolinyl group, a pyrazolinyl group, an oxazolinyl group, and an isoxazolinyl group; and a 6-membered ring partially unsaturated heterocyclyl group such as a dihydropyranyl group.

The substituent on the "C3-6 cycloalkyl group", the "C6-10 aryl group", or the "5 to 6-membered ring heterocyclyl group" in R^{a1} is preferably a halogeno group such as a fluoro group, a chloro group, a bromo group, or an iodo group; a C1-6 alkyl group such as a methyl group, an ethyl group, a n-propyl group, an i-propyl group, a n-butyl group, a s-butyl group, an i-butyl group, a t-butyl group, a n-pentyl group, or a n-hexyl group; a C1-6 haloalkyl group such as a chloromethyl group, a chloroethyl group, a trifluoromethyl group, a 1,2-dichloro-n-propyl group, or a 1-fluoro-n-butyl group; a hydroxy group; a C1-6 alkoxy group such as a methoxy group, an ethoxy group, a n-propoxy group, an i-propoxy group, a n-butoxy group, a s-butoxy group, an i-butoxy group, or a t-butoxy group; a C1-6 haloalkoxy group such as a 2-chloro-n-propoxy group, a 2,3-dichlorobutoxy group, or a trifluoromethoxy group; a C6-10 aryl group such as a phenyl group or a naphthyl group; a C6-10 aryl group substituted with any one or more substituents of a C1-6 alkyl group, a C1-6 alkoxy group, a halogeno group, a C1-6 haloalkyl group, or a C1-6 haloalkoxy group, such as a 4-methylphenyl group, a 4-methoxyphenyl group, a 4-chlorophenyl group, a 4-trifluoromethylphenyl group, or a 4-trifluoromethoxyphenyl group; or a cyano group.

Specific examples of the "group represented by R^{a1}-CO-O-" can include an acetyloxy group.

In the "group represented by R^{b1}-O-CO-" in Ga, R^{b1} represents a substituted or unsubstituted C1-6 alkyl group, a substituted or unsubstituted C2-6 alkenyl group, a substituted or unsubstituted C2-6 alkynyl group, a substituted or unsubstituted C3-6 cycloalkyl group, a substituted or unsubstituted C6-10 aryl group, or a substituted or unsubstituted 5 to 6-membered ring heterocyclyl group.

Specific examples of the substituent in R^{b1} can include those exemplified for R^{a1}.

As the "group represented by R^{b1}-O-CO-", a methoxycarbonyl group, an ethoxycarbonyl group, a t-butoxycarbonyl group, or the like may be specifically exemplified.

In the "group represented by R^{b1}-O-CO-O-" in Ga, R^{b1} represents the same meaning as that in the above "group represented by R^{b1}-O-CO-".

Specific examples of the "group represented by R^{b1}-O-CO-O-" can include a methoxycarbonyloxy group and an ethoxycarbonyloxy group.

In the "group represented by R^{c1}R^{d1}N-CO-O-" in Ga, R^{c1} and R^{d1} represent the same meaning as those in the above "group represented by R^{c1}R^{d1}N-".

Specific examples of the "group represented by R^{c1}R^{d1}N-CO-O-" can include a carbamoyloxy group and a N,N-dimethylaminocarbonyloxy group.

In the "group represented by R^{g1}R^{h1}C=N-O-" in Ga, R^{g1} represents a substituted or unsubstituted C1-6 alkyl group, a substituted or unsubstituted C2-6 alkenyl group, a substituted or unsubstituted C2-6 alkynyl group, a substituted or unsubstituted C3-6 cycloalkyl group, a substituted or unsubstituted C6-10 aryl group, or a substituted or unsubstituted 5 to 6-membered ring heterocyclyl group, and R^{h1} represents a hydrogen atom or a substituted or unsubstituted C1-6 alkyl group.

Specific examples of the substituent in R^{g1} or R^{h1} can include the same as those exemplified for R^{a1}.

Here, R^{g1} and R^{h1} optionally form together a divalent organic group.

Examples of the divalent organic group that can be formed can include a substituted or unsubstituted C2-5 alkylene group or a substituted or unsubstituted C1-3 alkyleneoxy C1-3 alkylene group.

Examples of the "C2-5 alkylene group" can include a dimethylene group, a trimethylene group, and a tetramethylene group.

Examples of the "C1-3 alkyleneoxy C1-3 alkylene group" can include a dimethyleneoxydimethylene group.

The substituent on the "C2-5 alkylene group" or the "C1-3 alkyleneoxy C1-3 alkylene group" is preferably a halogeno group such as a fluoro group, a chloro group, a bromo group, or an iodo group; a C1-6 alkyl group such as a methyl group, an ethyl group, a n-propyl group, an i-propyl group, a n-butyl group, a s-butyl group, an i-butyl group, or a t-butyl group; or a C1-6 haloalkyl group such as a chloromethyl group, a chloroethyl group, a trifluoromethyl group, a 1,2-dichloro-n-propyl group, or a 1-fluoro-n-butyl group.

Specific examples of the "group represented by R^{g1}R^{h1}C=N-O-" can include a (propan-2-ylidenamino)oxy group.

In the "divalent group represented by R^{a1}O-N=" in Ga, R^{a1} represents the same meaning as that in the above "group represented by R^{a1}-CO-".

Specific examples of the "divalent group represented by R^{a1}O-N=" can include a N-hydroxyimino group and a N-methoxyimino group.

When two or more substituents (Ga) are present, examples of a divalent organic group that can be formed together by two of the substituents can include a substituted or unsubstituted C1-5 alkylene group, a substituted or unsubstituted oxy C1-4 alkylene group, a substituted or unsubstituted oxy C2-3 alkyleneoxy group, or a substituted or unsubstituted C1-3 alkyleneoxy C1-3 alkylene group.

Examples of the "C1-5 alkylene group" can include a methylene group, a dimethylene group, a trimethylene group, and a tetramethylene group.

Examples of the "oxy C1-4 alkylene group" can include an oxymethylene group and an oxydimethylene group.

Examples of the "oxy C2-3 alkyleneoxy group" can include an oxydimethyleneoxy group.

Examples of the "C1-3 alkyleneoxy C1-3 alkylene group" can include a dimethyleneoxydimethylene group.

The substituent on the "C1-5 alkylene group", the "oxy C1-4 alkylene group", the "oxy C2-3 alkyleneoxy group", or the "C1-3 alkyleneoxy C1-3 alkylene group" is preferably a halogeno group such as a fluoro group, a chloro group, a bromo group, or an iodo group; a C1-6 alkyl group such as a methyl group, an ethyl group, a n-propyl group, an i-propyl group, a n-butyl group, a s-butyl group, an i-butyl group, or a t-butyl group; or a C1-6 haloalkyl group such as a chloromethyl group, a chloroethyl group, a trifluoromethyl group, a 1,2-dichloro-n-propyl group, or a 1-fluoro-n-butyl group.

In the present invention, as preferred Ga, a hydroxy group, a substituted or unsubstituted C1-6 alkoxy group, a substituted or unsubstituted C2-6 alkenyloxy group, a substituted or unsubstituted C2-6 alkynyloxy group, a group represented by R^{a1}-CO-O-, an oxo group (O=), a divalent group represented by R^{a1}O-N=, or the like may be exemplified.

### [Q]

Q represents a substituted or unsubstituted C6-10 aryl group or a substituted or unsubstituted 5 to 10-membered ring heterocyclyl group.

As the "C6-10 aryl group" in Q, a phenyl group, a naphthyl group, an indenyl group, an indanyl group, a tetralinyl group, or the like may be exemplified.

The "5 to 10-membered ring heterocyclyl group" in Q is a group including 1, 2, 3, or 4 hetero atoms selected from the group consisting of a nitrogen atom, an oxygen atom, and a sulfur atom as a constituent atom(s) of the ring. When two or more hetero atoms are included, the hetero atoms may be the same or different. The group may be either monocyclic or polycyclic.

Examples of the "5 to 10-membered ring heterocyclyl group" can include a 5 to 6-membered ring saturated heterocyclyl group, a 5 to 10-membered ring heteroaryl group, and a 5 to 10-membered ring partially unsaturated heterocyclyl group.

As the "5 to 6-membered ring saturated heterocyclyl group", a pyrrolidinyl group, a tetrahydrofuranyl group, a thiazolidinyl group, a tetrahydro-2H-pyranyl group, a piperidyl group, a piperazinyl group, a morpholinyl group, a dioxolanyl group, a dioxanyl group, or the like may be exemplified.

As the "5 to 10-membered ring heteroaryl group", a 5-membered ring heteroaryl group such as a pyrrolyl group, a furyl group, a thienyl group, an imidazolyl group, a pyrazolyl group, an oxazolyl group, an isoxazolyl group, a thiazolyl group, an isothiazolyl group, a triazolyl group, an oxadiazolyl group, a thiadiazolyl group, and a tetrazolyl group; a 6-membered ring heteroaryl group such as a pyridyl group, a pyrazinyl group, a pyrimidinyl group, a pyridazinyl group, and a triazinyl group; a 9-membered heteroaryl group such as an indolyl group, an isoindolyl group, a benzofuranyl group, a benzothienyl group, an indazolyl group, a benzimidazolyl group, a benzoxazolyl group, a benzisoxazolyl group, a benzothiazolyl group, and a benzisothiazolyl group; a 10-membered heteroaryl group such as a quinolinyl group, an isoquinolinyl group, a cinnolinyl group, a phthalazinyl group, a quinazolinyl group, and a quinoxalinyl group; or the like may be exemplified.

As the "5 to 10-membered ring partially unsaturated heterocyclyl group", a 5-membered ring partially unsaturated heterocyclyl group such as a pyrrolinyl group, a dihydrofuranyl group, an imidazolinyl group, a pyrazolinyl group, an oxazolinyl group, and an isoxazolinyl group; 6-membered ring partially unsaturated heterocyclyl group such as a dihydropyranyl group; a 9-membered ring partially unsaturated heterocyclyl group such as an indolinyl group, an isoindolinyl group, a 2,3-dihydrobenzofuranyl group, and a 1,3-dihydrobenzofuranyl group; a 10-membered ring partially unsaturated heterocyclyl group such as a 1,2,3,4-tetrahydroquinolinyl group; or the like may be exemplified.

The substituent on the "C6-10 aryl group" or the "5 to 10-membered ring heterocyclyl group" in Q is preferably a halogeno group such as a fluoro group, a chloro group, a bromo group, or an iodo group; a C1-6 alkyl group such as a methyl group, an ethyl group, a n-propyl group, an i-propyl group, a n-butyl group, a s-butyl group, an i-butyl group, a t-butyl group, a n-pentyl group, or a n-hexyl group; a C2-6 alkenyl group such as a vinyl group; a C2-6 alkynyl group such as an ethynyl group; a C1-6 haloalkyl group such as a chloromethyl group, a chloroethyl group, a trifluoromethyl group, a 1,2-dichloro-n-propyl group, or a 1-fluoro-n-butyl group; a C1-6 alkoxy C1-6 alkyl group such as a methoxymethyl group; a hydroxy group; a C1-6 alkoxy group such as a methoxy group, an ethoxy group, a n-propoxy group, an i-propoxy group, a n-butoxy group, a s-butoxy group, an i-butoxy group, or a t-butoxy group; a hydroxy C1-6 alkoxy group such as a hydroxyethoxy group; a C1-6 alkoxyalkoxy group such as a methoxymethoxy group or a methoxyethoxy group; a tri C1-6 alkyl-substituted silyloxy C1-6 alkoxy group such as a trimethylsilyloxyethoxy group or a t-butyl dimethylsilyloxyethoxy group; a C1-6 haloalkoxy group such as a 2-chloro-n-propoxy group, a 2,3-dichlorobutoxy group, or a trifluoromethoxy group; a C3-6 cycloalkyl C1-6 alkoxy group; a C6-10 aryl C1-6 alkoxy group; a (C6-10 aryl substituted with any one or more substituents of a C1-6 alkyl group, a C1-6 alkoxy group, a halogeno group, a C1-6 haloalkyl group, or a C1-6 haloalkoxy group) C1-6 alkoxy group; a 5-membered ring heteroaryl C1-6 alkoxy group; a (5-membered ring heteroaryl substituted with any one or more substituents of a C1-6 alkyl group, a C1-6 alkoxy group, a halogeno group, a C1-6 haloalkyl group, or a C1-6 haloalkoxy group) C1-6 alkoxy group; 6-membered ring heteroaryl C1-6 alkoxy group; a (6-membered ring heteroaryl substituted with any one or more substituents of a C1-6 alkyl group, a C1-6 alkoxy group, a halogeno group, a C1-6 haloalkyl group, or a C1-6 haloalkoxy group) C1-6 alkoxy group; a C1-6 alkylthio group such as a methylthio group or an ethylthio group; a C1-6 alkylsulfinyl group such as a methylsulfinyl group or an ethylsulfinyl group; a C1-6 alkylsulfonyl group such as a methylsulfonyl group or an ethylsulfonyl group; a C1-6 haloalkylthio group such as a trifluoromethylthio group or a 2,2,2-trifluoroethylthio group: a C1-6 haloalkylsulfinyl group such as a trifluoromethylsulfinyl group or a 2,2,2-trifluoroethylsulfinyl group; a C1-6 haloalkylsulfonyl group such as a trifluoromethylsulfonyl group or a 2,2,2-trifluoroethylsulfonyl group; a C3-6 cycloalkyl group such as a cyclopropyl group, a cyclobutyl group, or a cyclopentyl group; a C3-6 cycloalkyl group substituted with any one or more substituents of a C1-6 alkyl group, a C1-6 alkoxy group, a halogeno group, a C1-6 haloalkyl group, a C1-6 haloalkoxy group, or a cyano group; a C3-6 cycloalkenyl group such as a cyclopropenyl group, a cyclobutenyl group, or a cyclopentenyl group; a C6-10 aryl group such as a phenyl group or a naphthyl group; a C6-10 aryl group substituted with any one or more substituents of a C1-6 alkyl group, a C1-6 alkoxy group, a halogeno group, a C1-6 haloalkyl group, or a C1-6 haloalkoxy group, such as a 4-methylphenyl group, a 4-methoxyphenyl group, a 4-chlorophenyl group, a 4-fluorophenyl group, a 4-trifluoromethylphenyl group, or a 4-trifluoromethoxyphenyl group; a 3 to 4-membered ring saturated heterocyclyl group such as an aziridinyl group, an epoxy group, an azetidinyl group, or an oxetanyl group; a 3 to 4-membered ring saturated heterocyclyl group substituted with any one or more substituents of a C1-6 alkyl group, a C1-6 alkoxy group, a halogeno group, a C1-6 haloalkyl group, or a C1-6 haloalkoxy group; a 5 to 6-membered ring saturated heterocyclyl group such as a pyrrolidinyl group, a tetrahydrofuranyl group, a thiazolidinyl group, a tetrahydro-2H-pyranyl group, a piperidyl group, a piperazinyl group, a morpholinyl group, a dioxolanyl group, or a dioxanyl group; a 5 to 6-membered ring saturated heterocyclyl group substituted with any one or more substituents of a C1-6 alkyl group, a C1-6 alkoxy group, a halogeno group, a C1-6 haloalkyl group, or a C1-6 haloalkoxy group; a 5-membered ring heteroaryl group such as a pyrrolyl group, a furyl group, a thienyl group, an imidazolyl group, a pyrazolyl group, an oxazolyl group, an isoxazolyl group, a thiazolyl group, an isothiazolyl group, a triazolyl group, an oxadiazolyl group, a thiadiazolyl group, or a tetrazolyl group; a 5-membered ring heteroaryl group substituted with any one or more substituents of a C1-6 alkyl group, a C1-6 alkoxy group, a halogeno group, a C1-6 haloalkyl group, or a C1-6 haloalkoxy group; a 6-membered ring heteroaryl group such as a pyridyl group, a pyrazinyl group, a pyrimidinyl group, a pyridazinyl group, or a triazinyl group; a 6-membered ring heteroaryl group substituted with any one or more substituents of a C1-6 alkyl group, a C1-6 alkoxy group, a halogeno group, a C1-6 haloalkyl group, or a C1-6 haloalkoxy group; a 5-membered ring partially unsaturated heterocyclyl group such as a pyrrolinyl group, a dihydrofuranyl group, an imidazolinyl group, a pyrazolinyl group, an oxazolinyl group, or an isoxazolinyl group; a 5-membered ring partially saturated heterocyclyl group substituted with any one or more substituents of a C1-6 alkyl group, a C1-6 alkoxy group, a halogeno group, a C1-6 haloalkyl group, or a C1-6 haloalkoxy group; a 6-membered ring partially unsaturated heterocyclyl group such as a dihydropyranyl group; a 6-membered ring partially saturated heterocyclyl group substituted with any one or more substituents of a C1-6 alkyl group, a C1-6 alkoxy group, a halogeno group, a C1-6 haloalkyl group, or a C1-6 haloalkoxy group;
a group represented by R^{Q1}-CO- (wherein, R^{Q1} represents a hydrogen atom; a C1-6 alkyl group; a C1-6 alkyl group substituted with any one or more substituents of a halogeno group, a C1-6 alkoxy group, a C1-6 haloalkoxy group, a C3-6 cycloalkyl group, a phenyl group, or a 5 to 6-membered ring heteroaryl group; a (C6-10 aryl substituted with any one or more substituents of a C1-6 alkyl group, a C1-6 alkoxy group, a halogeno group, a C1-6 haloalkyl group, or a C1-6 haloalkoxy group) C1-6 alkyl group; a (5 to 6-membered ring heteroaryl substituted with any one or more substituents of a C1-6 alkyl group, a C1-6 alkoxy group, a halogeno group, a C1-6 haloalkyl group, or a C1-6 haloalkoxy group) C1-6 alkyl group; a C2-6 alkenyl group; a C2-6 haloalkenyl group; a C2-6 alkynyl group; a C2-6 haloalkynyl group; a C3-6 cycloalkyl group; a C3-6 cycloalkyl group substituted with any one or more substituents of a C1-6 alkyl group, a C1-6 alkoxy group, a halogeno group, a C1-6 haloalkyl group, a C1-6 haloalkoxy group, or a cyano group; a C6-10 aryl group; a C6-10 aryl group substituted with any one or more substituents of a C1-6 alkyl group, a C1-6 alkoxy group, a halogeno group, a C1-6 haloalkyl group, or a C1-6 haloalkoxy group; a 5 to 6-membered ring heteroaryl group; or a 5 to 6-membered ring heteroaryl group substituted with any one or more substituents of a C1-6 alkyl group, a C1-6 alkoxy group, a halogeno group, a C1-6 haloalkyl group, or a C1-6 haloalkoxy group; the same applies to R^{Q1} below.);
a carboxy group;
a group represented by R^{Q2}-O-CO- (wherein, R^{Q2} represents a C1-6 alkyl group; a C1-6 alkyl group substituted with any one or more substituents of a halogeno group, a C1-6 alkoxy group, a C1-6 haloalkoxy group, a C3-6 cycloalkyl group, a phenyl group, or a 5 to 6-membered ring heteroaryl group; a (C6-10 aryl substituted with any one or more substituents of a C1-6 alkyl group, a C1-6 alkoxy group, a halogeno group, a C1-6 haloalkyl group, or a C1-6 haloalkoxy group) C1-6 alkyl group; a (5 to 6-membered ring heteroaryl substituted with any one or more substituents of a C1-6 alkyl group, a C1-6 alkoxy group, a halogeno group, a C1-6 haloalkyl group, or a C1-6 haloalkoxy group) C1-6 alkyl group; a C2-6 alkenyl group; a C2-6 haloalkenyl group; a C2-6 alkynyl group; a C2-6 haloalkynyl group; a C3-6 cycloalkyl group; a C3-6 cycloalkyl group substituted with a C1-6 alkyl group, a C1-6 alkoxy group, a halogeno group, a C1-6 haloalkyl group, a C1-6 haloalkoxy group, or a cyano group; a C6-10 aryl group; a C6-10 aryl group substituted with any one or more substituents of a C1-6 alkyl group, a C1-6 alkoxy group, a halogeno group, a C1-6 haloalkyl group, or a C1-6 haloalkoxy group; a 5 to 6-membered ring heteroaryl group; or a 5 to 6-membered ring heteroaryl group substituted with any one or more substituents of a C1-6 alkyl group, a C1-6 alkoxy group, a halogeno group, a C1-6 haloalkyl group, or a C1-6 haloalkoxy group; the same applies to R^{Q2} below.);
a group represented by R^{Q1}R^{Q1}N- (wherein R^{Q1}'s in the formula may be the same or different; R^{Q1}'s optionally form together a trimethylene group, a tetramethylene group, a pentamethylene group, or a dimethyleneoxydimethylene group.) ;
a group represented by R^{Q1}R^{Q1}N-CO- (wherein R^{Q1}'s in the formula may be the same or different; R^{Q1}'s optionally form together a trimethylene group, a tetramethylene group, a pentamethylene group, or a dimethyleneoxydimethylene group.) ;
a group represented by R^{Q1}-CO-O-; a group represented by R^{Q1}-CO-NR^{Q3}- (wherein R^{Q3} represents a hydrogen atom; a C1-6 alkyl group; a C1-6 alkyl group substituted with any one or more substituents of a halogeno group, a C1-6 alkoxy group, a C1-6 haloalkoxy group, a C3-6 cycloalkyl group, a phenyl group, or a 5 to 6-membered ring heteroaryl group; a (C6-10 aryl substituted with any one or more substituents of a C1-6 alkyl group, a C1-6 alkoxy group, a halogeno group, a C1-6 haloalkyl group, or a C1-6 haloalkoxy group) C1-6 alkyl group; or a (5 to 6-membered ring heteroaryl substituted with any one or more substituents of a C1-6 alkyl group, a C1-6 alkoxy group, a halogeno group, a C1-6 haloalkyl group, or a C1-6 haloalkoxy group) C1-6 alkyl group; the same applies to R^{Q3} below.);
a group represented by R^{Q2}-O-CO-O-; a group represented by R^{Q2}-O-CO-NR^{Q3}-; a group represented by R^{Q1}R^{Q1}N-CO-O- (wherein R^{Q1}'s in the formula may be the same or different; R^{Q1}'s optionally form together a trimethylene group, a tetramethylene group, a pentamethylene group, or a dimethyleneoxydimethylene group.);
a group represented by R^{Q1}R^{Q1}N-CO-NR^{Q3}- (wherein R^{Q1}'s in the formula may be the same or different; R^{Q1}'s optionally form together a trimethylene group, a tetramethylene group, a pentamethylene group, or a dimethyleneoxydimethylene group.); a group represented by R^{Q2}SO₂-NR^{Q3}-; a group represented by R^{Q1}R^{Q1}N-SO₂- (wherein R^{Q1}'s in the formula may be the same or different; R^{Q1}'s optionally form together a trimethylene group, a tetramethylene group, a pentamethylene group, or a dimethyleneoxydimethylene group.) ;
a group represented by R^{Q1}-O-N=C(R^{Q4})- (wherein R^{Q4} represents a hydrogen atom or a C1-6 alkyl group.); a group represented by (R^{Q1})₂C=N-O- (wherein R^{Q1}'s in the formula may be the same or different; R^{Q1}'s optionally form together a trimethylene group, a tetramethylene group, a pentamethylene group, or a dimethyleneoxydimethylene group.) ;
a pentafluorosulfanyl group, a trimethylsilylethynyl group, a nitro group, or a cyano group.

Further, as the substituent on the "5 to 10-membered ring heterocyclyl group", an oxo group is also preferred.

### [Salt]

The salts of the compound (I) are not particularly limited as long as the salts are agriculturally and horticulturally acceptable salts. Examples thereof can include a salt of an inorganic acid such as hydrochloric acid and sulfuric acid; a salt of an organic acid such as acetic acid and lactic acid; a salt of an alkali metal such as lithium, sodium, and potassium; a salt of an alkaline earth metal such as calcium and magnesium; a salt of a transition metal such as iron and copper; a salt of an organic base such as triethylamine, tributylamine, pyridine, and hydrazine; and ammonium.

### [Production Method]

A method for producing the compound (I) or a salt of the compound (I) is not limited. For example, the compound (I) or a salt of the compound (I) of the present invention can be obtained by a known method described in Examples and the like. The salt of the compound (I) can be obtained also by a known method from the compound (I).

### (Reaction scheme 1)

For example, among the compounds (I), the compound of Formula (I-1) shown below may be prepared by condensing a compound of Formula (III-1) and a compound of Formula (A), as shown in the following reaction scheme 1.

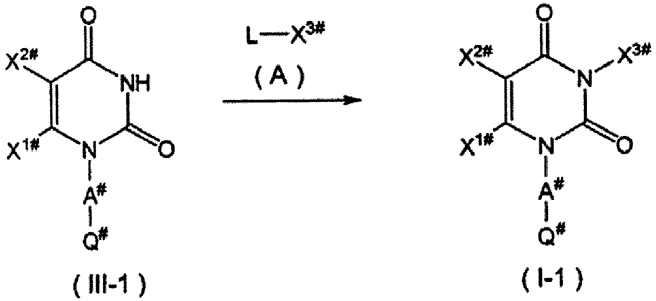

In Formula (I-1), X^{1#} represents the same meaning as X¹ in Formula (I) or represents a structure that can be derived into X¹ by a common method. X^{2#} represents the same meaning as X² in Formula (I) or represents a structure that can be derived into X² by a common method. X^{3#} represents the same meaning as X³ in Formula (I) or represents a structure that can be derived into X³ by a common method. Q^{#} represents the same meaning as Q in Formula (I) or represents a structure that can be derived into Q by a common method. A^{#} represents the same meaning as A in Formula (I) or represents a structure that can be derived into A by a common method.

The symbols in Formula (III-1) represent the same meaning as those in Formula (1-1).

X^{3#} in Formula (A) represents the same meaning as that in Formula (I-1). L represents a leaving group.

For example, when a compound of Formula (A) having a leaving group such as a methanesulfonyl group as L is used, the compound of Formula (I-1) may be prepared by a reaction in the presence of an inorganic base.

For example, when a compound of Formula (A) in which L is a hydroxy group is used, the compound of Formula (I-1) may be prepared by use of a Mitsunobu reaction.

### (Reaction scheme 2)

The compound of Formula (III-1) may be prepared by condensing a compound of Formula (B) and a compound of Formula (C), as shown in the following reaction scheme 2.

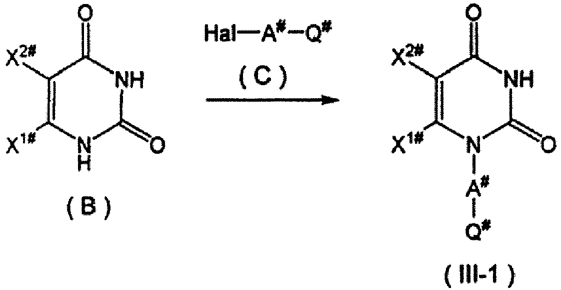

The symbols in Formula (B) represent the same meaning as those in Formula (1-1). The symbols in Formula (C) represent the same meaning as those in Formula (1-1). Hal represents a halogeno group.

For example, the compound of Formula (III-1) may be prepared by reacting the compound of Formula (B) with the compound of Formula (C) in the presence of an inorganic base.

### (Reaction scheme 3)

Among compounds of Formula (B), a compound of Formula (B-1), in which an X^{2#} moiety is a group represented by R¹ON=CR⁶-, may be prepared by condensing a compound of Formula (D) and a compound of Formula (E), as shown in the following reaction scheme 3.

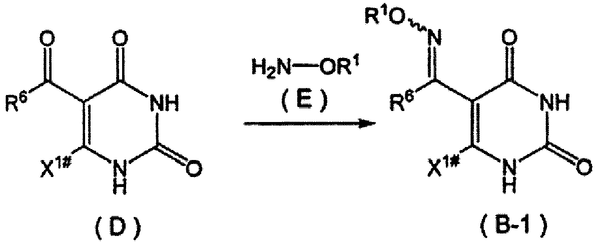

R¹ and R⁶ in Formula (B-1) represent the same meaning as those in Formula (I). X^{1#} represents the same meaning as that in Formula (I-1).

R⁶ in Formula (D) represents the same meaning as that in Formula (I). X^{1#} represents the same meaning as that in Formula (I-1).

R¹ in Formula (E) represents the same meaning as that in Formula (I). As the compound of Formula (E), a hydrochloride of the compound may be used.

For example, the compound of Formula (B-1) may be prepared by reacting the compound of Formula (D) with the compound of Formula (E) in an alcohol solvent.

### (Reaction scheme 4)

Among compounds of Formula (I-1), a compound of Formula (I-2), in which an X^{2#} moiety is a group represented by R¹O-N=CR⁶-, may be prepared by condensing a compound of Formula (F) and a compound of Formula (E), as shown in the following reaction scheme 4.

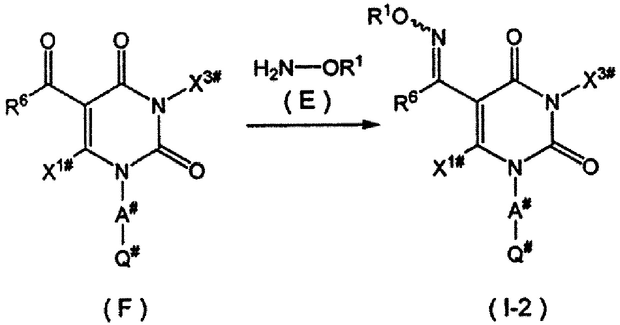

R¹ and R⁶ in Formula (I-2) represent the same meaning as those in Formula (I). Other symbols represent the same meaning as those in Formula (I-1).

R⁶ in Formula (F) represents the same meaning as that in Formula (I). Other symbols represent the same meaning as those in Formula (I-1).

R¹ in Formula (E) represents the same meaning as that in Formula (I). As the compound of Formula (E), a hydrochloride of the compound may be used.

For example, the compound of Formula (I-2) may be prepared by reacting the compound of Formula (F) with the compound of Formula (E) in an alcohol solvent.

### (Reaction scheme 5)

The compound of Formula (I-1) may be prepared also by condensing a compound of Formula (IV-1) and a compound of Formula (C), as shown in the following reaction scheme 5.

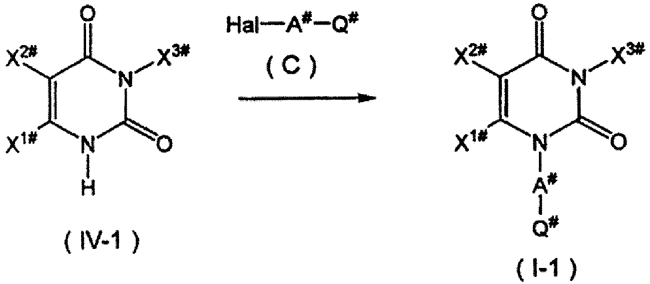

The symbols in Formula (IV-1) represent the same meaning as those in Formula (I-1). The symbols in Formula (C) represent the same meaning as those in Formula (I-1). Hal represents a halogeno group.

For example, the compound of Formula (I-1) may be prepared by reacting the compound of Formula (IV-1) with the compound of Formula (C) in the presence of an inorganic base.

Specifically, as the compound of formula (I) and salts thereof, in particular, the following compounds or the like may be preferably exemplified.

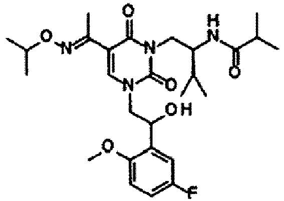

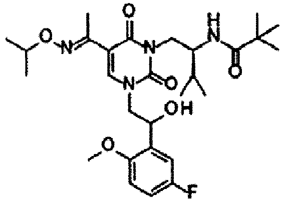

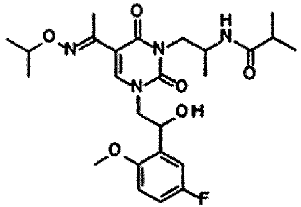

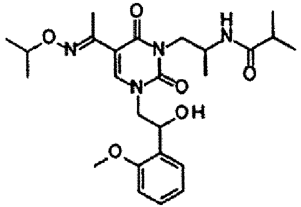

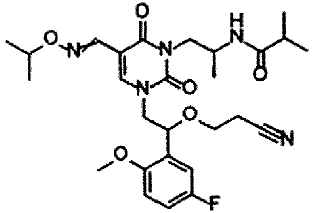

The component (II) to be used in combination with the component (I) of the present invention is a compound being other than that of formula (I) and having bactericidal activity (fungicide). The component (II) may be any one of an insecticide/acaricide, a nematicide, a soil pesticide, a plant growth regulator, a fertilizer, and a safener. The component (II) is more preferably a fungicide, an insecticide/acaricide, or a plant growth regulator other than the component (I). The component (II) may be at least one compound, and two or more compounds may be selected and used in combination therefor.

The fungicide, insecticide/acaricide, and plant growth regulator that may be used as the component (II) and the amounts thereof are not particularly limited, as long as the effects are exhibited.

As a preferred fungicide that may be used as the component (II), a compound described in HP of FRAC (Fungicide Resistance Action Committee) (https://www.frac.info/), an agriculturally acceptable salt or derivative thereof, or the like may be exemplified. Specifically, compounds selected from the following groups or the like may be exemplified.

(A) Agents acting on synthesis or metabolism of nucleic acid:
   A1) RNA polymerase I inhibitors benalaxyl, benalaxyl-M, furalaxyl, metalaxyl, metalaxyl-M, oxadixyl, ofurace;
   A2) adenosine deaminase inhibitors
      bupirimate, dimethirimol, ethirimol;
   A3) DNA/RNA synthesis inhibitors
      hymexazol, octhilinone;
   A4) DNA topoisomerase type II inhibitors
      oxolinic acid.
(B) Agents acting on cytoskeletons and motor proteins B1) to B3) β-tubulin polymerization inhibitors benomyl, carbendazim, fuberidazole, thiabendazole, thiophanate, thiophanate-methyl, diethofencarb, zoxamide, ethaboxam, chlorfenazole, debacarb, trichlamide, zarilamid;
   B4) cell division (unknown points of action) inhibitors pencycuron;
   B5) delocalization inhibitors of spectrin-like protein fluopicolide, fluopimomide;
   B6) actin/myosin/fimbrin function inhibitors
      phenamacril, metrafenone, pyriofenone.
(C) Agents acting on respiration:
   C1) complex I: NADH oxidoreductase inhibitors
      diflumetorim, tolfenpyrad, fenazaquin;
   C2) complex II: succinate dehydrogenase inhibitors benodanil, flutolanil, mepronil, isofetamid, fluopyram, cyclobutrifluram, fenfuram, carboxin, oxycarboxin, thifluzamide, benzovindiflupyr, bixafen, fluindapyr, fluxapyroxad, furametpyr, inpyrfluxam, isopyrazam, penflufen, penthiopyrad, sedaxane, isoflucypram, pydiflumetofen, boscalid, pyraziflumid, flubeneteram, furmecyclox;
   C3) complex III: cytochrome bc1 (ubiquinol oxidase) Qo site (cyt b gene) inhibitors
      azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, metyltetraprole;
   C4) complex III: cytochrome bc1 (ubiquinone reductase) Qi site inhibitors
      cyazofamid, amisulbrom, fenpicoxamid, florylpicoxamid, metarylpicoxamid;
   C5) oxidative phosphorylation-uncoupling inhibitors binapacryl, dinocap, meptyldinocap, fluazinam;
   C6) oxidative phosphorylation and ATP synthase inhibitors triphenyltin acetate (fentin acetate), triphenyltin chloride (fentin chloride), triphenyltin hydroxide (fentin hydroxide);
   C7) ATP transport inhibitors
      silthiofam;
   C8) complex III: cytochrome bc1 (ubiquinone reductase) Qi site/stigmatellin-bonding subsite inhibitors ametoctradin.
(D) Agents acting on amino acid and protein synthesis:
   D1) methionine biosynthesis (cgs gene) inhibitors cyprodinil, mepanipyrim, pyrimethanil;
   D2) protein synthesis (at the completion of ribosomal translation) inhibitors
      blasticidin-S;
   D3), D4) protein synthesis (at the beginning of ribosomal translation) inhibitors
      kasugamycin, kasugamycin hydrochloride, streptomycin;
   D5) protein synthesis (at ribosomal polypeptide elongation) inhibitors
      oxytetracycline.
(E) Agents acting on signal transduction:
   E1) signal transduction (unknown mechanism of action) inhibitors
      quinoxyfen, proquinazid;
   E2) MAP/histidine kinase (os-2, HOG1) inhibitors in osmotic signal transduction
      fenpiclonil, fludioxonil;
   E3) MAP/histidine kinase (os-1, Daf1) inhibitors in osmotic signal transduction
      chlozolinate, dimethachlone, iprodione, procymidone, vinclozolin.
(F) Agents acting on lipid biosynthesis or transport/cell membrane structure or function:
   F1) dicarboximide-based fungicides
   F2) phospholipid biosynthesis and methyltransferase inhibitors
      edifenphos, iprobenfos, pyrazophos, isoprothiolane;
   F3) cell-peroxidizing inhibitors
      biphenyl, chloroneb, dicloran, quintozene, tecnazene, tolclofos-methyl, etridiazole;
   F4) cell membrane permeability and fatty acid inhibitors iodocarb, propamocarb, propamocarb hydrochloride, prothiocarb;
   F5) carboxylic acid amide (CAA)-based fungicides
   F8) ergosterol bond inhibitors
      natamycin;
   F9) lipid homeostasis and transport/storage inhibitors oxathiapiprolin, fluoxapiprolin.
(G) Sterol biosynthesis inhibitors of cell membranes:
   G1) C14 position demethylaze (erg11/cyp51) inhibitors in sterol biosynthesis
      triforine, pyrifenox, pyrisoxazole, fenarimol, nuarimol, imazalil, oxpoconazole, pefurazoate, prochloraz, triflumizole, azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, mefentrifluconazole, metconazole, myclobutanil, penconazole, propiconazole, simeconazole, tebuconazole, tetraconazole, triadimefon, triadimenol, triticonazole, prothioconazole, fluoxytioconazole, furconazole, furconazole-cis, diniconazole-M;
   G2) inhibitors of Δ14 reductase and Δ8 → Δ7-isomerase (erg24, erg2) in sterol biosynthesis
      aldimorph, dodemorph, dodemorph acetate, fenpropimorph, tridemorph, fenpropidin, piperalin, spiroxamine, buthiobate;
   G3) 3-keto reductase (erg27) inhibitors in C4 position demethylation in sterol biosynthesis system
      fenhexamid, fenpyrazamine;
   G4) squalene epoxidase (erg1) inhibitors in sterol biosynthesis system
      pyributicarb, naftifine, terbinafine.
(H) Cell wall biosynthesis inhibitors:
   H4) chitin synthetase inhibitors
      polyoxin, polyoxorim;
   H5) cellulose synthetase inhibitors
      dimethomorph, flumorph, pyrimorph, benthiavalicarb, iprovalicarb, valifenalate, mandipropamid.
(I) Cell wall melanin biosynthesis inhibitors:
   I1) reductase inhibitors in melanin biosynthesis fthalide, pyroquilon, tricyclazole;
   I2) anhydrase inhibitors in melanin biosynthesis carpropamid, diclocymet, fenoxanil;
   I3) polyketide synthetase inhibitors in melanin biosynthesis
      tolprocarb.
(P) Agents acting on resistance induction of host plants:
   P01 to P03) agents relating to salicylic acid signal transduction
      acibenzolar-S-methyl, probenazole, tiadinil, isotianil;
   P04) polysaccharide elicitors
      laminarin;
   P05) anthraquinone elicitors
      extract from *Reynoutria sachalinensis;*
   P06) microbial elicitors
      *Bacillus mycoides* isolate J, cell walls of *Saccharomyces cerevisiae* strain LAS117;
   P07) phosphonates
      fosetyl (fosetyl-Al), phosphorous acid and salts such as calcium phosphite, aluminum phosphite, sodium phosphite, and disodium phosphonate;
   P08) agents relating to salicylic acid signal transduction dichlobentiazox.
(U) Agents with unknown mechanism of action: cymoxanil, tecloftalam (teclofthalam), triazoxide, flusulfamide, diclomezine, cyflufenamid, dodine, dodine free base, flutianil, ferimzone, tebufloquin, picarbutrazox, validamycin, bethoxazin, cyprofuram, flumetover, nitrothal-isopropyl, propamidine, ipflufenoquin, pyridachlometyl, pyrapropoyne, aminopyrifen, ipfentrifluconazole, quinofumelin, dipymetitrone, chloinconazide (chloroinconazide), seboctylamine, flumetylsulforim, flufenoxadiazam.
(M) Agents having multiple points of contact activity:
   copper (various salts), basic copper sulfate, Bordeaux mixture, copper hydroxide, copper naphthalate (copper naphthenate), copper oxychloride, copper sulfate, copper oxide (cuprous oxide), oxine-copper, sulfur (sulphur), lime sulfur, amobam, ferbam, mancozeb, maneb, metiram, propineb, thiram, zinc thiazole, zineb, ziram, captan, captafol, folpet, chlorothalonil, dichlofluanid, tolylfluanid; guazatine, guazatine acetate, iminoctadine, iminoctadine acetate (iminoctadine triacetate), iminoctadine albesilate (iminoctadine trialbesilate), anilazine, dithianon, chinomethionate (chinomethionat/quinomethionate), fluoroimide, methasulfocarb, dazomet, cufraneb, mancopper, polycarbamate.
(BM) Biological control agents/organism-derived pesticides having multiple mechanisms of action:
   a) plant extracts
      polypeptide (lectin), phenol compounds, sesquiterpene compounds, triterpenoid compounds, coumarin compounds, terpene hydrocarbon compounds, terpene alcohol compounds, terpene phenol compounds, extract from the cotyledons of lupine plantlets, extract from *Swinglea glutinosa,* extract from *Melaleuca alternifolia* (tea tree) (tea tree oil), plant oils (mixtures), eugenol, geraniol, thymol, α-pinene (alpha-pinene), α-terpinene (alpha-terpinene), α-terpinol (alpha-terpinol), α-terpinolene (alpha-terpinoline), γ-terpinene (gamma-terpinene), d-limonene, orange oil, linalool, menthol, ursolic acid, oleanolic acid, neem oil.
   b) microorganisms (microbial strains or extracts or metabolites therefrom)
      fungi of the genus *Trichoderma* (*Trichoderma* spp.) such as *Trichoderma atroviride* strain I-1237, *Trichoderma atroviride* strain LU132, *Trichoderma atroviride* strain SC1, *Trichoderma atroviride* strain SKT-1, *Trichoderma atroviride* strain 77B;
      *Trichoderma asperellum* strain T34, *Trichoderma asperellum* strain kd;
      *Trichoderma harzianum* strain T-22; and
      *Trichoderma virens* strain G-41;
      fungi of the genus *Gliocladium* (*Gliocladium* spp.) such as *Gliocladium catenulatum* strain J1446;
      fungi of the genus *Clonostachys* (*Clonostachy* spp.) such as *Clonostachys rosea* strain CR-7;
      fungi of the genus *Coniothyrium* (*Coniothyrium* spp.) such as *Coniothyrium minitans* strain CON/M/91-08;
      fungi of the genus *Talaromyces* (*Talaromyces* spp.) such as *Talaromyces flavus* strain SAY-Y-94-01;
      fungi of the genus *Saccharomyces* (*Saccharomyces* spp.) such as *Saccharomyces cerevisae* strain LAS02;
      bacteria of the genus *Bacillus* (*Bacillus* spp.) such as *Bacillus amyloliquefaciens* strain QST713, *Bacillus amyloliquefaciens* strain FZB24, *Bacillus amyloliquefaciens* strain MBI600, *Bacillus amyloliquefaciens* strain D747, *Bacillus amyloliquefaciens* strain F727, *Bacillus amyloliquefaciens* strain AT-332;
      *Bacillus subtilis* strain AFS032321, *Bacillus subtilis* strain Y1336, *Bacillus subtilis* strain HAI-0404; and
      *Bacillus simplex;*
      bacteria of the genus *Paenibacillus (Paenibacillus* spp.); bacteria of the genus *Burkholderia (Burkholderia* spp.);
      fungi of the genus *Fusarium (Fusarium* spp.);
      bacteria of the genus *Pseudomonas (Pseudomonas* spp.) such as *Pseudomonas chlororaphis* strain AFS009, *Pseudomonas fluorescens,* and *Pseudomonas rhodesiae* strain HAI-0804;
      bacteria of the genus *Streptomyces* (*Streptomyces* spp.) such as *Streptomyces griseovirides* strain K61 and *Streptomyces lydicus* strain WYEC108;
      bacteria of the genus *Agrobacterium* (*Agrobacterium* spp.) such as *Agrobacterium radiobacter;*
      bacteria of the genus *Erwinia* (*Erwinia* spp.) such as nonpathogenic *Erwinia carotovora* subsp. *carotovora;*
      bacteria of the genus *Variovorax* (*Variovorax* spp.) such as *Variovorax paradoxus;*
      bacteria of the genus *Lactobacillus* (Lactobacillus spp.) such as *Lactobacillus plantarum.*
   c) other agents
      substances that can serve as an elicitor such as enzymes or extracts thereof, β-glucan, chitin or chitosan or fragments thereof, β-aminobutyric acid, 2,6-dichloroisonicotinic acid, salicylic acid or derivatives thereof, algal extracts, extracts of algae (hydrolysates), jasmine flower extracts, sodium alginate, oligosaccharides, trehalose, polysaccharides, lipids, lipopolysaccharides, fatty acids, glycolipids, glycoproteins, glycopeptides, proteins or peptides derived from a plant and/or a pathogenic microorganism, and ergosterol.
(N) Unclassified agents
   mineral oils, organic oils, inorganic salts, materials of biological origin, potassium bicarbonate, sodium hydrogen carbonate, calcium carbonate, calcium hydroxide, potassium iodide, potassium phosphonate, chitosan hydrochloride, urea.

The component (II) may be an insecticide/acaricide. As a preferred insecticide/acaricide that may be used as the component (II), a compound described in HP of IRAC (Insecticide Resistance Action Committee) (https://irac-online.org/), an agriculturally acceptable salt or derivative thereof, or the like may be exemplified.

Specifically, compounds selected from the following groups or the like may be exemplified.

(1A) Acetylcholinesterase (AChE) inhibitors (carbamate-based):
   alanycarb, aldicarb, bendiocarb, benfuracarb, butocarboxim, butoxycarboxim, carbaryl, carbofuran, carbosulfan, ethiofencarb, fenobucarb, formetanate, furathiocarb, isoprocarb, methiocarb, methomyl, metolcarb, oxamyl, pirimicarb, propoxur, thiodicarb, thiofanox, triazamate, trimethacarb, XMC, xylylcarb, aldoxycarb, allyxycarb, aminocarb, bufencarb, cloethocarb, fenothiocarb, promecarb.
(1B) Acetylcholinesterase (AChE) inhibitors (organophosphorus-based):
   acephate, azamethiphos, azinphos-ethyl, azinphosmethyl, cadusafos, chlorethoxyfos, chlorfenvinphos, chlormephos, chlorpyrifos, chlorpyrifos-methyl, coumaphos, cyanophos, demeton-S-methyl, diazinon, dichlorvos (DDVP), dicrotophos, dimethoate, dimethylvinphos, disulfoton, EPN, ethion, ethoprophos, famphur, fenamiphos, fenitrothion, fenthion, fosthiazate, heptenophos, imicyafos, isofenphos, isopropyl=O-(methoxyaminothiophosphoryl) salicylate, isoxathion, malathion, mecarbam, methamidophos, methidathion, mevinphos, monocrotophos, naled, omethoate, oxydemeton-methyl, parathion, parathion-methyl, phenthoate, phorate, phosalone, phosmet, phosphamidon, phoxim, pirimiphos-methyl, profenofos, propetamphos, prothiofos, pyraclofos, pyridaphenthion, quinalphos, sulfotep, tebupirimfos, temephos, terbufos, tetrachlorvinphos, thiometon, triazophos, trichlorfon, vamidothion, bromophos-ethyl (bromophos-e), cyanofenphos, demeton-S-methylsulfone, dialifos, dichlofenthion, dioxabenzofos, etrimfos, fensulfothion, fonofos, formothion, iodofenphos, isazofos, isocarbofos, methacrifos, phosphocarb, pirimiphos-ethyl (pirimiphos-e), propaphos, prothoate, sulprofos.
(2) GABA-gated chloride ion (chlorine ion) channel blockers:
   chlordane, endosulfan, ethiprole, fipronil, acetoprole, camphechlor, dienochlor, heptachlor, pyrafluprole, pyriprole, flufiprole.
(3A) Sodium channel modulators (pyrethroid-based): acrinathrin, allethrin, d-cis/trans allethrin, d-trans allethrin, bifenthrin, bioallethrin, bioallethrin-S-cyclopentenyl isomers, bioresmethrin, cycloprothrin, cyfluthrin, β-cyfluthrin (beta-cyfluthrin), cyhalothrin, λ-cyhalothrin (lambda-cyhalothrin), γ-cyhalothrin (gamma-cyhalothrin), cypermethrin, α-cypermethrin (alpha-cypermethrin), β-cypermethrin (beta-cypermethrin), θ-cypermethrin (theta-cypermethrin), ζ-cypermethrin (zeta-cypermethrin), cyphenothrin [(1R)-trans-isomers], deltamethrin, empenthrin [(EZ)-(1R)-isomers], esfenvalerate, etofenprox, fenpropathrin, fenvalerate, flucythrinate, flumethrin, τ-fluvalinate (tau-fluvalinate), halfenprox, imiprothrin, kadethrin, permethrin, phenothrin [(1R)-trans-isomers], prallethrin, pyrethrins, resmethrin, silafluofen, tefluthrin, tetramethrin, tetramethrin [(1R)-isomers], tralomethrin, transfluthrin, κ-bifenthrin (kappa-bifenthrin), biopermethrin, chloroprallethrin, dimefluthrin, fenfluthrin, fenpirithrin, flufenprox, heptafluthrin, meperfluthrin, ε-metofluthrin (epsilon-metofluthrin), momfluorothrin, ε-momfluorothrin (epsilon-momfluorothrin), trans-permethrin, profluthrin, protrifenbute, κ-tefluthrin (kappa-tefluthrin), terallethrin, tetramethylfluthrin, bioethanomethrin.
(3B) Sodium channel modulators (DDT's):
   DDT, methoxychlor.
(4) Nicotinic acetylcholine receptor (nAChR) competitive modulators:
   acetamiprid, clothianidin, dinotefuran, imidacloprid, nitenpyram, thiacloprid, thiamethoxam, nicotine, sulfoxaflor, flupyradifurone, triflumezopyrim, nithiazine, dicloromezotiaz, flupyrimin.
(5) Nicotinic acetylcholine receptor (nAChR) allosteric modulators:
   spinetoram, spinosad.
(6) Glutamatergic chloride ion (chlorine ion) channel (GluCl) allosteric modulators:
   abamectin, emamectin, emamectin benzoate, lepimectin, milbemectin, doramectin, eprinomectin, ivermectin, moxidectin, selamectin.
(7) Juvenile hormone analogous agents:
   hydroprene, kinoprene, methoprene, fenoxycarb, pyriproxifen, diofenolan, epofenonane, triprene.
(8) Other nonspecific (multi-site) inhibitors:
   halogenated alkyls (alkyl halides) including methyl bromide, chloropicrin, aluminum sodium fluoride (sodium aluminum fluoride), sulfuryl fluoride, borax, boric acid, disodium octaborate, sodium borate, sodium metaborate, tartar emetic, dazomet, metam, metam potassium, metam sodium.
(9) Chordotonal organ TRPV channel modulators:
   pymetrozine, pyrifluquinazon; afidopyropen.
(10) Mite growth inhibitors:
   clofentezine, diflovidazin, hexythiazox, etoxazole.
(11) Insect midgut inner membrane disrupting agents derived from microorganisms:
   B. t. subsp. *israelensis,* B. t. subsp. *aizawai,* B. t. subsp. *kurstaki,* B. t. subsp. *tenebrionis;* proteins contained in B. t. crops (B. t. crop proteins): Cry1Ab, Cry1Ac, Cry1Fa, Cry1A.105, Cry2Ab, Vip3A, mCry3A, Cry3Ab, Cry3Bb, Cry34Ab1/Cry35Ab1; *Bacillus sphaericus.*
   note: "B. t." indicates *Bacillus thuringiensis,* and "proteins contained in B. t. crops" are proteins produced in crops into which a gene for a toxic protein (such as Cry1Ab) that is produced by B. t. (*Bacillus thuringiensis*) has been introduced.
(12) Mitochondrial ATP biosynthetic enzyme inhibitors:
   diafenthiuron; azocyclotin, cyhexatin, fenbutatin oxide, propargite, tetradifon.
(13) Oxidative phosphorylation uncoupling agents that disrupt proton gradient:
   chlorfenapyr, DNOC (4,6-dinitro-o-cresol), sulfluramid. Binapacryl, dinobuton, dinocap.
(14) Nicotinic acetylcholine receptor (nAChR) channel blockers:
   bensultap, cartap hydrochloride, thiocyclam, thiosultap monosodium salt (thiosultap-sodium).
(15) Chitin biosynthesis inhibitors, type 0:
   bistrifluron, chlorfluazuron, diflubenzuron, flucycloxuron, flufenoxuron, hexaflumuron, lufenuron, novaluron, noviflumuron, teflubenzuron, triflumuron, fluazuron.
(16) Chitin biosynthesis inhibitors, type 1:
   buprofezin.
(17) Molting inhibitors:
   cyromazine.
(18) Molting hormone (ecdysone) receptor agonists: chromafenozide, halofenozid, methoxyfenozide, tebufenozide.
(19) Octopamine receptor agonists:
   amitraz, chlordimeform.
(20) Mitochondrial electron transport system complex III inhibitors:
   hydramethylnon; acequinocyl; fluacrypyrim, bifenazate.
(21) Mitochondrial electron transport system complex I inhibitors (METI):
   fenazaquin, fenpyroximate, pyridaben, pyrimidifen, tebufenpyrad, tolfenpyrad, rotenone.
(22) Voltage-dependent sodium channel blockers:
   indoxacarb, metaflumizone.
(23) Acetyl CoA carboxylase inhibitors:
   spirodiclofen, spiromesifen, spirotetramat, spiropidion.
(24) Mitochondrial electron transport system complex IV inhibitors:
   aluminum phosphide (Al-phosphide), calcium phosphide (Ca-phosphide), zinc phosphide (Zn-phosphide), phosphine, calcium cyanide (Ca-cyanide), sodium cyanide (Na-cyanide), potassium cyanide (K-cyanide).
(25) Mitochondrial electron transport system complex II inhibitors:
   cyenopyrafen, cyflumetofen, pyflubumide.
(26) Ryanodine receptor modulators:
   chlorantraniliprole, cyantraniliprole, cyclaniliprole, flubendiamide, cyhalodiamide, tetrachlorantraniliprole, tetraniliprole.
(27) Chordotonal organ modulator, target site unidentified:
   flonicamid.
(28) GABA-gated chloride ion (chlorine ion) channel allosteric modulators:
   broflanilide, fluxametamide, isocycloseram, afoxolaner, fluralaner, lotilaner, sarolaner.
(29) Agents having unknown mechanism of action (UN):
   azadirachtin, benzoximate, bromopropylate, chinomethionate (chinomethionat/quinomethionate), dicofol, lime sulfur, mancozeb, pyridalyl, sulfur.
(30) Other insecticides/acaricides:
   acynonapyr, amidoflumet, benzomate, benzpyrimoxan, chlorobenzilate, dicyclanil, fenoxacrim, fentrifanil, flometoquin, flubenzimine, flufenzine, fluhexafon, fluopyram, metaflumizone, metoxadiazone, oxazosulfyl, tetrasul, triarathene, tyclopyrazoflor.

Specific examples of plant growth regulators that may be used as the component (II) are shown below.
Abscisic acid, kinetin, benzylaminopurine, 1,3-diphenylurea, forchlorfenuron, thidiazuron, chlorfenuron, dihydrozeatin, gibberellin A, gibberellin A4, gibberellin A7, gibberellin A3, 1-methylcyclopropane, N-acetyl aminoethoxyvinyl glycine (aka: aviglycine), aminooxyacetate, silver nitrate, cobalt chloride, IAA, 4-CPA, cloprop, 2,4-D, MCPB, indole-3-butyric acid (indole-3-butyrate), dichlorprop, phenothiol, 1-naphthylacetoamide (1-naphthyl acetamide), ethychlozate, cloxyfonac, maleic hydrazide (maleic acid hydrazide), 2,3,5-triiodobenzoic acid, salicylic acid, methyl salicylate, (-)-jasmonic acid, methyl jasmonate, (+)-strigol, (+)-deoxystrigol, (+)-orobanchol, (+)-sorgolactone, 4-oxo-4-(2-phenylethyl)aminobutyric acid, ethephon, chlormequat, mepiquat chloride, benzyladenine, 5-amino levulinic acid, daminozide.

The component (II) may be a fertilizer. As a fertilizer that may be used as the component (II), compounds selected from the following group or the like may be specifically exemplified.

Ammonium sulfate, magnesium sulfate, ammonium phosphate, ammonium nitrate, urea, nitrogen, phosphorus, and potassium.

The component (II) may be a safener.

As a safener that may be used as the component (II), compounds selected from the following group or the like may be exemplified.

Benoxacor, cloquintocet, cloquintocet-mexyl, cyometrinil, cyprosulfamide, dichlormid, dicyclonon, dietholate, fenchlorazole, fenchlorazole-ethyl, fenclorim, flurazole, fluxofenim, furilazole, isoxadifen, isoxadifen-ethyl, mefenpyr, mefenpyr-diethyl, mephenate, naphthalic anhydride, and oxabetrinil.

As the component (II), thiophanate-methyl, triflumizole, cyflufenamid, iminoctadine acetate, iminoctadine albesilate, picarbutrazox, ipflufenoquin, fluxapyroxad, cymoxanil, tebufenozide, prothioconazole, mefentrifluconazole, potassium phosphite, florylpicoxamid, metyltetraprole, captan, fipronil, fludioxonil, chlorantraniliprole, fluopyram, abamectin, sulfoxaflor, or the like may be preferably exemplified.

For the agricultural and horticultural fungicidal composition of the present invention, any ratio between the component (I) and the component (II) may be selected. The weight ratio between the component (I) and the component (II) is typically in the range of 1:1000 to 1000:1, preferably in the range of 1:500 to 500:1, further preferably in the range of 200:1 to 1:200, more preferably in the range of 100:1 to 1:100, furthermore preferably in the range of 50:1 to 1:50, and particularly preferably in the range of 10:1 to 1:10.

In particular, it is preferable to apply at a mass ratio that gives synergistic effect.

The synergistic effect may be confirmed by Colby's equation described later.

Examples of specific combinations of the component (I) and the component (II) and preferred mass ratios are shown in Tables 1 and 2.

**[Table 1]**

| Compound (I) + compound (II) | Preferred mass ratio |
|---|---|
| Compound of formula (I) + thiophanate-methyl | 10:1, 5:1, 4:1, 3:1, 2:1, 1:1, 1:2, 1:3, 1:4, 1:5, or 1:10 |
| Compound of formula (I) + triflumizole | 10:1, 5:1, 4:1, 3:1, 2:1, 1:1, 1:2, 1:3, 1:4, 1:5, or 1:10 |
| Compound of formula (I) + cvflufenamid | 10:1, 5:1, 4:1, 3:1, 2:1, 1:1, 1:2, 1:3, 1:4, 1:5, or 1:10 |
| Compound of formula (I) + iminoctadine acetate | 10:1, 5:1, 4:1, 3:1, 2:1, 1:1, 1:2, 1:3, 1:4, 1:5, or 1:10 |
| Compound of formula (I) + iminoctadine albesilate | 10:1, 5:1, 4:1, 3:1, 2:1, 1:1, 1:2, 1:3, 1:4, 1:5, or 1:10 |
| Compound of formula (I) + picarbutrazox | 10:1, 5:1, 4:1, 3:1, 2:1, 1:1, 1:2, 1:3, 1:4, 1:5, or 1:10 |
| Compound of formula (I) + ipflufenoquin | 10:1, 5:1, 4:1, 3:1, 2:1, 1:1, 1:2, 1:3, 1:4, 1:5, or 1:10 |
| Compound of formula (I) + oxvtetracvcline | 10:1, 5:1, 4:1, 3:1, 2:1, 1:1, 1:2, 1:3, 1:4, 1:5, or 1:10 |
| Compound of formula (I) + streptomycin sulfate | 10:1, 5:1, 4:1, 3:1, 2:1, 1:1, 1:2, 1:3, 1:4, 1:5, or 1:10 |
| Compound of formula (I) + *Bacillus subtilis* | 10:1, 5:1, 4:1, 3:1, 2:1, 1:1, 1:2, 1:3, 1:4, 1:5, or 1:10 |
| Compound of formula (I) + *Pseudomonas rhodesiae* | 10:1, 5:1, 4:1, 3:1, 2:1, 1:1, 1:2, 1:3, 1:4, 1:5, or 1:10 |
| Compound of formula (I) + pyribencarb | 10:1, 5:1, 4:1, 3:1, 2:1, 1:1, 1:2, 1:3, 1:4, 1:5, or 1:10 |
| Compound of formula (I) + kresoxim-methyl | 10:1, 5:1, 4:1, 3:1, 2:1, 1:1, 1:2, 1:3, 1:4, 1:5, or 1:10 |
| Compound of formula (1) + diethofencarb | 10:1, 5:1, 4:1, 3:1, 2:1, 1:1, 1:2, 1:3, 1:4, 1:5, or 1:10 |
| Compound of formula (I) + fluxapyroxad | 10:1, 5:1, 4:1, 3:1, 2:1, 1:1, 1:2, 1:3, 1:4, 1:5, or 1:10 |
| Compound of formula (I) + boscalid | 10:1, 5:1, 4:1, 3:1, 2:1, 1:1, 1:2, 1:3, 1:4, 1:5, or 1:10 |
| Compound of formula (I) + mepanipyrim | 10:1, 5:1, 4:1, 3:1, 2:1, 1:1, 1:2, 1:3, 1:4, 1:5, or 1:10 |
| Compound of formula (I) + pencycuron | 10:1, 5:1, 4:1, 3:1, 2:1, 1:1, 1:2, 1:3, 1:4, 1:5, or 1:10 |
| Compound of formula (I) + pyriofenone | 10:1, 5:1, 4:1, 3:1, 2:1, 1:1, 1:2, 1:3, 1:4, 1:5, or 1:10 |
| Compound of formula (I) + fluazinam | 10:1, 5:1, 4:1, 3:1, 2:1, 1:1, 1:2, 1:3, 1:4, 1:5, or 1:10 |
| Compound of formula (I) + thiuram | 10:1, 5:1, 4:1, 3:1, 2:1, 1:1, 1:2, 1:3, 1:4, 1:5, or 1:10 |
| Compound of formula (I) + dithianon | 10:1, 5:1, 4:1, 3:1, 2:1, 1:1, 1:2, 1:3, 1:4, 1:5, or 1:10 |
| Compound of formula (I) + maneb | 10:1, 5:1, 4:1, 3:1, 2:1, 1:1, 1:2, 1:3, 1:4, 1:5, or 1:10 |
| Compound of formula (I) + cymoxanil | 10:1, 5:1, 4:1, 3:1, 2:1, 1:1, 1:2, 1:3, 1:4, 1:5, or 1:10 |
| Compound of formula (I) + benthiavalicarb-isopropyl | 10:1, 5:1, 4:1, 3:1, 2:1, 1:1, 1:2, 1:3, 1:4, 1:5, or 1:10 |
| Compound of formula (I) + ethaboxam | 10:1, 5:1, 4:1, 3:1, 2:1, 1:1, 1:2, 1:3, 1:4, 1:5, or 1:10 |
| Compound of formula (I) + propamocarb hydrochloride | 10:1, 5:1, 4:1, 3:1, 2:1, 1:1, 1:2, 1:3, 1:4, 1:5, or 1:10 |
| Compound of formula (I) + basic copper sulfate | 10:1, 5:1, 4:1, 3:1, 2:1, 1:1, 1:2, 1:3, 1:4, 1:5, or 1:10 |
| Compound of formula (I) + copper 8-hydroxyquinoline | 10:1, 5:1, 4:1, 3:1, 2:1, 1:1, 1:2, 1:3, 1:4, 1:5, or 1:10 |
| Compound of formula (I) + basic copper chloride | 10:1, 5:1, 4:1, 3:1, 2:1, 1:1, 1:2, 1:3, 1:4, 1:5, or 1:10 |
| Compound of formula (I) + sodium hydrogen carbonate | 10:1, 5:1, 4:1, 3:1, 2:1, 1:1, 1:2, 1:3, 1:4, 1:5, or 1:10 |
| Compound of formula (I) + mepiquat chloride | 10:1, 5:1, 4:1, 3:1, 2:1, 1:1, 1:2, 1:3, 1:4, 1:5, or 1:10 |
| Compound of formula (I) + tebufenozide | 10:1, 5:1, 4:1, 3:1, 2:1, 1:1, 1:2, 1:3, 1:4, 1:5, or 1:10 |
| Compound of formula (I) + prothioconazole | 10:1, 5:1, 4:1, 3:1, 2:1, 1:1, 1:2, 1:3, 1:4, 1:5, or 1:10 |
| Compound of formula (I) + mefentrifluconazole | 10:1, 5:1, 4:1, 3:1, 2:1, 1:1, 1:2, 1:3, 1:4, 1:5, or 1:10 |
| Compound of formula (I) + *Bacillus am*y*loliquefaciens* | 10:1, 5:1, 4:1, 3:1, 2:1, 1:1, 1:2, 1:3, 1:4, 1:5, or 1:10 |
| Compound of formula (I) + *Bacillus simplex* | 10:1, 5:1, 4:1, 3:1, 2:1, 1:1, 1:2, 1:3, 1:4, 1:5, or 1:10 |
| Compound of formula (I) + *Lactobacillus plantarum* | 10:1, 5:1, 4:1, 3:1, 2:1, 1:1, 1:2, 1:3, 1:4, 1:5, or 1:10 |

**[Table 2]**

| | |
|---|---|
| Compound of formula (I) + potassium phosphite | 10:1, 5:1, 4:1, 3:1, 2:1, 1:1, 1:2, 1:3, 1:4, 1:5, or 1:10 |
| Compound of formula (I) + sodium phosphite | 10:1, 5:1, 4:1, 3:1, 2:1, 1:1, 1:2, 1:3, 1:4, 1:5, or 1:10 |
| Compound of formula (I) + potassium bicarbonate | 10:1, 5:1, 4:1, 3:1, 2:1, 1:1, 1:2, 1:3, 1:4, 1:5, or 1:10 |
| Compound of formula (I) + chitosan | 10:1, 5:1, 4:1, 3:1, 2:1, 1:1, 1:2, 1:3, 1:4, 1:5, or 1:10 |
| Compound of formula (I) + orange oil | 10:1, 5:1, 4:1, 3:1, 2:1, 1:1, 1:2, 1:3, 1:4, 1:5, or 1:10 |
| Compound of formula (I) + terpene | 10:1, 5:1, 4:1, 3:1, 2:1, 1:1, 1:2, 1:3, 1:4, 1:5, or 1:10 |
| Compound of formula (I) + florylpicoxamid | 10:1, 5:1, 4:1, 3:1, 2:1, 1:1, 1:2, 1:3, 1:4, 1:5, or 1:10 |
| Compound of formula (I) + fenpicoxamid | 10:1, 5:1, 4:1, 3:1, 2:1, 1:1, 1:2, 1:3, 1:4, 1:5, or 1:10 |
| Compound of formula (I) + metyltetraprole | 10:1, 5:1, 4:1, 3:1, 2:1, 1:1, 1:2, 1:3, 1:4, 1:5, or 1:10 |
| Compound of formula (I) + mancozeb | 10:1, 5:1, 4:1, 3:1, 2:1, 1:1, 1:2, 1:3, 1:4, 1:5, or 1:10 |
| Compound of formula (I) + chlorothalonil | 10:1, 5:1, 4:1, 3:1, 2:1, 1:1, 1:2, 1:3, 1:4, 1:5, or 1:10 |
| Compound of formula (I) + captan | 10:1, 5:1, 4:1, 3:1, 2:1, 1:1, 1:2, 1:3, 1:4, 1:5, or 1:10 |
| Compound of formula (I) + cupric hydroxide | 10:1, 5:1, 4:1, 3:1, 2:1, 1:1, 1:2, 1:3, 1:4, 1:5, or 1:10 |
| Compound of formula (I) + clothianidin | 10:1, 5:1, 4:1, 3:1, 2:1, 1:1, 1:2, 1:3, 1:4, 1:5, or 1:10 |
| Compound of formula (I) + thiamethoxam | 10:1, 5:1, 4:1, 3:1, 2:1, 1:1, 1:2, 1:3, 1:4, 1:5, or 1:10 |
| Compound of formula (I) + imidacloprid | 10:1, 5:1, 4:1, 3:1, 2:1, 1:1, 1:2, 1:3, 1:4, 1:5, or 1:10 |
| Compound of formula (I) + fipronil | 10:1, 5:1, 4:1, 3:1, 2:1, 1:1, 1:2, 1:3, 1:4, 1:5, or 1:10 |
| Compound of formula (I) + fludioxonil | 10:1, 5:1, 4:1, 3:1, 2:1, 1:1, 1:2, 1:3, 1:4, 1:5, or 1:10 |
| Compound of formula (I) + chlorantraniliprole | 10:1, 5:1, 4:1, 3:1, 2:1, 1:1, 1:2, 1:3, 1:4, 1:5, or 1:10 |
| Compound of formula (I) + metalaxyl-M | 10:1, 5:1, 4:1, 3:1, 2:1, 1:1, 1:2, 1:3, 1:4, 1:5, or 1:10 |
| Compound of formula (I) + fluopyram | 10:1, 5:1, 4:1, 3:1, 2:1, 1:1, 1:2, 1:3, 1:4, 1:5, or 1:10 |
| Compound of formula (I) + metalaxyl | 10:1, 5:1, 4:1, 3:1, 2:1, 1:1, 1:2, 1:3, 1:4, 1:5, or 1:10 |
| Compound of formula (I) + Bacillus firmus | 10:1, 5:1, 4:1, 3:1, 2:1, 1:1, 1:2, 1:3, 1:4, 1:5, or 1:10 |
| Compound of formula (I) + tebuconazole | 10:1, 5:1, 4:1, 3:1, 2:1, 1:1, 1:2, 1:3, 1:4, 1:5, or 1:10 |
| Compound of formula (I) + ipconazole | 10:1, 5:1, 4:1, 3:1, 2:1, 1:1, 1:2, 1:3, 1:4, 1:5, or 1:10 |
| Compound of formula (I) + cyantraniliprole | 10:1, 5:1, 4:1, 3:1, 2:1, 1:1, 1:2, 1:3, 1:4, 1:5, or 1:10 |
| Compound of formula (I) + thiabendazole | 10:1, 5:1, 4:1, 3:1, 2:1, 1:1, 1:2, 1:3, 1:4, 1:5, or 1:10 |
| Compound of formula (I) + carboxin | 10:1, 5:1, 4:1, 3:1, 2:1, 1:1, 1:2, 1:3, 1:4, 1:5, or 1:10 |
| Compound of formula (I) + difenoconazole | 10:1, 5:1, 4:1, 3:1, 2:1, 1:1, 1:2, 1:3, 1:4, 1:5, or 1:10 |
| Compound of formula (I) + abamectin | 10:1, 5:1, 4:1, 3:1, 2:1, 1:1, 1:2, 1:3, 1:4, 1:5, or 1:10 |
| Compound of formula (I) + pyraclostrobin | 10:1, 5:1, 4:1, 3:1, 2:1, 1:1, 1:2, 1:3, 1:4, 1:5, or 1:10 |
| Compound of formula (I) + sulfoxaflor | 10:1, 5:1, 4:1, 3:1, 2:1, 1:1, 1:2, 1:3, 1:4, 1:5, or 1:10 |
| Compound of formula (I) + penflufen | 10:1, 5:1, 4:1, 3:1, 2:1, 1:1, 1:2, 1:3, 1:4, 1:5, or 1:10 |
| Compound of formula (I) + silthiofam | 10:1, 5:1, 4:1, 3:1, 2:1, 1:1, 1:2, 1:3, 1:4, 1:5, or 1:10 |
| Compound of formula (I) + mineral oil (RABISAN-SPRAY) | 10:1, 5:1, 4:1, 3:1, 2:1, 1:1, 1:2, 1:3, 1:4, 1:5, or 1:10 |
| Compound of formula (I) + neem oil | 10:1, 5:1, 4:1, 3:1, 2:1, 1:1, 1:2, 1:3, 1:4, 1:5, or 1:10 |
| Compound of formula (I) + chlorpyrifos | 10:1, 5:1, 4:1, 3:1, 2:1, 1:1, 1:2, 1:3, 1:4, 1:5, or 1:10 |
| Compound of formula (I) + metominostrobin | 10:1, 5:1, 4:1, 3:1, 2:1, 1:1, 1:2, 1:3, 1:4, 1:5, or 1:10 |
| Compound of formula (I) + flufenoxadiazam | 10:1, 5:1, 4:1, 3:1, 2:1, 1:1, 1:2, 1:3, 1:4, 1:5, or 1:10 |
| Compound of formula (I) + fluoxvtioconazole | 10:1, 5:1, 4:1, 3:1, 2:1, 1:1, 1:2, 1:3, 1:4, 1:5, or 1:10 |
| Compound of formula (I) + metarylpicoxamid | 10:1, 5:1, 4:1, 3:1, 2:1, 1:1, 1:2, 1:3, 1:4, 1:5, or 1:10 |

The agricultural and horticultural fungicidal composition of the present invention may be used for controlling plant diseases derived from a wide variety of filamentous fungi, for example, fungi belonging to algae fungi (oomycetes), sac fungi (ascomycetes), imperfect fungi (deuteromycetes), basidiomycete fungi (basidiomycetes), or conjugation fungi (zygomycetes).

Examples of plant diseases (pathogens) to be controlled are shown below:
Sugar beet: Cercospora leaf spot (*Cercospora beticola*), Aphanomyces root rot (*Aphanomyces cochlioides)*, root rot *(Thanatephorus cucumeris)*, leaf blight *(Thanatephorus cucumeris),* rust *(Uromyces betae),* powdery mildew *(Oidium* sp.), Ramularia leaf spot *(Ramularia beticola)*, and damping-off (*Aphanomyces cochlioides, Pythium ultimum).*

Peanut: brown leaf spot (*Mycosphaerella arachidis),* leaf mold (*Ascochyta* sp.), rust *(Puccinia arachidis),* damping-off (*Pythium debaryanum*)*,* Alternaria leaf spot *(Alternaria alternate),* southern blight *(Sclerotium rolfsii),* leaf spot *(Mycosphaerella berkeleyi),* and pod and root necrosis *(Calonectria ilicicola).*

Cucumber: powdery mildew *(Sphaerotheca fuliginea),* downy mildew *(Pseudoperonospora cubensis),* gummy stem blight *(Mycosphaerella melonis),* Fusarium wilt *(Fusarium oxysporum*)*,* Sclerotinia rot *(Sclerotinia sclerotiorum),* gray mold (*Botrytis cinerea),* anthracnose *(Colletotrichum orbiculare),* scab *(Cladosporium cucumerinum),* Corynespora leaf spot (*Corynespora cassiicola)*, damping-off (*Pythium debaryanum, Rhizoctonia solani Kuhn),* Phomopsis root rot *(Phomopsis* sp.), and bacterial spot *(Pseudomonas syringae* pv. *Lachrymans*)*.*

Tomato: gray mold (*Botrytis cinerea),* leaf mold *(Cladosporium fulvum*)*,* late blight *(Phytophthora infestans),* verticillium wilt (*Verticillium albo-atrum, Verticillium dahliae),* powdery mildew *(Oidium neolycopersici*)*,* early blight *(Alternaria solani),* Cercospora leaf mold *(Pseudocercospora fuligena),* bacterial wilt *(Ralstonia solanacearum),* and stem rot *(Sclerotinia sclerotiorum).*

Eggplant: gray mold (*Botrytis cinerea),* black blight (*Corynespora melongenae),* powdery mildew (*Erysiphe cichoracearum),* leaf mold *(Mycovellosiella nattrassii),* stem rot *(Sclerotinia sclerotiorum),* verticillium wilt *(Verticillium dahliae),* and brown spot *(Phomopsis vexans).*

Capsicum: phytophthora blight (*Phytophthora capsid*)*,* gray mold (*Botrytis cinerea),* Sclerotinia rot *(Sclerotinia sclerotiorum)*, anthracnose *(Colletotrichum aenigma, Colletotrichum capsici, Colletotrichum fructicola, Colletotrichum jiangxiense),* and powdery mildew *(Leveillula taurica) .*

Strawberry: gray mold (*Botrytis cinerea),* powdery mildew *(Sphaerotheca humuli),* anthracnose *(Colletotrichum acutatum, Colletotrichum fragariae),* phytophthora rot (*Phytophthora cactorum),* soft rot of fruit *(Rhizopus stolonifer),* Fusarium wilt *(Fusarium oxysporum),* Verticillium wilt *(Verticillium dahliae*), and crown rot *(Sclerotinia sclerotiorum) .*

Onion: gray-mold neck rot (*Botrytis allii),* gray mold (*Botrytis cinerea),* gray-mold neck rot (*Botrytis squamosa),* downy mildew *(Peronospora destructor)*, leaf blight (*Phytophthora porri),* leaf blight *(Ciborinia allii),* small sclerotial rot (*Botrytis squamosa),* fusarium basal rot *(Fusarium oxysporum*), pink root rot (*Pyrenochaeta terrestris),* white rot *(Sclerotium cepivorum*)*,* rust *(Puccinia allii),* and southern blight *(Sclerotium rolfsii) .*

Welsh onion: bacterial soft rot *(Pectobacterium carotovorum),* downy mildew *(Peronospora destructor),* leaf blight *(Pleospora allii),* white rot *(Sclerotium cepivorum*)*,* rust *(Puccinia allii),* leaf blight (*Botrytis squamosa),* southern blight *(Sclerotium rolfsii),* and pink root rot (*Pyrenochaeta terrestris).*

Cabbage: clubroot *(Plasmodiophora brassicae),* bacterial soft rot *(Erwinia carotovora),* black rot *(Xanthomonas campesrtis* pv. *campestris),* bacterial leaf spot *(Pseudomonas syringae* pv. *maculicola, P. s*. pv. *alisalensis*), downy mildew *(Peronospora parasitica*)*,* Sclerotinia rot *(Sclerotinia sclerotiorum),* Alternaria sooty spot *(Alternaria brassicicola),* gray mold *(Botrytis cinerea),* black leg *(Phoma lingam),* Pythium rot *(Pythium aphanidermatum, Pythium ultimum*), and white rust *(Albugo macrospora) .*

Lettuce: bacterial rot *(Pseudomonas cichorii, Pseudomonas marginalis*), soft rot *(Pectobacterium carotovorum),* downy mildew *(Bremia lactucae),* gray mold *(Botrytis cinerea),* stem rot *(Sclerotinia sclerotiorum),* Big-Vein disease *(Mirafiori lettuce big-vein ophiovirus),* root rot *(Fusarium oxysporum),* bottom rot *(Rhizoctonia solani),* and powdery mildew *(Golovinomyces orontii) .*

Common bean: stem rot *(Sclerotinia sclerotiorum),* gray mold *(Botrytis cinerea),* anthracnose *(Colletotrichum lindemuthianum),* and angular leaf spot *(Phaeoisariopsis griseola*).

Pea: mycosphaerella blight *(Mycosphaerella blight),* gray mold *(Botrytis cinerea),* Sclerotinia rot *(Sclerotinia sclerotiorum),* and powdery mildew *(Erysiphe pisi).*

Apple: powdery mildew *(Podosphaera leucotricha),* scab *(Venturia inaequalis),* Monilia leaf blight *(Monilinia mali*)*,* fruit spot *(Mycosphaerella pomi)*, Valsa canker *(Valsa mali*)*,* Alternaria blotch *(Alternaria mali*)*,* rust *(Gymnosporangium yamadae*), ring rot *(Botryosphaeria berengeriana),* bitter rot *(Glomerella cingulate, Colletotrichum acutatum),* blotch *(Diplocarpon mali*)*,* fly speck *(Zygophiala jamaicensis),* sooty blotch *(Gloeodes pomigena*), violet root rot *(Helicobasidium mompa*), white root rot *(Rosellinia necatrix),* gray mold *(Botrytis cinerea),* fire blight *(Erwinia amylovora*), silver leaf *(Chondrostereum purpureum*)*,* and crown gall *(Rhizobium radiobacter, Rhizobium rhizogenes).*

Japanese apricot: scab *(Cladosporium carpophilum*), gray mold (*Botrytis cinerea),* brown rot *(Monilinia mumecola*), sooty blotch *(Peltaster* sp.), pocket *(Taphrina pruni),* and brown shot hole *(Phloeosporella padi) .*

Persimmon: powdery mildew (*Phyllactinia kakicola),* anthracnose *(Gloeosporium kaki*), angular leaf spot *(Cercospora kaki*), circular leaf spot (*Mycosphaerella nawae),* gray mold (*Botrytis cinerea),* and fly speck (*Zygophiala jamaicensis) .*

Peach: brown rot *(Monilinia fructicola, Monilia fructigena),* scab *(Cladosporiumcarpophilum),* Phomopsis rot *(Phomopsis* sp.), bacterial shot hole *(Xanthomonas campestris* pv. *pruni),* leaf curl *(Taphrina deformans*), anthracnose *(Colletotrichum gloeosporioides*)*,* Cylindrosporium leaf spot *(Phloeosporella padi*), and Coriolus stem rot *(Coriolus versicolor*).

Almond: brown rot *(Monilinia laxa),* spot blotch *(Stigmina carpophila),* scab *(Cladosporium carpophilum),* red leaf spot *(Polystigma rubrum)*, Alternaria blotch *(Alternaria alternate),* and anthracnose *(Colletotrichum gloeospoides*)*.*

Yellow peach: brown rot *(Monilinia fructicola),* anthracnose *(Colletotrichum acutatum),* black spot *(Alternaria* sp.), young-fruit rot *(Monilinia kusanoi),* Cylindrosporium leaf spot *(Mycosphaerella cerasella*)*,* and powdery mildew *(Podosphaera tridactyla*)*.*

Grape: gray mold (*Botrytis cinerea),* powdery mildew *(Uncinula necator),* ripe rot *(Glomerella cingulata, Colletotrichum acutatum),* downy mildew *(Plasmopara viticola*), bird's eye rot *(Elsinoe ampelina),* isariopsis leaf spot *(Pseudocercospora vitis),* black rot *(Guignardia bidwellii*)*,* white rot *(Coniella castaneicola),* leaf rust *(Phakopsora ampelopsidis*), cottony bunch (pathogen unidentified), and crown gall *(Rhizobium radiobacter, Rhizobium vitis*)*.*

Pear: scab *(Venturia nashicola*), rust (*Gymnosporangium asiaticum),* black spot *(Alternaria kikuchiana)*, ring rot (*Botryosphaeria berengeriana),* powdery mildew (*Phyllactinia mali),* Phomopsis canker *(Phomopsis fukushii),* brown spot *(Stemphylium vesicarium*)*,* and anthracnose *(Glomerella cingulata) .*

Tea: gray blight *(Pestalotiopsis longiseta, P. theae*), anthracnose *(Colletotrichum theae-sinensis),* net blister blight *(Exobasidium reticulatum),* bacterial shoot blight *(Pseudomonas syringae),* and blister blight *(Exobasidium vexans) .*

Citrus fruits: scab *(Elsinoe fawcettii*)*,* blue mold *(Penicillium italicum),* green mold *(Penicillium digitatum),* gray mold *(Botrytis cinerea*), black spot *(Diaporthe citri*)*,* canker *(Xanthomonas campestris* pv. *Citri),* powdery mildew *(Oidium* sp.), late blight *(Phytophthora citrophthora),* and anthracnose *(Colletotrichum fioriniae*).

Kiwifruit: bacterial blossom blight *(Pseudomonas marginalis, Pseudomonas syringae, Pseudomonas viridiflava),* bacterial canker *(Pseudomonas syringae)*, gray mold *(Botrytis cinerea),* soft rot *(Botryosphaeria dothidea, Diaporthe* sp., *Lasiodiplodia theobromae),* and sooty spot *(Pseudocercospora actinidiae).*

Olive: anthracnose *(Colletotrichum acutatum, Colletotrichum gloeosporioides)* and peacock spot *(Spilocaea oleaginea) .*

Chestnut: anthracnose *(Colletotrichum gloeosporioides) .*

Wheat: powdery mildew *(Blumeria graminis* f. sp. *tritici)*, Fusarium blight *(Gibberella zeae, Fusarium avenaceum, Fusarium culmorum, Fusarium crookwellense, Microdochium nivale),* brown rust *(Puccinia recondita),* stripe rust *(Puccinia striiformis*), browning root rot *(Pythium iwayamai),* snow mold *(Monographella nivalis),* eye spot *(Pseudocercosporella herpotrichoides),* speckled leaf blotch *(Septoria tritici),* glume blotch *(Leptosphaeria nodorum)*, Typhula snow blight *(Typhula incarnata),* Sclerotinia snow blight *(Myriosclerotinia borealis),* take-all *(Gaeumannomyces graminis)*, ergot *(Claviceps purpurea),* stinking smut *(Tilletia caries),* loose smut *(Ustilago nuda),* blast *(Pyricularia grisea),* damping-off *(Pythium* spp., *Fusarium* spp., *Rhizoctonia* spp.), and seedling blight *(Pythium* spp., *Fusarium* spp., *Rhizoctonia* spp.).

Barley: stripe *(Pyrenophora graminea),* net blotch *(Pyrenophora teres),* sacald *(Rhynchosporium secalis*)*,* loose smut *(Ustilago tritici, U. nuda),* damping-off *(Pythium* spp., *Fusarium* spp., *Rhizoctonia* spp.), and seedling blight *(Pythium* spp., *Fusarium* spp., *Rhizoctonia* spp.).

Rice: blast *(Pyricularia oryzae),* sheath blight *(Rhizoctonia solani),* "Bakanae" disease *(Gibberella fujikuroi),* brown spot *(Cochliobolus miyabeanus),* seedling blight *(Pythiumgraminicola),* bacterial leaf blight *(Xanthomonas oryzae)*, bacterial seedling blight *(Burkholderia plantarii),* bacterial brown stripe *(Acidovorax avenae),* bacterial grain rot *(Burkholderia glumae)*, Cercospora leaf spot *(Cercospora oryzae),* false smut *(Ustilaginoidea virens),* discoloured rice grains *(Alternaria alternate, Curvularia intermedia),* kernel discoloration *(Alternaria padwickii),* and pink coloring of rice grains *(Epicoccum purpurascens) .*

Tobacco: Sclerotinia stem-rot *(Sclerotinia sclerotiorum),* powdery mildew *(Erysiphe cichoracearum),* and black shank *(Phytophthora nicotianae).*

Tulip: gray mold *(Botrytis cinerea),* Botrytis blight *(Botrytis tulipae),* leaf rot *(Rhizoctonia solani),* bulb rot *(Fusarium oxysporum),* and bulb-coat rot *(Rhizoctonia solani*)*.*

Rose: black spot *(Diplocarpon rosae),* powdery mildew *(Erysiphe simulans, Podosphaera pannosa),* and Botrytis blight *(Botrytis cinerea).*

Chrysanthemum: Botrytis blight *(Botrytis cinerea),* rust *(Puccinia horiana),* downy mildew *(Paraperonospora minor, Peronospora danica),* Pythium blight *(Pythium aphanidermatum, Pythium dissotocum, Pythium helicoides, Pythium oedochilum, Pythium sylvaticum),* root and stem rot *(Rhizoctonia solani*)*,* and Fusarium blight *(Fusarium solani).*

Gerbera: gray mold *(Botrytis cinerea)* and powdery mildew *(Podosphaera xanthii) .*

Lily: Botrytis blight *(Botrytis elliptica, Pestalotiopsis* sp.) and gray mold *(Botrytis cinerea).*

Sunflower: downy mildew *(Plasmopara halstedii),* Sclerotinia rot *(Sclerotinia sclerotiorum),* and gray mold *(Botrytis cinerea)* .

Bent grass: Sclerotinia snow blight *(Sclerotinia borealis),* large patch *(Rhizoctonia solani*)*,* brown patch *(Rhizoctonia solani*)*,* dollar spot *(Sclerotinia homoeocarpa)*, blast (*Pyricularia* sp.), Pythium red blight *(Pythium aphanidermatum),* and anthracnose *(Colletotrichum graminicola) .*

Orchard grass: powdery mildew *(Erysiphe graminis).*

Soy: purple stain *(Cercospora kikuchii),* downy mildew *(Peronospora manshurica),* stem rot *(Phytophthora sojae),* rust *(Phakopsora pachyrhizi),* Sclerotinia rot *(Sclerotinia sclerotiorum)*, anthracnose *(Colletotrichum truncatum),* gray mold *(Botrytis cinerea),* Sphaceloma scab *(Elsinoe glycines),* pod and stem blight *(Diaporthe phaseolorum* var. *sojae),* damping-off *(Pythium* spp., *Fusarium* spp., *Rhizoctonia* spp.), and seedling blight *(Pythium* spp., *Fusarium* spp., *Rhizoctonia* spp.).

Potato: late blight *(Phytophthora infestans),* early blight *(Alternaria solani*)*,* black scurf *(Thanatephorus cucumeris),* Verticillium wilt (*Verticillium albo-atrum, V. dahliae, V. nigrescens)*, black leg *(Pectobacterium atrosepticum),* bacterial soft rot *(Pectobacterium carotovorum*)*,* gray mold *(Botrytis cinerea),* common scab *(Streptomyces* spp.), and Sclerotial rot *(Sclerotinia sclerotiorum).*

Yam: leaf spot (*Cylindrosporium dioscoreae*)*,* anthracnose *(Colletotrichum gloeosporioides)* and blue mold *(Penicillium sclerotigenum*)*.*

Sweet potato: violet root rot *(Helicobasidium mompa)* and stem rot *(Fusarium oxysporum*)*.*

Taro: Phytophthora blight (*Phytophthora colocasiae)* and stem rot *(Rhizoctonia solani).*

Ginger: root rot (*Pythium ultimum, Pythium myriotylum*) and leaf spot (*Phyllosticta zingiberis*)*.*

Banana: Panama disease *(Fusarium oxysporum*) and Sigatoka disease *(Mycosphaerella fijiensis, M. musicola).*

Mango: anthracnose *(Colletotrichum aenigma),* bacterial canker *(Xanthomonas campestris),* stem-end rot *(Diaporthe pseudophoenicicola, Lasiodiplodia theobromae, Lasiodiplodia* spp., *Neofusicoccum parvum, Neofusicoccum* sp.), and gray mold (*Botrytis cinerea).*

Rapeseed: Sclerotinia rot *(Sclerotinia sclerotiorum),* root rot *(Phoma lingam),* gray leaf spot *(Alternaria brassicae)*, powdery mildew (*Erysiphe cruciferarum, Erysiphe cichoracearum, Oidium matthiolae),* and downy mildew *(Peronospora parasitica) .*

Coffee: rust *(Hemileia vastatrix),* anthracnose *(Colletotrichum coffeanum),* and leaf spot *(Cercospora coffeicola) .*

Sugarcane: brown rust *(Puccinia melanocephala*)*.*

Corn: zonate leaf spot *(Gloeocercospora sorghi),* rust *(Puccinia sorghi),* southern rust *(Puccinia polysora),* smut *(Ustilago maydis),* southern leaf spot *(Cochliobolus heterostrophus),* leaf blight *(Setosphaeria turcica),* damping-off *(Pythium* spp., *Fusarium* spp., *Rhizoctonia* spp.), and seedling blight *(Pythium* spp., *Fusarium* spp., *Rhizoctonia* spp.).

Cotton: seedling blight *(Pythium* sp.), rust *(Phakopsora gossypii)*, frosty mildew *(Mycosphaerella areola),* and anthracnose *(Glomerella gossypii*)*.*

Hop: downy mildew *(Pseudoperonospora humuli),* powdery mildew *(Oidium* sp, *Podosphaera macularis),* and gray mold *(Botrytis cinerea)*.

The agricultural and horticultural fungicidal composition of the present invention may be applied to each part of plants such as leaves, stems, stalks, flowers, buds, fruits, seeds, sprouts, roots, tubers, tuberous roots, shoots, and cuttings. The agricultural and horticultural fungicidal composition of the present invention may be applied also to improved varieties/modified varieties, cultivars, as well as mutants, hybrids and genetically modified organisms (GMO) of these plants.

The agricultural and horticultural fungicidal composition of the present invention may be used for seed treatment, foliage application, soil application, water surface application and the like to be conducted in order to control various diseases occurring in agricultural and horticultural crop plants including flowers, turf grasses, and pasture grasses.

The present invention is also a seed coated with a layer comprising the agricultural and horticultural fungicidal composition.

The agricultural and horticultural fungicidal composition of the present invention may be used as a seed treatment agent, and any form of seed treatment known to those skilled in the art may be applied, such as soaking or submerging seeds in the present composition, or coating with the composition. The seed treatment is performed before seeding seeds.

Applying the present composition onto seeds in the form of coating is a preferred form.

In coating, seeds may be coated by using various methods known in the art. For example, the coating process may include spraying the seed treatment composition onto seed surfaces while the seeds are stirred in a proper machine such as a tumbler and a pan granulator.

The agricultural and horticultural fungicidal composition of the present invention may contain other ingredients than the component (I) and the component (II). As the other ingredients, known ingredients for use in formulation or the like may be exemplified.

As the dosage form of the agricultural and horticultural fungicidal composition of the present invention, forms that may be taken by common pesticides, specifically, a dustable powder (DP), a wettable powder (WP), an emulsifiable concentrate (EC), a flowable (FL), a suspension concentrate (SC), a water soluble powder (SP), a water dispersible granule (WG), a tablet, a granule (GR), an SE agent (suspo emulsions), an OD agent (oil dispersion), an EW agent (emulsion oil in water), or the like may be exemplified. The formulation is not particularly limited in terms of the method or procedure, and may be carried out with a known method or procedure.

Regarding aspects of the present invention, one of aspects of the present invention with no particular limitation on formulation auxiliary materials that are used in formulation, such as carriers, solvents, and additives, is a fungicidal composition containing an agrochemically acceptable solid carrier and/or liquid carrier.

For a solid dosage form, solid carriers such as plant powders such as soybean flour and flour, mineral fine powders such as diatomaceous earth, apatite, gypsum, talc, bentonite, pyrophyllite, and clay, and organic and inorganic compounds such as sodium benzoate, urea, and Glauber's salt may be used.

For a liquid dosage form, liquid carriers such as petroleum distillates such as kerosene, xylene, and solvent naphtha, cyclohexane, cyclohexanone, dimethylformamide, dimethyl sulfoxide, alcohol, acetone, trichloroethylene, methyl isobutyl ketone, mineral oils, plant oils, and water may be used.

In formulation, a surfactant may be added, as necessary. As the surfactant, a nonionic surfactant such as alkyl phenyl ether with polyoxyethylene added, alkyl ether with polyoxyethylene added, higher fatty acid ester with polyoxyethylene added, sorbitan higher fatty acid ester with polyoxyethylene added, and tristyrylphenyl ether with polyoxyethylene added, a sulfric acid ester salt of alkyl phenyl ether with polyoxyethylene added, an alkyl benzene sulfonate, a sulfric acid ester salt of higher alcohol, an alkyl naphthalene sulfonate, a polycarboxylate, a ligninsulfonate, a formaldehyde condensate of alkylnaphthalenesulfonate, an isobutylene-maleic anhydride copolymer, or the like may be exemplified.

The active ingredient concentration of the fungicidal composition of the present invention may be appropriately set depending on the dosage form. For example, the active ingredient concentration for wettable powders is preferably 5 to 90% by weight, and more preferably 10 to 85% by weight. The active ingredient concentration for elmulsifiable concentrates is preferably 3 to 70% by weight, and more preferably 5 to 60% by weight. The active ingredient concentration for granules is preferably 0.01 to 50% by weight, and more preferably 0.05 to 40% by weight.

There is no particular limitation on a method of preparing a formulation, and a known preparation method can be used depending on a dosage form.

Several formulation examples are shown below. The pharmaceutical formulations shown below are merely exemplary and can be modified without deviating from the concept of the present invention. The present invention is in no way limited by the following formulation examples. "Parts" represent "parts by weight" unless otherwise noted.

### (Formulation Example 1: wettable powder)

40 parts of a compound of the component (I) and the component (II), 53 parts of diatomaceous earth, 4 parts of a higher alcohol sulfuric acid ester, and 3 parts of an alkyl naphthalene sulfonate were uniformly mixed and finely pulverized to obtain a wettable powder containing 40% of the active ingredient.

### (Formulation Example 2: emulsion)

30 parts of the compound of the component (I) and the component (II), 33 parts of xylene, 30 parts of dimethylformamide, and 7 parts of a polyoxyethylene alkyl allyl ether were mixed and dissolved to obtain an emulsion containing 30% of the active ingredient.

### (Formulation Example 3: granule)

5 parts of the compound of the component (I) and the component (II), 40 parts of talc, 38 parts of clay, 10 parts of bentonite, and 7 parts of sodium alkyl sulfate were uniformly mixed and finely pulverized, and then granulated into a granular form having a diameter of 0.5 to 1.0 mm to obtain a granule containing 5% of the active ingredient.

### (Formulation Example 4: granule)

5 parts of the compound of the component (I) and the component (II), 73 parts of clay, 20 parts of bentonite, 1 part of sodium dioctyl sulfosuccinate, and 1 part of potassium phosphate were uniformly mixed and pulverized. Water was added thereto and thoroughly kneaded, followed by granulation and drying to obtain a granule containing 5% of the active ingredient.

### (Formulation Example 5: suspension)

10 parts of the compound of the component (I) and the component (II), 4 parts of a polyoxyethylene alkyl allyl ether, 2 parts of a polycarboxylic acid sodium salt, 10 parts of glycerin, 0.2 parts of xanthan gum, and 73.8 parts of water were mixed and subjected to wet grinding until the particle size becomes 3 microns or less to obtain a suspension containing 10% of the active ingredient.

### (Formulation Example 6: granular wettable powder)

40 parts of the compound of the component (I) and the component (II), 36 parts of clay, 10 parts of potassium chloride, 1 part of sodium alkylbenzenesulfonate, 8 parts of sodium lignosulfonate, and 5 parts of a formaldehyde condensation product of sodium alkylbenzenesulfonate were uniformly mixed and finely pulverized followed by adding a suitable amount of water and kneading to form a clay-like product. The clay-like product was granulated and dried to obtain a granular wettable powder containing 40% of the active ingredient.

Next, Synthesis Examples of the compound (I) are shown, and the present invention will be more concretely described. However, the present invention is in no way limited by the following synthesis examples.

### [Synthesis Example]

Synthesis of N-((2S)-1-(3-(2-(5-fluoro-2-methoxyphenyl)-2-hydroxyethyl)-5-((E)-1-(isopropoxyimino)ethyl)-2,6-dioxo-3,6-dihydropyrimidin-1(2H)-yl)propan-2-yl)isobutyramide

### (Step 1)

### Synthesis of (E)-5-(1-(isopropoxyimino)ethyl)pyrimidine-2,4(1H,3H)-dione

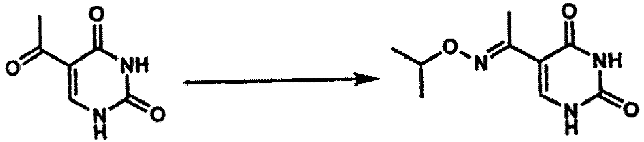

5-Acetylpyrimidine-2,4(1H,3H)-dione (15.4 g) was dissolved in ethanol (200 ml) and chloroform (100 ml), 2-(aminooxy)propane hydrochloride (14.0 g) was added, and the resulting mixture was stirred at 45°C for 3 hours.

Water was added to the reaction solution. The solution was extracted with methylene chloride and then dried with anhydrous sodium sulfate. The solvent was removed by vacuum distillation to obtain 20.6 g of the target compound. Yield: 98%

¹H-NMR of the target product obtained is shown below. ¹H-NMR (DMSO-D₆) δ: 11.26 (1H, s), 11.11 (1H, d, J = 5.9 Hz), 7.42 (1H, d, J = 5.9 Hz), 4.31-4.25 (1H, m), 1.99 (3H, s), 1.20 (6H, d, J= 6.3 Hz) .

### (Step 2)

### Synthesis of (E)-1-(2-(5-fluoro-2-methoxyphenyl)-2-oxoethyl)-5-(1-(isopropoxyimino)ethyl)pyrimidine-2,4(1H,3H)-dione (production intermediate)

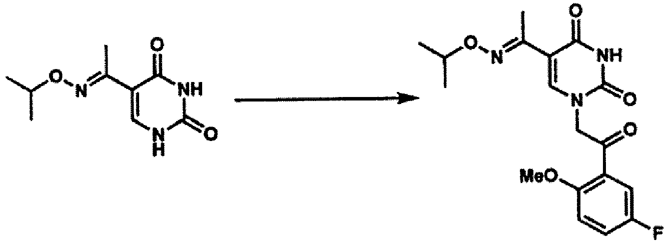

(E)-5-(1-(Isopropoxyimino)ethyl)pyrimidine-2,4(1H,3H)-dione (2.11 g) was dissolved in N,N-dimethylformamide (30 ml), potassium carbonate (1.50 g) and 2-bromo-5'-fluoro-2'-methoxyacetophenone (2.55 g) were added, and the resulting mixture was stirred at room temperature for 3 hours. Water was added to the reaction solution, and the resulting solid was filtered to obtain 3.39 g of the target product. Yield: 90%
¹H-NMR of the target product obtained is shown below. ¹H-NMR (CDCl₃) δ: 8.23 (1H, s), 7.67-6.98(3H, m), 7.34(1H, s), 5.13(2H, s), 4.35-4.32 (1H, m), 3.98(3H, s), 2.19 (3H, s), 1.25 (6H, d, J = 6.3 Hz).

### (Step 3)

### Synthesis of (S,E)-N-(1-(3-(2-(5-fluoro-2-methoxyphenyl)-2-oxoethyl)-5-(1-(isopropoxyimino)ethyl)-2,6-dioxo-3,6-dihydropyrimidin-1(2H)-yl)propan-2-yl)isobutyramide

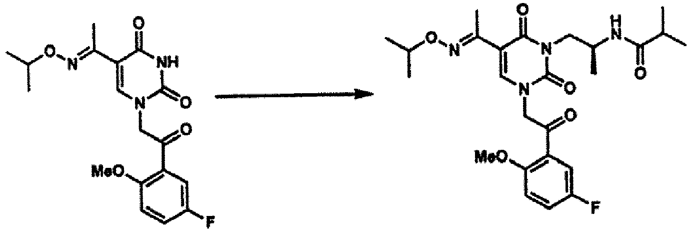

(E)-1-(2-(5-Fluoro-2-methoxyphenyl)-2-oxoethyl)-5-(1-(isopropoxyimino)ethyl)pyrimidine-2,4(1H,3H)-dione (0.56 g) was dissolved in tetrahydrofuran (7 ml), tert-butyl (S)-(1-hydroxypropan-2-yl)carbamate (0.38 g), triphenylphosphine (0.58 g), and bis(2-methoxyethyl) azodicarboxylate (0.52 g) were added, and the resulting mixture was stirred at room temperature for 2 hours.

The reaction solution was purified by silica gel column chromatography (eluent: hexane/ethyl acetate), the obtained product was dissolved in 1,4-dioxane (7 ml), a 4 N hydrogen chloride/1,4-dioxane solution (7 ml) was added, and the resulting mixture was stirred at room temperature for 4 hours. The reaction solution was concentrated, the obtained residue was dissolved in methylene chloride (7 ml), triethylamine (3 ml) and isobutanoyl chloride (0.1 ml) were added under ice cooling, and the resulting mixture was stirred for 30 minutes. The reaction solution was concentrated under reduced pressure, and the obtained residue was purified by silica gel column chromatography (eluent: chloroform/ethyl acetate) to obtain 0.45 g of the target compound. Yield: 60%

¹H-NMR of the target product obtained is shown below. ¹H-NMR (CDCl₃) δ: 7.62-6.99 (3H, m), 7.30(1H, s), 6.08-2.20(8H, m), 3.98 (3H, s), 2.15(3H, s), 1.25-1.03 (15H, m)

### (Step 4)

### Synthesis of N-((2S)-1-(3-(2-(5-fluoro-2-methoxyphenyl)-2-hydroxyethyl)-5-((E)-1-(isopropoxyimino)ethyl)-2,6-dioxo-3,6-dihydropyrimidin-1(2H)-yl)propan-2-yl)isobutyramide

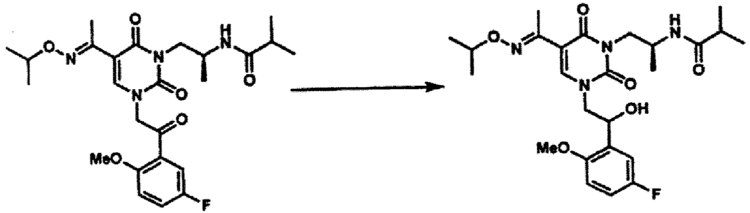

(S,E)-N-(1-(3-(2-(5-Fluoro-2-methoxyphenyl)-2-oxoethyl)-5-(1-(isopropoxyimino)ethyl)-2,6-dioxo-3,6-dihydropyrimidin-1(2H)-yl)propan-2-yl)isobutyramide (0.25 g) was dissolved in methanol (2 ml) and tetrahydrofuran (2 ml), sodium borohydride (18 mg) was added under ice cooling, and the resulting mixture was stirred for 20 minutes.

A saturated ammonium chloride aqueous solution was added to the reaction solution. The solution was extracted with ethyl acetate, washed with water and saturated brine, and then dried with anhydrous sodium sulfate. The solvent was removed by vacuum distillation, and the obtained residue was purified by silica gel column chromatography (eluent: n-hexane/ethyl acetate) to obtain a target compound 3 (0.11 g) and an isomer of the compound 3 (0.11 g). Yield: 44% each

¹H-NMR of the target products obtained is shown below. Compound 3: ¹H-NMR (CDCl₃) δ: 7.38(1H, s),7.36-6.79 (3H, m), 5.64-4.22 (7H, m), 3.84 (3H, s), 3.80-3.11(2H, m), 2.25-2.16(1H, m), 2.12(3H, s), 1.24-1.02(15H, m)isomer of compound 3: ¹H-NMR (CDCl₃) δ: 7.42(1H, s),7.39-6.79 (3H, m), 5.72-2.16 (10H, m), 3.84 (3H, s), 2.14(3H, s), 1.27-1.02(15H, m)

The fungicidal effect of the agricultural and horticultural fungicidal composition of the present invention is illustrated in a Test Example below.

### (Test Example) Gray Mold Antimicrobial Test (growth inhibition rate)

Conidiospores of a gray mold pathogen (*Botrytis cinerea)* were added to and dispersed in a yeast extract sucrose medium, and a component (I) and a component (II) dissolved in dimethyl sulfoxide at predetermined concentrations were further added and mixed thereto, and the resulting solution was dispensed onto a 96-well microplate and cultivated in the dark at 20°C for 3 to 5 days. After the cultivation, the turbidity at a wavelength of 405 nm was measured by a microplate reader and compared with that in the untreated case to determine the growth inhibition rate (%) for the gray mold pathogen. The test was duplicately carried out. The results are shown in Tables 3 to 7 together with expected values calculated as follows.

Expected values were calculated by using Colby's equation: E = M + N - MN / 100. Here, E denotes an expected value (%) of a growth inhibition rate, M denotes a growth inhibition rate (%) in using a component (I) alone, and N denotes a growth inhibition rate (%) in using a component (II) alone.

If the actually measured growth inhibition rate (%) of a composition of a component (I) and a component (II) is higher than the expected value, E, the composition of a component (I) and a component (II) is said to have exerted synergistic effect.

In Tables 3 to 7, good synergistic effect was found for any combination of a component (I) and a component (II) .

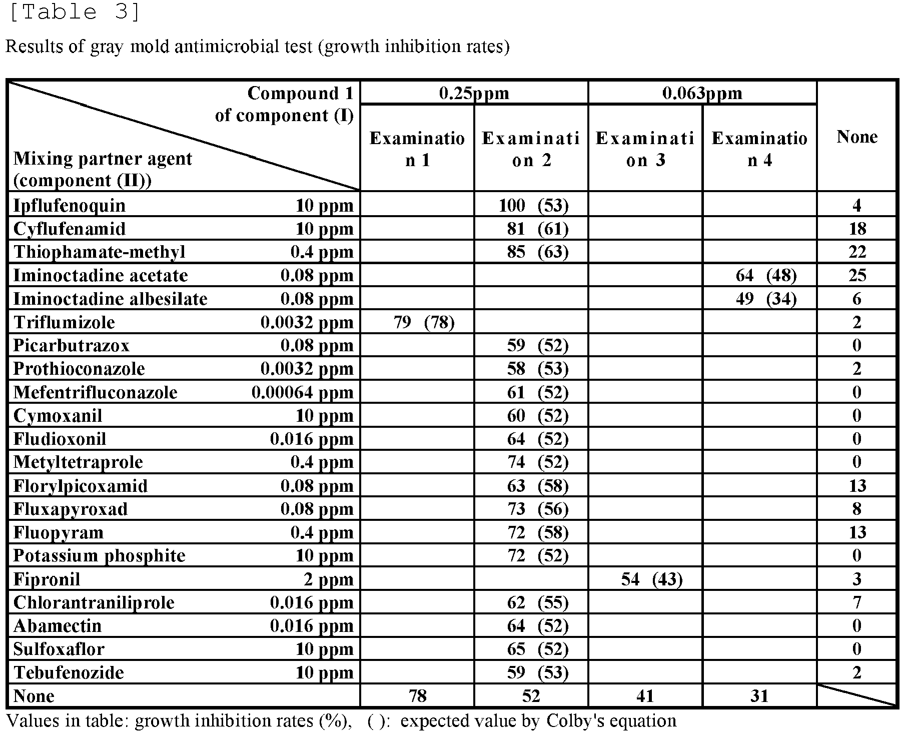

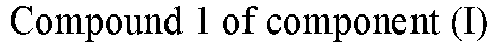

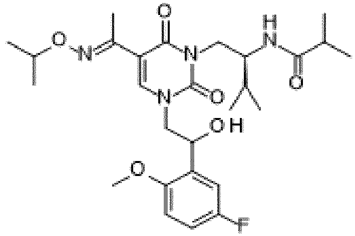

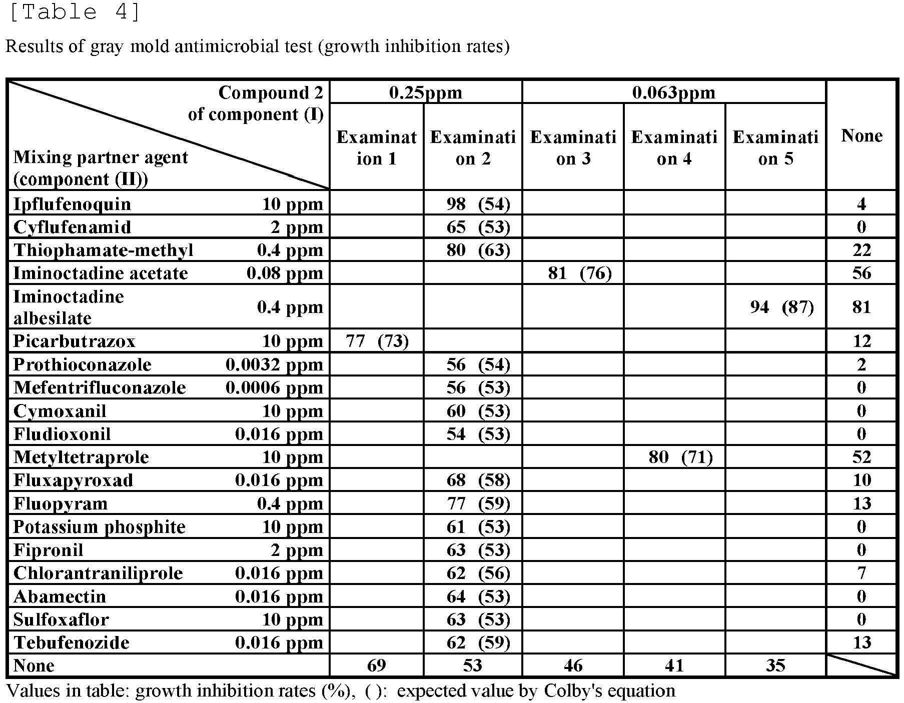

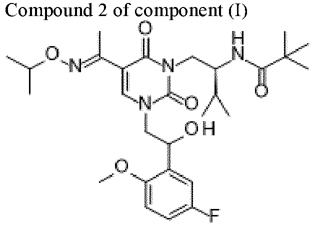

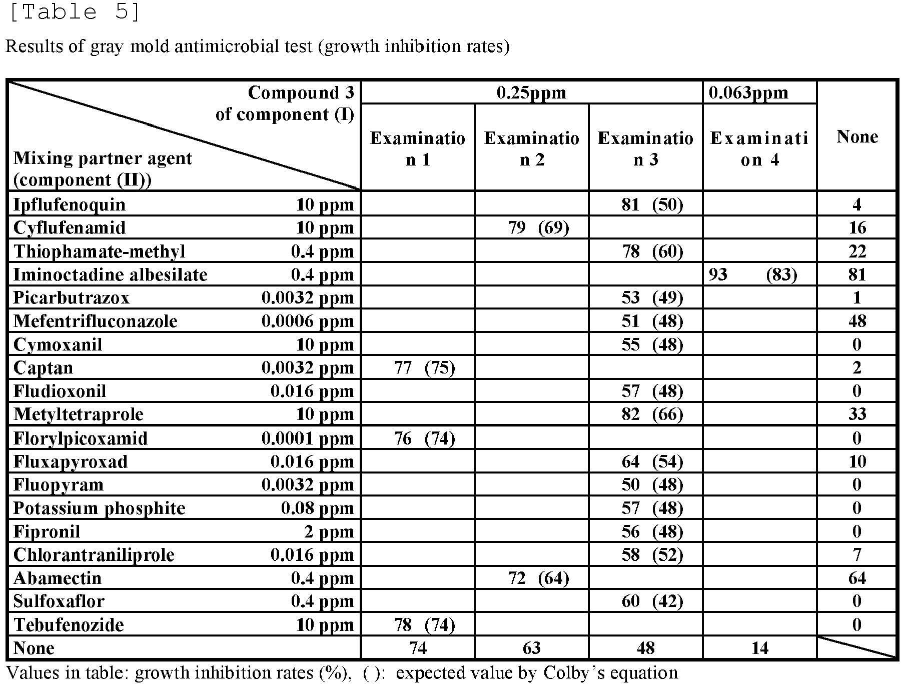

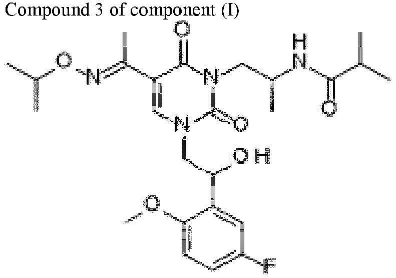

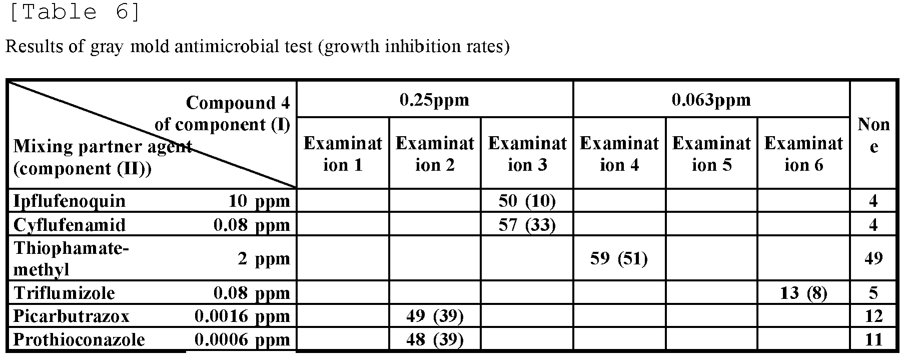

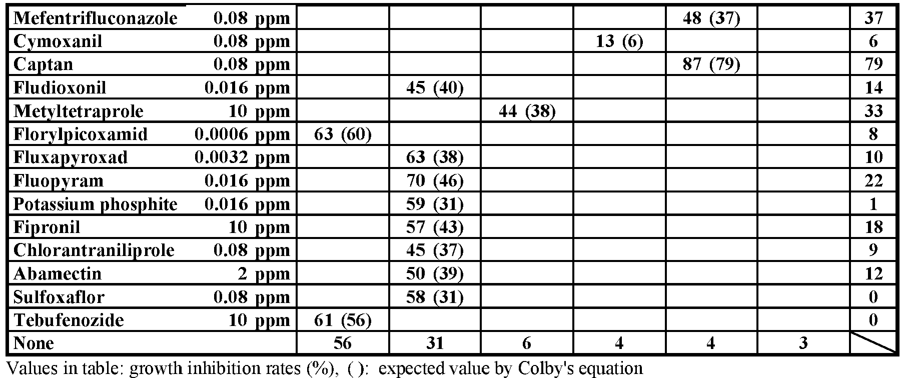

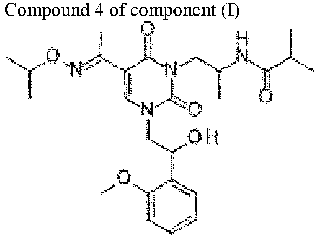

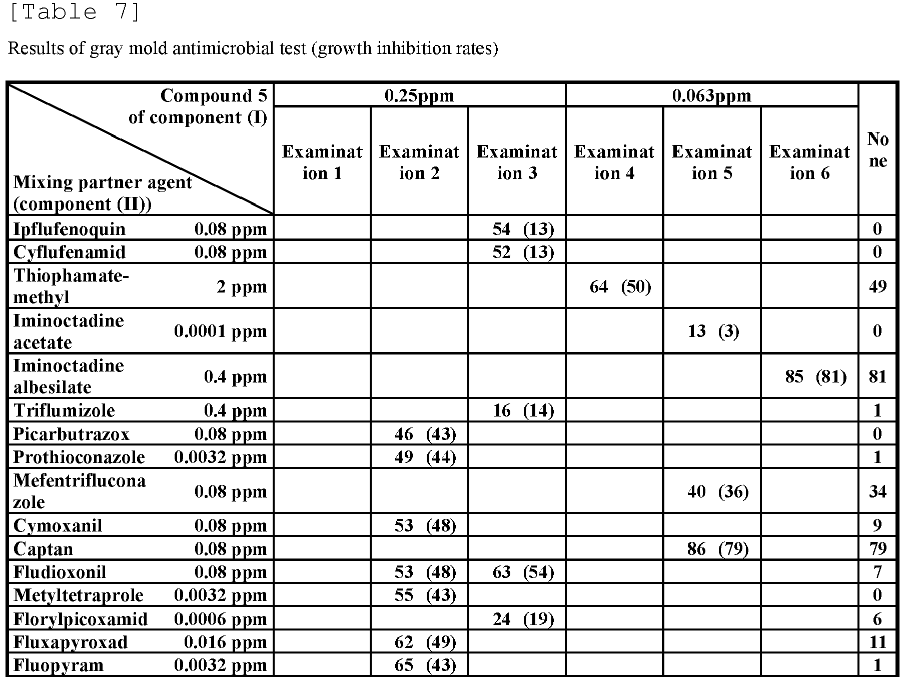

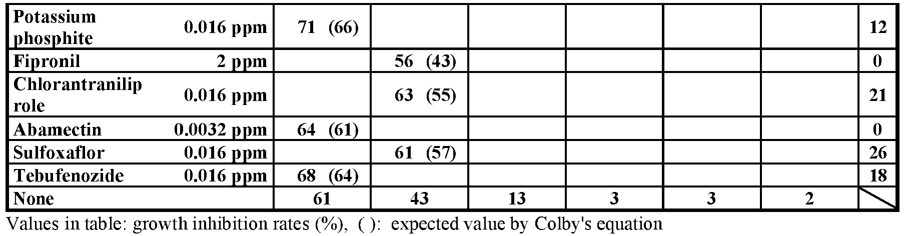

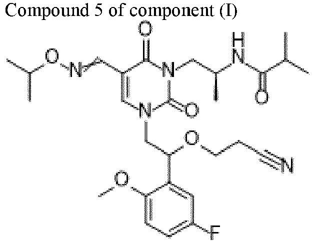

### (Test Example) Cucumber Powdery Mildew Control Test 1) Preparation of drug solution for test

5 parts by weight of a component (I), 93.5 parts by weight of N,N-dimethylformamide, and 1.5 parts by weight of polyoxyethylene sorbitan monolaurate (TWEEN(R) 20) were mixed and dissolved to form an emulsion including 5% of an active ingredient, and then the emulsion was diluted to a predetermined concentration.

Among components (II), thiophanate-methyl, triflumizole, cyflufenamid, iminoctadine acetate, iminoctadine albesilate, picarbutrazox, ipflufenoquin, prothioconazole, and mancozeb were each formulated into an emulsion including 5% of an active ingredient, and the emulsion was diluted to a predetermined concentration. The other components (II) were each formulated into an aqueous solution or suspension having a predetermined concentration. 2) Test

A mixed solution of a component (I) and a component (II) at a predetermined concentration was sprayed onto cucumber seedlings (variety: "Shimo-shirazu, creeping type", cotyledon stage). After natural drying at room temperature, conidiospores of a cucumber powdery mildew pathogen *(Sphaerotheca fuliginea)* were inoculated by blushing off, and the seedlings were kept in a thermostatic room at 20°C using a 12 hour light/dark cycle for 7 to 10 days. The states of lesion development on leaves were examined by comparing with that for the untreated case, and the control values were determined. The test was duplicately carried out. The results are shown in Tables 8 to 12 together with expected values calculated as follows.

Expected values were calculated by using Colby's equation: E = M + N - MN / 100. Here, E denotes an expected value of a control value, M denotes a control value in using a component (I) alone, and N denotes a control value in using a component (II) alone.

If the actually measured control value of a composition of a component (I) and a component (II) is higher than the expected value, E, the composition of a component (I) and a component (II) is said to have exerted synergistic effect. In Tables 8 to 12, good synergistic effect was found for any combination of a component (I) and a component (II).

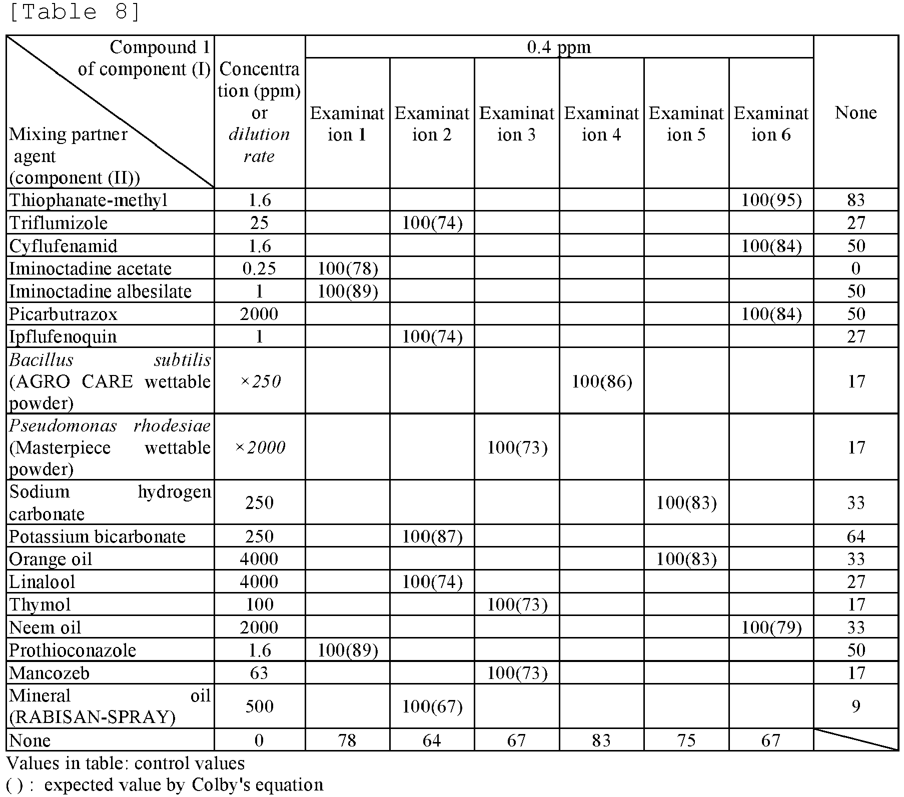

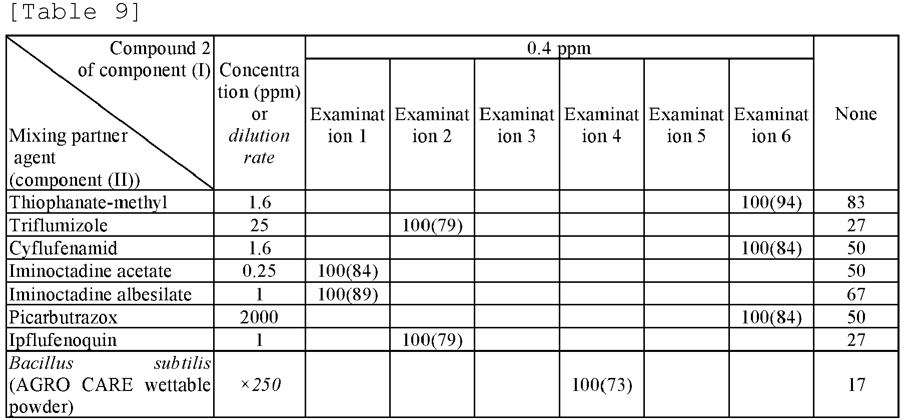

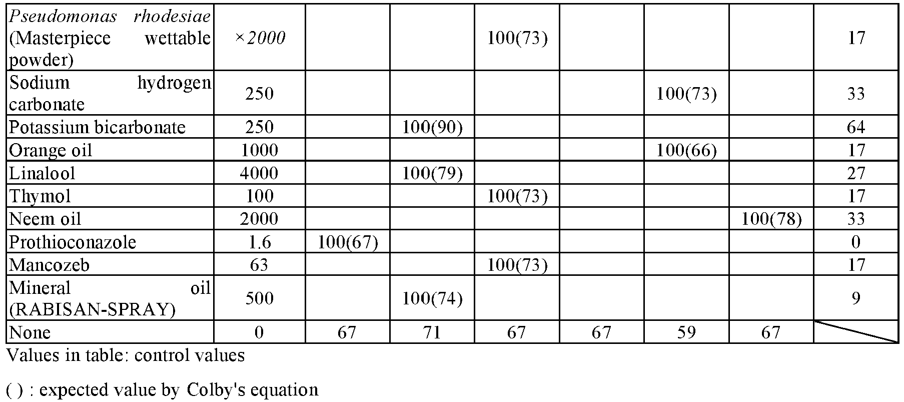

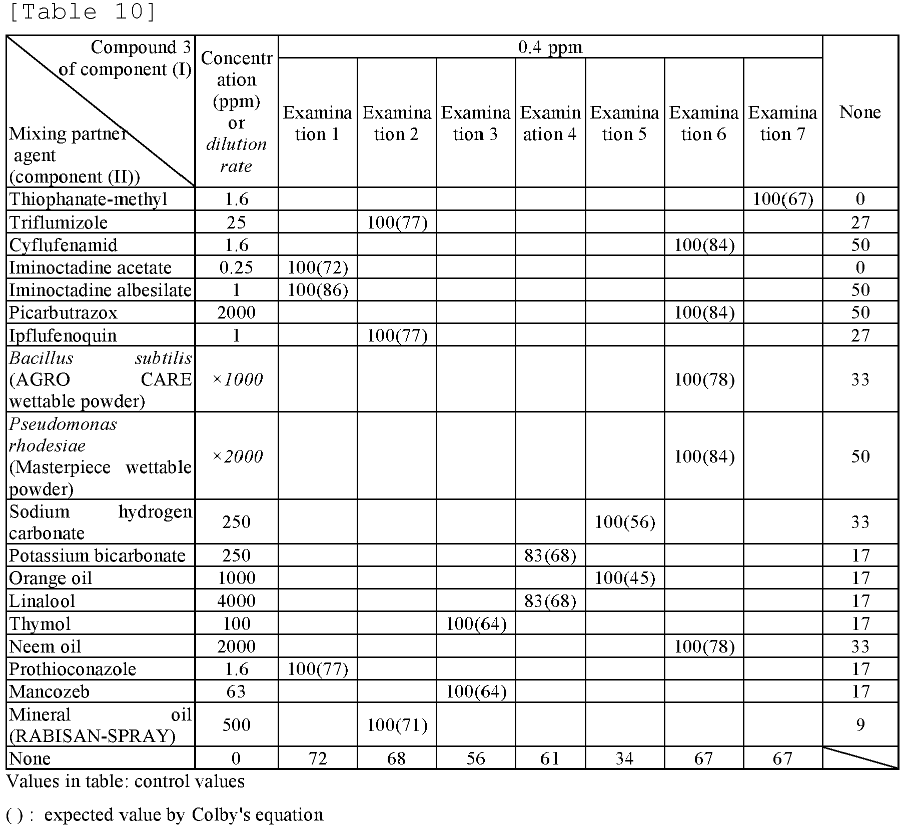

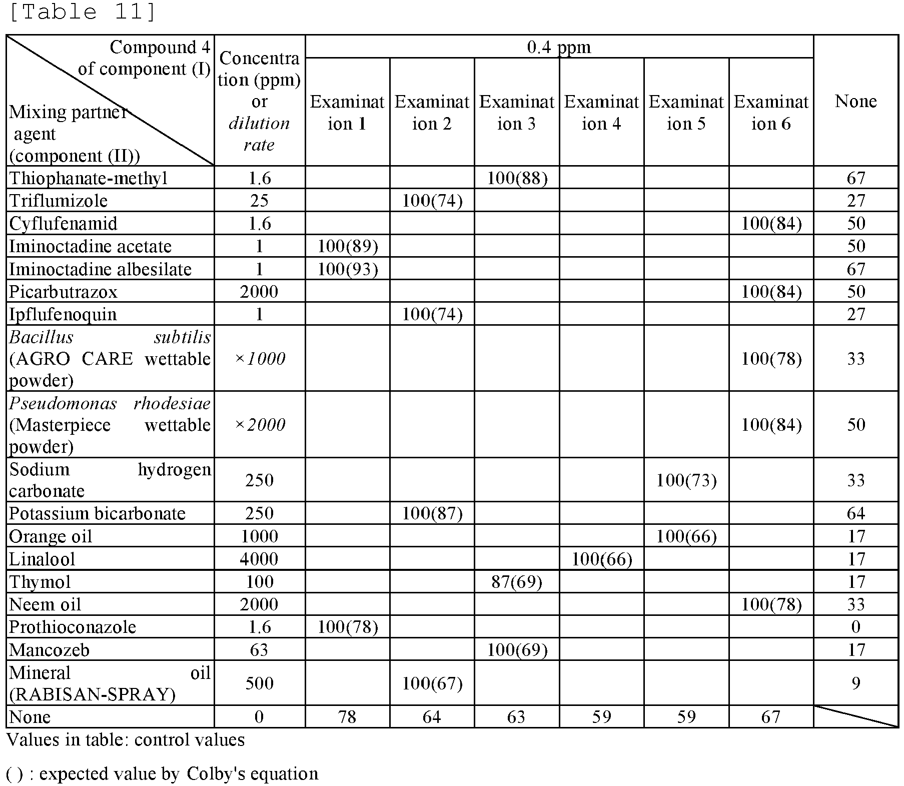

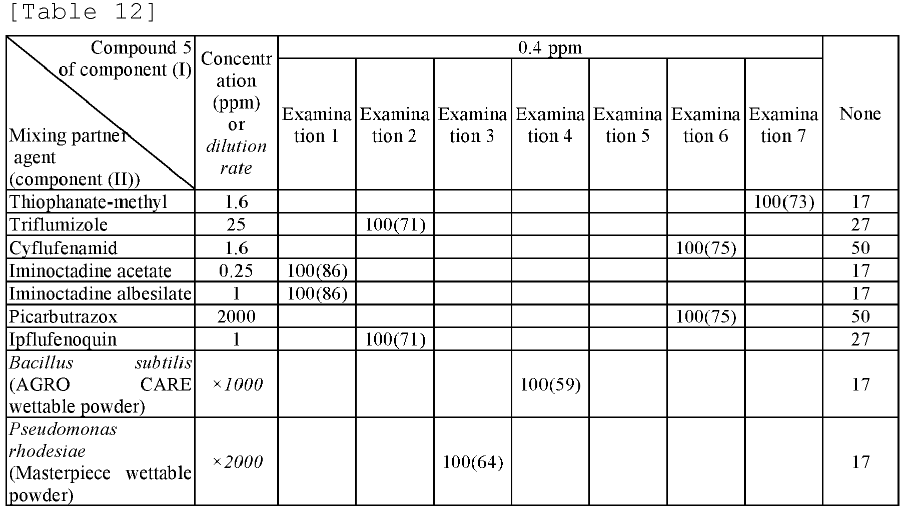

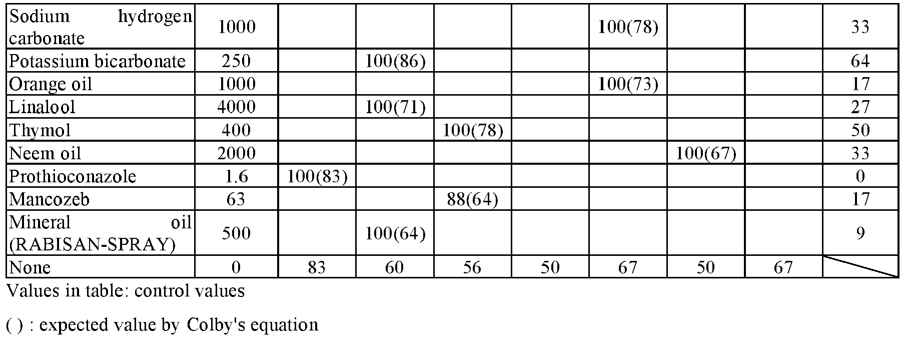

An agricultural and horticultural fungicide composition having excellent plant disease control effect not obtainable only with a single component is obtained by combining a component (I) and a component (II).

### Industrial Applicability

Since those randomly selected from among the compositions of the present invention all exert the effects as described above, the compositions of the present invention, including the compositions that are not exemplified, are understood to be those having excellent effects for plant disease control to exert high fungicidal effect with low phytotoxicity, and useful as agricultural and horticultural fungicidal compositions.

## Claims

1. An agricultural and horticultural fungicidal composition comprising a component (I) and a component (II) as active ingredients, wherein the component (I) is at least one compound selected from a compound of formula (I) or a salt thereof: 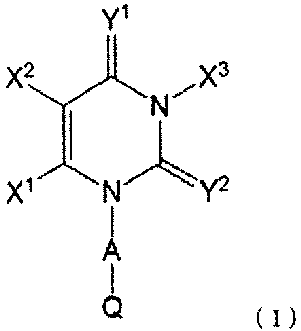 [wherein,
Y¹ represents an oxygen atom or a sulfur atom;
Y² represents an oxygen atom or a sulfur atom;
X¹ represents a hydrogen atom, a halogeno group, or a substituted or unsubstituted C1-6 alkyl group;
X² represents a group represented by R¹O-N=CR⁶-;
R¹ represents a hydrogen atom, a substituted or unsubstituted C1-6 alkyl group, a substituted or unsubstituted C2-6 alkenyl group, a substituted or unsubstituted C2-6 alkynyl group, a substituted or unsubstituted C3-6 cycloalkyl group, a substituted or unsubstituted C6-10 aryl group, or a substituted or unsubstituted 5 to 6-membered ring heterocyclyl group,
R⁶ represents a hydrogen atom or a substituted or unsubstituted C1-6 alkyl group;
X³ represents a substituted or unsubstituted linear C1-6 alkyl group;
a substituent on the linear C1-6 alkyl group in X³ is one or more substituents selected from the group consisting of a halogeno group, a substituted or unsubstituted C1-6 alkyl group, a substituted or unsubstituted C2-6 alkenyl group, a substituted or unsubstituted C2-6 alkynyl group, a hydroxy group, a substituted or unsubstituted C1-6 alkoxy group, a substituted or unsubstituted C2-6 alkenyloxy group, a substituted or unsubstituted C2-6 alkynyloxy group, a substituted or unsubstituted C1-6 alkylthio group, a substituted or unsubstituted C1-6 alkylsulfinyl group, a substituted or unsubstituted C1-6 alkylsulfonyl group, a substituted or unsubstituted C3-6 cycloalkyl group, a substituted or unsubstituted C3-6 cycloalkyloxy group, a substituted or unsubstituted C6-10 aryl group, a substituted or unsubstituted C6-10 aryloxy group, a substituted or unsubstituted C6-10 arylthio group, a substituted or unsubstituted C6-10 arylsulfinyl group, a substituted or unsubstituted C6-10 arylsulfonyl group, a substituted or unsubstituted 3 to 10-membered ring heterocyclyl group, a substituted or unsubstituted 3 to 10-membered ring heterocyclyloxy group, a nitro group, a cyano group, a group represented by R^{a}-CO-, a carboxy group, a group represented by R^{b}-O-CO-, a group represented by R^{c}R^{d}N-, a group represented by R^{c}R^{d}N-CO-, a group represented by R^{c}R^{d}N-NR^{d}-CO-, a group represented by R^{a}-CO-O-, a group represented by R^{a}-CO-NR^{e}-, a group represented by R^{a}-CO-CO-NR^{e}-, a group represented by R^{a}-CO-NR^{e}-NR^{e}-, a group represented by R^{a}-CO-NR^{e}-NR^{e}-CO-, a group represented by R^{b}-O-CO-O-, a group represented by R^{b}-O-CO-NR^{e}-, a group represented by R^{c}R^{d}N-CO-O-, a group represented by R^{c}R^{d}N-CO-NR^{e}-, a group represented by R^{c}R^{d}N-CO-CO-NR^{e}-, a group represented by R^{a}-CS-NR^{e}-, a group represented by R^{c}R^{d}N-CS-NR^{e}-, a group represented by R^{b}SO₂-NR^{e}-, a group represented by R^{c}R^{d}N-SO₂-, a group represented by R^{a}O-N=CR^{f}-, a group represented by R^{h}RⁱC=N-O-, a group represented by R^{a}-C(=NR^{g})-NR^{e}-, a group represented by R^{c}R^{d}N-C(=NR^{g})-, a group represented by R^{h}RⁱS(=O)=N-CO-, and a group represented by R^{h}RⁱS=N-CO-;
each R^{a} independently represents a hydrogen atom, a substituted or unsubstituted C1-6 alkyl group, a substituted or unsubstituted C2-6 alkenyl group, a substituted or unsubstituted C2-6 alkynyl group, a substituted or unsubstituted C3-6 cycloalkyl group, a substituted or unsubstituted C6-10 aryl group, or a substituted or unsubstituted 3 to 10-membered ring heterocyclyl group,
each R^{b} independently represents a substituted or unsubstituted C1-6 alkyl group, a substituted or unsubstituted C2-6 alkenyl group, a substituted or unsubstituted C2-6 alkynyl group, a substituted or unsubstituted C3-6 cycloalkyl group, a substituted or unsubstituted C6-10 aryl group, or a substituted or unsubstituted 5 to 6-membered ring heterocyclyl group,
each R^{c} independently represents a hydrogen atom, a substituted or unsubstituted C1-6 alkyl group, a substituted or unsubstituted C2-6 alkenyl group, a substituted or unsubstituted C2-6 alkynyl group, a substituted or unsubstituted C3-6 cycloalkyl group, a substituted or unsubstituted C6-10 aryl group, or a substituted or unsubstituted 5 to 6-membered ring heterocyclyl group,
each R^{d} independently represents a hydrogen atom, a substituted or unsubstituted C1-6 alkyl group, a substituted or unsubstituted C1-6 alkoxy group, or a substituted or unsubstituted C6-10 aryl group, where R^{c} and R^{d} optionally form together a divalent organic group,
each R^{e} independently represents a hydrogen atom, a substituted or unsubstituted C1-6 alkyl group, a substituted or unsubstituted C1-6 alkoxy group, or a substituted or unsubstituted C6-10 aryl group,
R^{f} represents a hydrogen atom, an amino group, or a substituted or unsubstituted C1-6 alkyl group,
each R^{g} independently represents a hydrogen atom, a substituted or unsubstituted C1-6 alkyl group, or a substituted or unsubstituted C6-10 aryl group,
each R^{h} independently represents a substituted or unsubstituted C1-6 alkyl group or a substituted or unsubstituted C6-10 aryl group,
each Rⁱ independently represents a substituted or unsubstituted C1-6 alkyl group or a substituted or unsubstituted C6-10 aryl group, where R^{h} and Rⁱ optionally form together a divalent organic group;
when two or more substituents are present on the linear C1-6 alkyl group, two of the substituents optionally form together a divalent organic group;
A represents a substituted or unsubstituted C1-6 alkylene group;
a substituent on the C1-6 alkylene group in A is one or more substituents selected from the group consisting of a halogeno group, a substituted or unsubstituted C1-6 alkyl group, a substituted or unsubstituted C2-6 alkenyl group, a substituted or unsubstituted C2-6 alkynyl group, a hydroxy group, a substituted or unsubstituted C1-6 alkoxy group, a substituted or unsubstituted C2-6 alkenyloxy group, a substituted or unsubstituted C2-6 alkynyloxy group, a substituted or unsubstituted C3-6 cycloalkyloxy group, a nitro group, a cyano group, a group represented by R^{a1}-COO-, a group represented by R^{b1}-O-CO-, a group represented by R^{b1}-O-CO-O-, a group represented by R^{c1}R^{d1}N-CO-O-, a group represented by R^{g1}R^{h1}C=N-O-, an oxo group (O=), a divalent group represented by R^{a1}O-N=;
each R^{a1} independently represents a hydrogen atom, a substituted or unsubstituted C1-6 alkyl group, a substituted or unsubstituted C2-6 alkenyl group, a substituted or unsubstituted C2-6 alkynyl group, a substituted or unsubstituted C3-6 cycloalkyl group, a substituted or unsubstituted C6-10 aryl group, or a substituted or unsubstituted 5 to 6-membered ring heterocyclyl group,
each R^{b1} independently represents a substituted or unsubstituted C1-6 alkyl group, a substituted or unsubstituted C2-6 alkenyl group, a substituted or unsubstituted C2-6 alkynyl group, a substituted or unsubstituted C3-6 cycloalkyl group, a substituted or unsubstituted C6-10 aryl group, or a substituted or unsubstituted 5 to 6-membered ring heterocyclyl group,
each R^{c1} independently represents a hydrogen atom, a substituted or unsubstituted C1-6 alkyl group, a substituted or unsubstituted C2-6 alkenyl group, a substituted or unsubstituted C2-6 alkynyl group, a substituted or unsubstituted C3-6 cycloalkyl group, a substituted or unsubstituted C6-10 aryl group, or a substituted or unsubstituted 5 to 6-membered ring heterocyclyl group,
each R^{d1} independently represents a hydrogen atom, a substituted or unsubstituted C1-6 alkyl group, or a substituted or unsubstituted C6-10 aryl group, where R^{c1} and R^{d1} optionally form together a divalent organic group,
R^{g1} represents a substituted or unsubstituted C1-6 alkyl group, a substituted or unsubstituted C2-6 alkenyl group, a substituted or unsubstituted C2-6 alkynyl group, a substituted or unsubstituted C3-6 cycloalkyl group, a substituted or unsubstituted C6-10 aryl group, or a substituted or unsubstituted 5 to 6-membered ring heterocyclyl group,
R^{h1} represents a hydrogen atom or a substituted or unsubstituted C1-6 alkyl group, where R^{g1} and R^{h1} optionally form together a divalent organic group;
when two or more substituents are present on the C1-6 alkylene group, two of the substituents optionally form together a divalent organic group; and
Q represents a substituted or unsubstituted C6-10 aryl group or a substituted or unsubstituted 5 to 10-membered ring heterocyclyl group.], and the component (II) is at least one component selected from the group consisting of a fungicide, an insecticide/acaricide, and a plant growth regulator other than the component (I).

2. The agricultural and horticultural fungicidal composition according to claim 1, wherein the component (II) is at least one component selected from the group consisting of the following fungicides, insecticides/acaricides, and plant growth regulators:
fungicides:
(A) agents acting on synthesis or metabolism of nucleic acid:
A1) RNA polymerase I inhibitors
benalaxyl, benalaxyl-M, furalaxyl, metalaxyl, metalaxyl-M, oxadixyl, ofurace
A2) adenosine deaminase inhibitors
bupirimate, dimethirimol, ethirimol
A3) DNA/RNA biosynthesis inhibitors
hymexazol, octhilinone
A4) DNA topoisomerase type II inhibitors
oxolinic acid
(B) agents acting on cytoskeletons and motor proteins:
B1) to B3) β-tubulin polymerization inhibitors benomyl, carbendazim, fuberidazole, thiabendazole, thiophanate, thiophanate-methyl, diethofencarb, zoxamide, ethaboxam, chlorfenazole, debacarb, trichlamide, zarilamid B4) cell division (unknown points of action) inhibitors pencycuron
B5) delocalization inhibitors of spectrin-like protein fluopicolide, fluopimomide
B6) actin/myosin/fimbrin function inhibitors phenamacril, metrafenone, pyriofenone
(C) agents acting on respiration:
C1) complex I: NADH oxidoreductase inhibitors diflumetorim, tolfenpyrad, fenazaquin
C2) complex II: succinate dehydrogenase inhibitors benodanil, flutolanil, mepronil, isofetamid, fluopyram, cyclobutrifluram, fenfuram, carboxin, oxycarboxin, thifluzamide, benzovindiflupyr, bixafen, fluindapyr, fluxapyroxad, furametpyr, inpyrfluxam, isopyrazam, penflufen, penthiopyrad, sedaxane, isoflucypram, pydiflumetofen, boscalid, pyraziflumid, flubeneteram, furmecyclox
C3) complex III: cytochrome bc1 (ubiquinol oxidase) Qo site (cyt b gene) inhibitors
azoxystrobin, coumoxystrobin, enoxastrobin, flufenoxystrobin, picoxystrobin, pyraoxystrobin, mandestrobin, pyraclostrobin, pyrametostrobin, triclopyricarb, kresoxim-methyl, trifloxystrobin, dimoxystrobin, fenaminstrobin, metominostrobin, orysastrobin, famoxadone, fluoxastrobin, fenamidone, pyribencarb, metyltetraprole
C4) complex III: cytochrome bc1 (ubiquinone reductase) Qi site inhibitors
cyazofamid, amisulbrom, fenpicoxamid, florylpicoxamid, metarylpicoxamid
C5) oxidative phosphorylation-uncoupling inhibitors binapacryl, dinocap, meptyldinocap; fluazinam C6) oxidative phosphorylation and ATP synthase inhibitors triphenyltin acetate, triphenyltin chloride, triphenyltin hydroxide
C7) ATP transport inhibitors
silthiofam
C8) complex III: cytochrome bc1 (ubiquinone reductase) Qi site/stigmatellin-bonding subsite inhibitors ametoctradin
(D) agents acting on amino acid and protein synthesis:
D1) methionine biosynthesis (cgs gene)
cyprodinil, mepanipyrim, pyrimethanil
D2) protein synthesis (at the completion of ribosomal translation) inhibitors
blasticidin-S
D3), D4) protein synthesis (at the beginning of ribosomal translation) inhibitors
kasugamycin, kasugamycin hydrochloride, streptomycin
D5) protein synthesis (at ribosomal polypeptide elongation) inhibitors
oxytetracycline
(E) agents acting on signal transduction:
E1) signal transduction (unknown mechanism of action) inhibitors
quinoxyfen, proquinazid
E2) MAP/histidine kinase (os-2, HOG1) inhibitors in osmotic signal transduction
fenpiclonil, fludioxonil
E3) MAP/histidine kinase (os-1, Daf1) inhibitors in osmotic signal transduction
chlozolinate, dimethachlon, iprodione, procymidone, vinclozolin
(F) agents acting on lipid biosynthesis or transport/cell membrane structure or function:
F1) dicarboximide-based fungicides
F2) phospholipid biosynthesis and methyltransferase inhibitors
edifenphos, iprobenfos, pyrazophos, isoprothiolane
F3) cell-peroxidizing inhibitors
biphenyl, chloroneb, dicloran, quintozene, tecnazene, tolclofos-methyl, etridiazole
F4) cell membrane permeability and fatty acid inhibitors iodocarb, propamocarb, propamocarb hydrochloride,
prothiocarb
F5) carboxylic acid amide (CAA)-based fungicides
F8) ergosterol bond inhibitors
natamycin
F9) lipid homeostasis and transport/storage inhibitors oxathiapiprolin, fluoxapiprolin
(G) sterol biosynthesis inhibitors of cell membranes:
G1) C14 position demethylaze (erg11/cyp51) inhibitors in sterol biosynthesis
triforine, pyrifenox, pyrisoxazole, fenarimol, nuarimol, imazalil, oxpoconazole, pefurazoate, prochloraz, triflumizole, azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, mefentrifluconazole, metconazole, myclobutanil, penconazole, propiconazole, simeconazole, tebuconazole, tetraconazole, triadimefon, triadimenol, triticonazole, prothioconazole, fluoxytioconazole, fluconazole, fluconazole-cis, diniconazole-M
G2) inhibitors of Δ14 reductase and Δ8 → Δ7-isomerase (erg24, erg2) in sterol biosynthesis
aldimorph, dodemorph, dodemorph acetate, fenpropimorph, tridemorph, fenpropidin, piperalin, spiroxamine, buthiobate
G3) 3-keto reductase (erg27) inhibitors in C4 position demethylation in sterol biosynthesis system
fenhexamid, fenpyrazamine
G4) squalene epoxidase (erg1) inhibitors in sterol biosynthesis system
pyributicarb, naftifine, terbinafine
(H) cell wall biosynthesis inhibitors:
H4) chitin synthetase inhibitors
polyoxin, polyoxorim
H5) cellulose synthetase inhibitors
dimethomorph, flumorph, pyrimorph, benthiavalicarb, iprovalicarb, valifenalate, mandipropamid
(I) cell wall melanin biosynthesis inhibitors:
I1) reductase inhibitors in melanin biosynthesis fthalide, pyroquilon, tricyclazole
I2) anhydrase inhibitors in melanin biosynthesis carpropamid, diclocymet, fenoxanil
I3) polyketide synthetase inhibitors in melanin biosynthesis
tolprocarb
(P) agents acting on resistance induction of host plants:
P01 to P03) agents relating to salicylic acid signal transduction
acibenzolar-S-methyl, probenazole, tiadinil, isotianil
P04) polysaccharide elicitors
laminarin
P05) anthraquinone elicitors
Extraction liquid from *Reynoutria sachalinensis*
P06) microbial elicitors
*Bacillus mycoides* isolate J, cell walls of *Saccharomyces cerevisiae* strain LAS117
P07) phosphonates
fosetyl, phosphorous acid and salts thereof (including potassium phosphite, calcium phosphite, aluminum phosphite,
and sodium phosphite)
P08) agents relating to salicylic acid signal transduction dichlobentiazox
(U) agents with unknown mechanism of action:
cymoxanil, tecloftalam, triazoxide, flusulfamide, diclomezine, cyflufenamid, dodine, dodine free base, flutianil, ferimzone, tebufloquin, picarbutrazox, validamycin, bethoxazin, cyprofuram, flumetover, nitrothal-isopropyl, propamidine, ipflufenoquin, pyridachlometyl, pyrapropoyne, aminopyrifen, ipfentrifluconazole, quinofumelin, dipymetitrone, chloinconazide, seboctylamine, flumetylsulforim, flufenoxadiazam
(M) agents having multiple points of contact activity: copper (various salts), basic copper sulfate, Bordeaux mixture, copper hydroxide, copper naphthalate, copper oxychloride, copper sulfate, copper oxide, oxine-copper, sulfur, lime sulfur, amobam, ferbam, mancozeb, maneb, metiram, propineb, thiram, zinc thiazole, zineb, ziram, captan, captafol, folpet, chlorothalonil, dichlofluanid, tolylfluanid, guazatine, guazatine acetate, iminoctadine, iminoctadine acetate, iminoctadine albesilate, anilazine, dithianon, chinomethionate, fluoroimide, methasulfocarb, dazomet, cufraneb, mancopper, polycarbamate
(BM) biological control agents/organism-derived pesticides having multiple mechanisms of action
a) plant extracts:
polypeptide (lectin), phenol compounds, sesquiterpene compounds, triterpenoid compounds, coumarin compounds, terpene hydrocarbon compounds, terpene alcohol compounds, terpene phenol compounds, extract from the cotyledons of lupine plantlets, extract from *Swinglea glutinosa,* extract from *Melaleuca alternifolia* (tea tree), plant oils (mixtures), eugenol, geraniol, thymol, α-pinene, α-terpinene, α-terpinol, α-terpinolene, γ-terpinene, d-limonene, orange oil, linalool, menthol, ursolic acid, oleanolic acid, neem oil
b) microorganisms (microbial strains or extracts or metabolites therefrom):
fungi of the genus *Trichoderma* including *Trichoderma atroviride, Trichoderma asperellum, Trichoderma harzianum,* and *Trichoderma virens;*
fungi of the genus *Gliocladium* including *Gliocladium catenulatum;*
fungi of the genus *Clonostachys* including *Clonostachys rosea;*
fungi of the genus *Coniothyrium* including *Coniothyrium minitans;*
fungi of the genus *Talaromyces* including *Talaromyces flavus;*
fungi of the genus *Saccharomyces* including *Saccharomyces cerevisae;*
bacteria of the genus *Bacillus* including *Bacillus amyloliquefaciens, Bacillus subtilis,* and *Bacillus simplex;*
bacteria of the genus *Paenibacillus;*
bacteria of the genus *Burkholderia;*
fungi of the genus *Fusarium;*
bacteria of the genus *Pseudomonas* including *Pseudomonas chlororaphis, Pseudomonas fluorescens,* and *Pseudomonas rhodesiae;*
bacteria of the genus *Streptomyces* including *Streptomyces griseovirides* and *Streptomyces lydicus;*
bacteria of the genus *Agrobacterium* including *Agrobacterium radiobacter;*
bacteria of the genus *Erwinia* including nonpathogenic *Erwinia carotovora* subsp. *carotovora;*
bacteria of the genus *Variovorax* including *Variovorax paradoxus;*
bacteria of the genus *Lactobacillus* including *Lactobacillus plantarum*
c) other agents
substances that can serve as an elicitor including enzymes or extracts thereof, β-glucan, chitin or chitosan or fragments thereof, β-aminobutyric acid, 2,6-dichloroisonicotinic acid, salicylic acid or derivatives thereof, algal extracts, extracts of algae (hydrolysates), jasmine flower extracts, sodium alginate, oligosaccharides, trehalose, polysaccharides, lipids, lipopolysaccharides, fatty acids, glycolipids, glycoproteins, glycopeptides, proteins or peptides derived from a plant and/or a pathogenic microorganism, and ergosterol
(N) unclassified agents
mineral oils, organic oils, inorganic salts, materials of biological origin, potassium bicarbonate, sodium hydrogen carbonate, calcium carbonate, calcium hydroxide, potassium iodide, potassium phosphonate, chitosan hydrochloride, urea insecticides/acaricides:
(1A) acetylcholinesterase (AChE) inhibitors (carbamate-based) :
alanycarb, aldicarb, bendiocarb, benfuracarb, butocarboxim, butoxycarboxim, carbaryl, carbofuran, carbosulfan, ethiofencarb, fenobucarb, formetanate, furathiocarb, isoprocarb, methiocarb, methomyl, metolcarb, oxamyl, pirimicarb, propoxur, thiodicarb, thiofanox, triazamate, trimethacarb, XMC, xylylcarb, aldoxycarb, allyxycarb, aminocarb, bufencarb, cloethocarb, fenothiocarb, promecarb (1B) acetylcholinesterase (AChE) inhibitors (organophosphorus-based):
acephate, azamethiphos, azinphos-ethyl, azinphosmethyl, cadusafos, chlorethoxyfos, chlorfenvinphos, chlormephos, chlorpyrifos, chlorpyrifos-methyl, coumaphos, cyanophos, demeton-S-methyl, diazinon, dichlorvos, dicrotophos, dimethoate, dimethylvinphos, disulfoton, EPN, ethion, ethoprophos, famphur, fenamiphos, fenitrothion, fenthion, fosthiazate, heptenophos, imicyafos, isofenphos, isopropyl=O-(methoxyaminothiophosphoryl) salicylate, isoxathion, malathion, mecarbam, methamidophos, methidathion, mevinphos, monocrotophos, naled, omethoate, oxydemeton-methyl, parathion, parathion-methyl, phenthoate, phorate, phosalone, phosmet, phosphamidon, phoxim, pirimiphos-methyl, profenofos, propetamphos, prothiofos, pyraclofos, pyridaphenthion, quinalphos, sulfotep, tebupirimfos, temephos, terbufos, tetrachlorvinphos, thiometon, triazophos, trichlorfon, vamidothion, bromophos-ethyl, cyanofenphos, demeton-S-methylsulfone, dialifos, dichlofenthion, dioxabenzofos, etrimfos, fensulfothion, fonofos, formothion, iodofenphos, isazofos, isocarbofos, methacrifos, phosphocarb, pirimiphos-ethyl, propaphos, prothoate, sulprofos
(2) GABA-gated chloride ion (chlorine ion) channel blockers:
chlordane, endosulfan; ethiprole, fipronil, acetoprole, camphechlor, dienochlor, heptachlor, pyrafluprole, pyriprole; flufiprole
(3A) sodium channel modulators (pyrethroid-based):
acrinathrin, allethrin, d-cis/trans allethrin, d-trans allethrin, bifenthrin, bioallethrin, bioallethrin-S-cyclopentenyl isomers, bioresmethrin, cycloprothrin, cyfluthrin, β-cyfluthrin, cyhalothrin, λ-cyhalothrin, γ-cyhalothrin, cypermethrin, α-cypermethrin, β-cypermethrin, θ-cypermethrin, ζ-cypermethrin, cyphenothrin [(1R)-trans-isomers], deltamethrin, empenthrin [(EZ)-(1R)-isomers], esfenvalerate, etofenprox, fenpropathrin, fenvalerate, flucythrinate, flumethrin, τ-fluvalinate, halfenprox, imiprothrin, kadethrin, permethrin, phenothrin [(1R)-trans-isomers], prallethrin, pyrethrins, resmethrin, silafluofen, tefluthrin, tetramethrin, tetramethrin [(1R)-isomers], tralomethrin, transfluthrin, κ-bifenthrin, biopermethrin, chloroprallethrin, dimefluthrin, fenfluthrin, fenpirithrin, flufenprox, heptafluthrin, meperfluthrin, ε-metofluthrin, momfluorothrin, ε-momfluorothrin, trans-permethrin, profluthrin, protrifenbute, κ-tefluthrin, terallethrin, tetramethylfluthrin; bioethanomethrin
(3B) sodium channel modulators (DDT's):
DDT, methoxychlor
(4) nicotinic acetylcholine receptor (nAChR) competitive modulators:
acetamiprid, clothianidin, dinotefuran, imidacloprid, nitenpyram, thiacloprid, thiamethoxam, nicotine, sulfoxaflor, flupyradifurone, triflumezopyrim, nithiazine, dicloromezotiaz, flupyrimin
(5) nicotinic acetylcholine receptor (nAChR) allosteric modulators:
spinetoram, spinosad
(6) glutamatergic chloride ion channel (GluCl) allosteric modulators:
abamectin, emamectin, emamectin benzoate, lepimectin, milbemectin, doramectin, eprinomectin, ivermectin, moxidectin, selamectin
(7) juvenile hormone analogous agents:
hydroprene, kinoprene, methoprene, fenoxycarb; pyriproxifen, diofenolan, epofenonane, triprene
(8) other nonspecific (multi-site) inhibitors:
halogenated alkyls including methyl bromide, chloropicrin, aluminum sodium fluoride, sulfuryl fluoride, borax, boric acid, disodium octaborate, sodium borate, sodium metaborate, tartar emetic, dazomet, metam, metam potassium, metam sodium
(9) chordotonal organ TRPV channel modulators:
pymetrozine, pyrifluquinazon, afidopyropen
(10) mites growth inhibitors:
clofentezine, diflovidazin, hexythiazox; etoxazole
(11) insect midgut inner membrane disrupting agents derived from microorganisms:
B. t. subsp. *israelensis,* B. t. subsp. *aizawai,* B. t. subsp. *kurstaki,* B. t. subsp. *tenebrionis;* proteins contained in B. t. crops: Cry1Ab, Cry1Ac, Cry1Fa, Cry1A.105, Cry2Ab, Vip3A, mCry3A, Cry3Ab, Cry3Bb, Cry34Ab1/Cry35Ab1; *Bacillus sphaericus*
(12) mitochondrial ATP biosynthetic enzyme inhibitors: diafenthiuron, azocyclotin, cyhexatin, fenbutatin oxide, propargite, tetradifon
(13) oxidative phosphorylation uncoupling agents that disrupt proton gradient:
chlorfenapyr, DNOC (4,6-dinitro-o-cresol), sulfluramid, binapacryl, dinobuton, dinocap
(14) nicotinic acetylcholine receptor (nAChR) channel blockers:
bensultap, cartap hydrochloride, thiocyclam, thiosultap monosodium salt
(15) chitin biosynthesis inhibitors, type 0:
bistrifluron, chlorfluazuron, diflubenzuron, flucycloxuron, flufenoxuron, hexaflumuron, lufenuron, novaluron, noviflumuron, teflubenzuron, triflumuro, fluazuron
(16) chitin biosynthesis inhibitors, type 1:
buprofezin
(17) molting inhibitors:
cyromazine
(18) molting hormone (ecdysone) receptor agonists:
chromafenozide, halofenozid, methoxyfenozide, tebufenozide
(19) octopamine receptor agonists:
amitraz, chlordimeform
(20) mitochondrial electron transport system complex III inhibitors:
hydramethylnon, acequinocyl, fluacrypyrim, bifenazate
(21) mitochondrial electron transport system complex I inhibitors:
fenazaquin, fenpyroximate, pyridaben, pyrimidifen, tebufenpyrad, tolfenpyrad, rotenone
(22) voltage-dependent sodium channel blockers:
indoxacarb, metaflumizone
(23) acetyl CoA carboxylase inhibitors:
spirodiclofen, spiromesifen, spirotetramat, spiropidion
(24) mitochondrial electron transport system complex IV inhibitors:
aluminum phosphide, calcium phosphide, zinc phosphide, phosphine, calcium cyanide, sodium cyanide, potassium cyanide
(25) mitochondrial electron transport system complex II inhibitors:
cyenopyrafen, cyflumetofen, pyflubumide
(26) ryanodine receptor modulators:
chlorantraniliprole, cyantraniliprole, cyclaniliprole, flubendiamidecyhalodiamide, tetrachlorantraniliprole, tetraniliprole
(27) chordotonal organ modulator, target site unidentified: flonicamid
(28) GABA-gated chloride ion (chlorine ion) channel allosteric modulators:
broflanilide, fluxametamide, isocycloseram, afoxolaner, fluralaner, lotilaner, sarolaner
(29) agents having unknown mechanism of action (UN):
azadirachtin, benzoximate, bromopropylate, chinomethionate, dicofol, lime sulfur, mancozeb, pyridalyl, sulfur
(30) other insecticides/acaricides:
acynonapyr, amidoflumet, benzomate, benzpyrimoxan, chlorobenzilate, dicyclanil, fenoxacrim, fentrifanil, flometoquin, flubenzimine, flufenzine, fluhexafon, fluopyram, metaflumizone, metoxadiazone, oxazosulfyl, tetrasul, triarathene, tyclopyrazoflor plant growth regulators:
abscisic acid, kinetin, benzylaminopurine, 1,3-diphenylurea, forchlorfenuron, thidiazuron, chlorfenuron, dihydrozeatin, gibberellin A, gibberellin A4, gibberellin A7, gibberellin A3, 1-methylcyclopropane, N-acetyl aminoethoxyvinyl glycine (aka: aviglycine), aminooxyacetate, silver nitrate, cobalt chloride, IAA, 4-CPA, cloprop, 2,4-D, MCPB, indole-3-butyric acid, dichlorprop, phenothiol, 1-naphthylacetoamide, ethychlozate, cloxyfonac, maleic hydrazide, 2,3,5-triiodobenzoic acid, salicylic acid, methyl salicylate, (-)-jasmonic acid, methyl jasmonate, (+)-strigol, (+)-deoxystrigol, (+)-orobanchol, (+)-sorgolactone, 4-oxo-4-(2-phenylethyl)aminobutyric acid, ethephon, chlormequat, mepiquat chloride, benzyladenine, 5-amino levulinic acid, daminozide.

3. The agricultural and horticultural fungicidal composition according to claim 1 or 2, wherein the component (II) is at least one component selected from the group consisting of thiophanate-methyl, triflumizole, cyflufenamid, iminoctadine acetate, iminoctadine albesilate, picarbutrazox, ipflufenoquin, fluxapyroxad, cymoxanil, tebufenozide, prothioconazole, mefentrifluconazole, potassium phosphite, florylpicoxamid, metyltetraprole, captan, fipronil, fludioxonil, chlorantraniliprole, fluopyram, abamectin, sulfoxaflor, *Bacillus subtilis, Pseudomonas rhodesiae,* sodium hydrogen carbonate, potassium bicarbonate, orange oil, linalool, thymol, neem oil, mancozeb, and mineral oils.

4. The agricultural and horticultural fungicidal composition according to any one of claims 1 to 3, wherein a weight ratio between a compound (I) and a compound (II) is 1:1000 to 1000:1.

5. A seed coated with a layer comprising the agricultural and horticultural fungicidal composition according to any one of claims 1 to 4.
